(19) Europäisches Patentamt
European Patent Office
Office européen des brevets

(11) EP 4 266 729 A1

(12) **EUROPEAN PATENT APPLICATION**
published in accordance with Art. 153(4) EPC

(43) Date of publication:
**25.10.2023 Bulletin 2023/43**

(21) Application number: **22736622.6**

(22) Date of filing: **10.01.2022**

(51) International Patent Classification (IPC):
***H04W 16/28*** *(2009.01)*

(52) Cooperative Patent Classification (CPC):
**H04W 16/28; H04W 24/02**

(86) International application number:
**PCT/CN2022/071029**

(87) International publication number:
**WO 2022/148461 (14.07.2022 Gazette 2022/28)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.01.2021 CN 202110024615**

(71) Applicant: **Huawei Technologies Co., Ltd.
Shenzhen, Guangdong 518129 (CN)**

(72) Inventors:
- **DU, Rui**
  **Shenzhen, Guangdong 518129 (CN)**
- **DING, Wenbo**
  **Harbin, Heilongjiang 150001 (CN)**
- **HAN, Xiao**
  **Shenzhen, Guangdong 518129 (CN)**
- **LIU, Chenchen**
  **Shenzhen, Guangdong 518129 (CN)**
- **ZHANG, Meihong**
  **Shenzhen, Guangdong 518129 (CN)**
- **SUN, Yingxiang**
  **Shenzhen, Guangdong 518129 (CN)**
- **TAN, Kai Pin**
  **Shenzhen, Guangdong 518129 (CN)**
- **YANG, Xun**
  **Shenzhen, Guangdong 518129 (CN)**
- **LI, Yang**
  **Harbin, Heilongjiang 150001 (CN)**
- **ZHANG, Yun**
  **Harbin, Heilongjiang 150001 (CN)**

(74) Representative: **Huawei European IPR
Huawei Technologies Duesseldorf GmbH
Riesstraße 25
80992 München (DE)**

(54) **WIRELESS LOCAL AREA NETWORK SENSING METHOD AND APPARATUS**

(57) This application provides a wireless local area network sensing method and an apparatus, to implement focusing on a specific spatial location, and improve a sensing capability, and may be applied to 802.11ax, 802.11be, and a future WLAN communications system. The method includes: A first device sends a first message to a second device, and sends a first sensing waveform to the second device. The second device receives the first message from the first device, receives the first sensing waveform from the first device, and senses a target object based on the first message and the first sensing waveform to obtain sensing feedback information. The first message indicates at least one parameter included in the first sensing waveform, the first sensing waveform is used to sense the target object in an environment, and the first message carries a difference between frequencies of carriers corresponding to two adjacent antennas of a plurality of antennas of the first device.

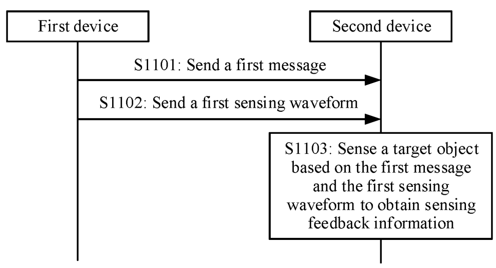


FIG. 11

EP 4 266 729 A1

## Description

This application claims priority to Chinese Patent Application No. 202110024615.8, filed with the China National Intellectual Property Administration on January 8, 2021 and entitled "WIRELESS LOCAL AREA NETWORK SENSING METHOD AND APPARATUS", which is incorporated herein by reference in its entirety.

## TECHNICAL FIELD

This application relates to the communications field, and in particular, to a wireless local area network sensing method and an apparatus.

## BACKGROUND

Wireless local area network (wireless local area network, WLAN) sensing (sensing) is a technology that detects motion of a target object by using an existing WLAN signal. Each communications path between two physical devices provides, based on a capability of measuring or sampling an environment through radio, an opportunity to extract information about surroundings of the two physical devices. A WLAN includes a plurality of devices within a given communications range.

The 802.11ac protocol defines a beamforming technology and a multi-user multiple-input multiple-output (multi-user multiple-input multiple-output, MU-MIMO) technology. As shown in FIG. 1, in the 802.11ac standard, a channel sounding frame is used to measure a channel. A device that performs beamforming on the channel sounding frame and sends a beamformed frame is referred to as a party (beamformer) that performs beamforming adjustment; and a device that receives the beamformed frame is referred to as a party (beamformee) that assists in beamforming adjustment. Because a single exchange can have only one initiator and one responder, 802.11ac provides a new definition of transmission of a beamformed frame for both a transmitter and a receiver. As shown in FIG. 1, the beamformer sends a null data packet announcement (null data packet announcement, NDPA) frame to notify a to-be-sent null data packet (sensing null data packet, sensing NDP) frame, and exchanges channel information with the beamformee. The beamformee obtains channel state information through channel sounding, and sends a feedback matrix by using the channel state information. After receiving the feedback matrix, the beamformer may obtain an antenna control matrix, where the control matrix includes how to set an amplitude and a phase of each antenna unit in a transmitting end antenna, so that an antenna radiation pattern points to a receiver after far-field superimposition.

FIG. 2 is a frame format of a feedback matrix. With reference to FIG. 2, a category indicates a type of an action frame (action frame), and for a very high throughput (very high throughput, VHT), the value is 21. VHT action indicates a type of a VHT action frame (VHT action frame), and the value is 0 for compressed beamforming (compressed beamforming). VHT MIMO control indicates a parameter of a compressed beamforming report (compressed beamforming report). The compressed beamforming report and an MU exclusive beamforming report field part include signal-to-noise ratio information of the feedback matrix and a subcarrier subset.

In an existing WLAN sensing technology, the foregoing existing solution is used to perform a sensing process. In this method, a spatial direction capability is not strong, and it is difficult to distinguish between interference in different distance units and a target.

## SUMMARY

Embodiments of this application provide a wireless local area network sensing method and an apparatus, to implement focusing on a specific spatial location, and improve a sensing capability.

To achieve the foregoing objective, this application uses the following technical solutions.

According to a first aspect, a wireless local area network sensing method is provided. The wireless local area network sensing method includes: sending a first message to a second device, and sending a first sensing waveform to the second device. The first message indicates at least one parameter corresponding to the first sensing waveform, the first sensing waveform is used to sense a target object in an environment, and the first message carries a difference between frequencies of carriers corresponding to two adjacent antennas of a plurality of antennas of a first device.

Based on the wireless local area network sensing method according to the first aspect, the first device sends, to the second device, the first message indicating at least one parameter corresponding to the first sensing waveform, where the first sensing waveform is used to sense the target object in the environment. The first message carries the difference between the frequencies of the carriers corresponding to the two adjacent antennas of the plurality of antennas of the first device, and the first sensing waveform is sent to the second device. In this way, the second device receives the first sensing waveform from the first device, and senses the target object based on the first message and the first sensing waveform to obtain sensing feedback information. In this way, frequencies of carriers corresponding to the antennas are different, so that a specific spatial location can be focused on, which is not limited to a given angle unit, and a sensing capability can be improved.

In a possible implementation, the first message may include one or more of the following: first indication information, second indication information, third indication information, and fourth indication information. The first indication information may indicate quantity information of beams corresponding to the plurality of antennas of the first device; the second indication information may indicate whether all differences between frequencies of carriers corresponding to the two adjacent antennas corresponding to a current beam are equal; the third indication information may indicate the difference between the frequencies of the carriers corresponding to the two adj acent antennas; and the fourth indication information may indicate quantity information of the third indication information corresponding to the current beam.

In a possible implementation, the first indication information may indicate whether the current beam is a last beam corresponding to the plurality of antennas of the first device.

In a possible implementation, the first indication information may indicate a quantity of beams corresponding to the plurality of antennas of the first device.

In a possible implementation, the third indication information and the fourth indication information may belong to a first field of the first message, and the fourth indication information may indicate whether a next first field of the current first field includes the third indication information corresponding to the current beam.

In a possible implementation, the fourth indication information may indicate a quantity of pieces of the third indication information corresponding to the current beam.

In a possible implementation, the fourth indication information may further indicate whether all the differences between the frequencies of the carriers corresponding to the two adjacent antennas corresponding to the current beam are equal.

In a possible implementation, the first message may further include fifth indication information, and the fifth indication information may indicate that the parameter included in the first message is a frequency diverse array FDA parameter.

In a possible implementation, the wireless local area network sensing method according to the first aspect may further include: receiving a first request message from the second device, and sending a first acknowledgement message to the second device. The first request message may be used to request to sense the target object, and the first acknowledgement message may be used to confirm that the target object is sensed.

In a possible implementation, the wireless local area network sensing method according to the first aspect may further include: receiving the sensing feedback information from the second device.

According to a second aspect, a wireless local area network sensing method is provided. The wireless local area network sensing method includes: receiving a first message from a first device, receiving a first sensing waveform from the first device, and sensing a target object based on the first message and the first sensing waveform to obtain sensing feedback information. The first message indicates at least one parameter corresponding to the first sensing waveform, the first sensing waveform is used to sense the target object in an environment, and the first message carries a difference between frequencies of carriers corresponding to two adjacent antennas of a plurality of antennas of the first device.

In a possible implementation, the first message may include one or more of the following: first indication information, second indication information, third indication information, and fourth indication information. The first indication information may indicate quantity information of beams corresponding to the plurality of antennas of the first device; the second indication information may indicate whether all differences between frequencies of carriers corresponding to the two adjacent antennas corresponding to a current beam are equal; the third indication information may indicate the difference between the frequencies of the carriers corresponding to the two adj acent antennas; and the fourth indication information may indicate quantity information of the third indication information corresponding to the current beam.

In a possible implementation, the first indication information may indicate whether the current beam is a last beam corresponding to the plurality of antennas of the first device.

In a possible implementation, the first indication information may indicate a quantity of beams corresponding to the plurality of antennas of the first device.

In a possible implementation, the fourth indication information may indicate a quantity of pieces of the third indication information corresponding to the current beam.

In a possible implementation, the third indication information and the fourth indication information may belong to a first field of the first message, and the fourth indication information may indicate whether a next first field of the current first field includes the third indication information corresponding to the current beam.

In a possible implementation, the fourth indication information may further indicate whether all the differences between the frequencies of the carriers corresponding to the two adjacent antennas corresponding to the current beam are equal.

In a possible implementation, the first message may further include fifth indication information, and the fifth indication information may indicate that the parameter included in the first message is a frequency diverse array FDA parameter.

In a possible implementation, the wireless local area network sensing method according to the second aspect may further include: sending the sensing feedback information to the first device.

In addition, for technical effect of the wireless local area network sensing method according to the second aspect, refer to technical effect of the wireless local area network sensing method according to any possible implementation of the first aspect. Details are not described herein again.

According to a third aspect, a wireless local area network sensing method is provided. The wireless local area network sensing method includes: sending a second message to a second device, receiving a second sensing waveform from the second device, and sensing a target object based on the second sensing waveform to obtain sensing feedback information. The second message indicates at least one parameter corresponding to the second sensing waveform, the second sensing waveform is used to sense the target object in an environment, and the second message carries a difference between frequencies of carriers corresponding to two adjacent antennas of a plurality of antennas of the second device.

Based on the wireless local area network sensing method according to the third aspect, the second device receives the second message that is from a first device and that indicates the at least one parameter corresponding to the second sensing waveform, where the second sensing waveform is used to sense the target object in the environment. The second message carries the difference between the frequencies of the carriers corresponding to the two adjacent antennas of the plurality of antennas of the second device. The second device determines the second sensing waveform based on the second message, and sends the second sensing waveform to the first device. The first device senses the target object based on the second sensing waveform to obtain the sensing feedback information. In this way, frequencies of carriers corresponding to the antennas are different, so that a specific spatial location can be focused on, which is not limited to a given angle unit, and a sensing capability can be improved.

In a possible implementation, the second message may include one or more of the following: sixth indication information, seventh indication information, eighth indication information, and ninth indication information. The sixth indication information may indicate quantity information of beams corresponding to the plurality of antennas of the second device; the seventh indication information may indicate whether all differences between frequencies of carriers corresponding to the two adjacent antennas corresponding to a current beam are equal; the eighth indication information may indicate the difference between the frequencies of the carriers corresponding to the two adjacent antennas; and the ninth indication information may indicate quantity information of the eighth indication information corresponding to the current beam.

In a possible implementation, the sixth indication information may indicate whether the current beam is a last beam corresponding to the plurality of antennas of the second device.

In a possible implementation, the sixth indication information may indicate a quantity of beams corresponding to the plurality of antennas of the second device.

In a possible implementation, the eighth indication information and the ninth indication information may belong to a second field of the second message, and the ninth indication information may indicate whether a next second field of the current second field includes the eighth indication information corresponding to the current beam.

In a possible implementation, the ninth indication information may indicate a quantity of pieces of the eighth indication information corresponding to the current beam.

In a possible implementation, the ninth indication information may further indicate whether all the differences between the frequencies of the carriers corresponding to the two adjacent antennas corresponding to the current beam are equal.

In a possible implementation, the second message may further include tenth indication information, and the tenth indication information may indicate that the parameter included in the second message is a frequency diverse array FDA parameter.

In a possible implementation, the wireless local area network sensing method according to the third aspect may further include: sending a second request message to the second device, and receiving a second acknowledgement message from the second device. The second request message may be used to request to sense the target object, and the second acknowledgement message may be used to confirm that the target object is sensed.

According to a fourth aspect, a wireless local area network sensing method is provided. The wireless local area network sensing method includes: receiving a second message from a first device, determining a second sensing waveform based on the second message, and sending the second sensing waveform to the first device. The second message indicates at least one corresponding to in the second sensing waveform, the second sensing waveform is used to sense a target object in an environment, and the second message carries a difference between frequencies of carriers corresponding to two adjacent antennas of a plurality of antennas of the second device.

In a possible implementation, the second message may include one or more of the following: sixth indication information, seventh indication information, eighth indication information, and ninth indication information. The sixth indication information may indicate quantity information of beams corresponding to the plurality of antennas of the second device; the seventh indication information may indicate whether all differences between frequencies of carriers corresponding to the two adjacent antennas corresponding to a current beam are equal; the eighth indication information may indicate the difference between the frequencies of the carriers corresponding to the two adjacent antennas; and the ninth indication information may indicate quantity information of the eighth indication information corresponding to the current beam.

In a possible implementation, the sixth indication information may indicate whether the current beam is a last beam corresponding to the plurality of antennas of the second device.

In a possible implementation, the sixth indication information may indicate a quantity of beams corresponding to the plurality of antennas of the second device.

In a possible implementation, the ninth indication information may indicate a quantity of pieces of the eighth indication information corresponding to the current beam.

In a possible implementation, the eighth indication information and the ninth indication information may belong to a second field of the second message, and the ninth indication information may indicate whether a next second field of the current second field includes the eighth indication information corresponding to the current beam.

In a possible implementation, the ninth indication information may further indicate whether all the differences between the frequencies of the carriers corresponding to the two adjacent antennas corresponding to the current beam are equal.

In a possible implementation, the second message may further include tenth indication information, and the tenth indication information may indicate that the parameter included in the second message is a frequency diverse array FDA parameter.

In a possible implementation, the wireless local area network sensing method according to the third aspect may further include: receiving a second request message from the first device, and sending a second acknowledgement message to the first device. The second request message may be used to request to sense the target object, and the second acknowledgement message may be used to confirm that the target object is sensed.

In addition, for technical effect of the wireless local area network sensing method according to the fourth aspect, refer to technical effect of the wireless local area network sensing method according to any possible implementation of the third aspect. Details are not described herein again.

According to a fifth aspect, a communications apparatus is provided. The communications apparatus includes a unit or a module configured to perform any method according to the first aspect.

In this application, the communications apparatus according to the fifth aspect may be a first device, or may be disposed on a chip (system) or another component or component of the first device.

In addition, for technical effect of the communications apparatus according to the fifth aspect, refer to technical effect of the wireless local area network sensing method according to any implementation of the first aspect. Details are not described herein again.

According to a sixth aspect, a communications apparatus is provided. The communications apparatus includes a unit or a module configured to perform any method according to the second aspect.

In this application, the communications apparatus according to the sixth aspect may be a second device, or may be disposed on a chip (system) or another component or component of the second device.

In addition, for technical effect of the communications apparatus according to the sixth aspect, refer to technical effect of the wireless local area network sensing method according to any implementation of the first aspect. Details are not described herein again.

According to a seventh aspect, a communications apparatus is provided. The communications apparatus includes a unit or a module configured to perform any method according to the third aspect.

In this application, the communications apparatus according to the seventh aspect may be a first device, or may be disposed on a chip (system) or another component or component of the first device.

In addition, for technical effect of the communications apparatus according to the seventh aspect, refer to technical effect of the wireless local area network sensing method according to any implementation of the third aspect. Details are not described herein again.

According to an eighth aspect, a communications apparatus is provided. The communications apparatus includes a unit or a module configured to perform any method according to the fourth aspect.

In this application, the communications apparatus according to the eighth aspect may be a second device, or may be disposed on a chip (system) or another component or component of the second device.

In addition, for technical effect of the communications apparatus according to the eighth aspect, refer to technical effect of the wireless local area network sensing method according to any implementation of the third aspect. Details are not described herein again.

According to a ninth aspect, a communications apparatus is provided. The communications apparatus includes a processor, and the processor is coupled to a memory. The memory is configured to store a computer program. The processor is configured to execute the computer program stored in the memory to enable the communications apparatus to perform the wireless local area network sensing method according to any one of the first aspect to the fourth aspect.

In a possible design, the communications apparatus according to the ninth aspect may further include a transceiver. The transceiver may be a transceiver circuit or an input/output port. The transceiver may be used by the communications apparatus to communicate with another communications apparatus.

In this application, the communications apparatus according to the ninth aspect may be a first device, a second device, or a chip or a chip system disposed inside the first device or the second device.

In addition, for technical effect of the communications apparatus according to the ninth aspect, refer to technical effect of the wireless local area network sensing method according to any implementation of the first aspect to the fourth aspect. Details are not described herein again.

According to a tenth aspect, a chip system is provided. The chip system includes a processor and an input/output port. The processor is configured to implement a processing function in any one of the first aspect to the fourth aspect, and the input/output port is configured to implement a transceiver function in any one of the first aspect to the fourth aspect.

In a possible design, the chip system further includes a memory. The memory is configured to store program instructions and data for implementing a function in any one of the first aspect to the fourth aspect.

The chip system may include a chip, or may include a chip and another discrete component.

According to an eleventh aspect, a communications system is provided. The system includes a first device and one or more second devices.

According to a twelfth aspect, a computer-readable storage medium is provided. The computer-readable storage medium includes a computer program or instructions. When the computer program or the instructions are run on a computer, the computer is enabled to perform the wireless local area network sensing method according to any one of the possible implementations of the first aspect to the fourth aspect.

According to a thirteenth aspect, a computer program product is provided. The computer program product includes a computer program or instructions. When the computer program or the instructions are run on a computer, the computer is enabled to perform the wireless local area network sensing method according to any one of the possible implementations of the first aspect to the fourth aspect.

## BRIEF DESCRIPTION OF DRAWINGS

FIG. 1 is a schematic diagram of an architecture of a communications system according to an embodiment of this application;

FIG. 2 is a schematic flowchart of a wireless local area network sensing method according to an embodiment of this application;

FIG. 3 is a schematic diagram of a transmit array according to an embodiment of this application;

FIG. 4 is a schematic direction diagram of a frequency diverse array according to an embodiment of this application;

FIG. 5 is a schematic direction diagram of a phased array according to an embodiment of this application;

FIG. 6 is a schematic diagram of an angle direction of a phased array according to an embodiment of this application;

FIG. 7 is a schematic diagram of an angle direction of a frequency diverse array according to an embodiment of this application;

FIG. 8 is a schematic diagram of a correspondence between a carrier and an antenna according to an embodiment of this application;

FIG. 9 is a schematic diagram of an array direction that is angle and distance dependent according to an embodiment of this application;

FIG. 10 is a schematic diagram of an architecture of a communications system according to an embodiment of this application;

FIG. 11 is a schematic flowchart 1 of a wireless local area network sensing method according to an embodiment of this application;

FIG. 12 is a schematic diagram 1 of a frame format of an NDPA frame according to an embodiment of this application;

FIG. 13 is a schematic diagram of a sounding dialog token field according to an embodiment of this application;

FIG. 14 is a schematic diagram 1 of a STA info field according to an embodiment of this application;

FIG. 15 is a schematic diagram 2 of a STA info field according to an embodiment of this application;

FIG. 16 is a schematic diagram 3 of a STA info field according to an embodiment of this application;

FIG. 17 is a schematic diagram 2 of a frame format of an NDPA frame according to an embodiment of this application;

FIG. 18 is a schematic diagram 3 of a frame format of an NDPA frame according to an embodiment of this application;

FIG. 19 is a schematic diagram 4 of a frame format of an NDPA frame according to an embodiment of this application;

FIG. 20 is a schematic diagram 4 of a STA info field according to an embodiment of this application;

FIG. 21 is a schematic diagram 5 of a frame format of an NDPA frame according to an embodiment of this application;

FIG. 22 is a schematic diagram 6 of a frame format of an NDPA frame according to an embodiment of this application;
FIG. 23 is a schematic diagram 7 of a frame format of an NDPA frame according to an embodiment of this application;
FIG. 24 is a schematic diagram 5 of a STA info field according to an embodiment of this application;
FIG. 25 is a schematic diagram 8 of a frame format of an NDPA frame according to an embodiment of this application;
FIG. 26 is a schematic diagram 9 of a frame format of an NDPA frame according to an embodiment of this application;
FIG. 27 is a schematic diagram 1 of a frame control field according to an embodiment of this application;
FIG. 28 is a schematic flowchart 2 of a wireless local area network sensing method according to an embodiment of this application;
FIG. 29 is a schematic application diagram 1 of a wireless local area network sensing method according to an embodiment of this application;
FIG. 30 is a schematic flowchart 3 of a wireless local area network sensing method according to an embodiment of this application;
FIG. 31 is a schematic application diagram 2 of a wireless local area network sensing method according to an embodiment of this application;
FIG. 32 is a schematic flowchart 4 of a wireless local area network sensing method according to an embodiment of this application;
FIG. 33 is a schematic application diagram 3 of a wireless local area network sensing method according to an embodiment of this application;
FIG. 34 is a schematic flowchart 5 of a wireless local area network sensing method according to an embodiment of this application;
FIG. 35 is a schematic diagram 1 of a frame format of a trigger frame according to an embodiment of this application;
FIG. 36 is a schematic diagram 1 of a common info field according to an embodiment of this application;
FIG. 37 is a schematic diagram 1 of a trigger dependent common info field according to an embodiment of this application;
FIG. 38A and FIG. 38B are a schematic diagram 2 of a trigger dependent common info field according to an embodiment of this application;
FIG. 39 is a schematic diagram 3 of a trigger dependent common info field according to an embodiment of this application;
FIG. 40 is a schematic diagram 4 of a trigger dependent common info field according to an embodiment of this application;
FIG. 41 is a schematic diagram 5 of a trigger dependent common info field according to an embodiment of this application;
FIG. 42 is a schematic diagram 6 of a trigger dependent common info field according to an embodiment of this application;
FIG. 43 is a schematic diagram 7 of a trigger dependent common info field according to an embodiment of this application;
FIG. 44 is a schematic diagram 8 of a trigger dependent common info field according to an embodiment of this application;
FIG. 45 is a schematic diagram 9 of a trigger dependent common info field according to an embodiment of this application;
FIG. 46 is a schematic diagram 10 of a trigger dependent common info field according to an embodiment of this application;
FIG. 47 is a schematic flowchart 6 of a wireless local area network sensing method according to an embodiment of this application;
FIG. 48 is a schematic application diagram 4 of a wireless local area network sensing method according to an embodiment of this application;
FIG. 49 is a schematic flowchart 7 of a wireless local area network sensing method according to an embodiment of this application;
FIG. 50 is a schematic application diagram 5 of a wireless local area network sensing method according to an embodiment of this application;
FIG. 51 is a schematic flowchart 8 of a wireless local area network sensing method according to an embodiment of this application;
FIG. 52 is a schematic application diagram 6 of a wireless local area network sensing method according to an embodiment of this application;
FIG. 53 is a schematic diagram 1 of a structure of a communications apparatus according to an embodiment of this application;
FIG. 54 is a schematic diagram 2 of a structure of a communications apparatus according to an embodiment of this application;

FIG. 55 is a schematic diagram 3 of a structure of a communications apparatus according to an embodiment of this application; and

FIG. 56 is a schematic diagram 4 of a structure of a communications apparatus according to an embodiment of this application.

## DESCRIPTION OF EMBODIMENTS

The following describes technical solutions of this application with reference to accompanying drawings.

The technical solutions in embodiments of this application may be applied to various communications systems such as 802.11ax, 802.11be, and a future WLAN system. 802.11ax may also be referred to as a high efficiency wireless (high efficiency wireless, HEW) network and wireless fidelity (wireless fidelity, Wi-Fi) 6. 802.11be may also be referred to as an extremely high throughput (extremely high throughput, EHT), Wi-Fi 7, or the like.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, terms such as "example" and "for example" are used to represent giving an example, an illustration, or description. Any embodiment or design scheme described as an "example" in this application should not be explained as being more preferred or having more advantages than another embodiment or design scheme. Specifically, the term "example" is used to present a concept in a specific manner.

In embodiments of this application, terms "information (information)", "signal (signal)", "message (message)", "channel (channel)", and "signaling (signaling)" may sometimes be interchangeably used. It should be noted that meanings expressed by the terms are consistent when differences of the terms are not emphasized. Terms "of (of)" and "corresponding (corresponding, relevant)" may be interchangeably used sometimes. It should be noted that meanings expressed by the terms are consistent when differences of the terms are not emphasized. "Field" and "indication bit" may be interchangeably used sometimes. It should be noted that meanings expressed by the terms are consistent when differences of the terms are not emphasized.

In embodiments of this application, a subscript, for example, $W_1$, may sometimes be written in an incorrect form, for example, W1. Expressed meanings are consistent when differences are not emphasized.

For ease of understanding, the following first describes related terms and concepts that may be used in embodiments of this application.

A frequency diverse array (frequency diverse array, FDA) radar transmits a coherent signal, and adds a small frequency offset to transmit beams of different antennas, so that a frequency center of the transmitted signal is offset. Usually, the offset added to the transmit beams of different antennas is far smaller than a carrier of the transmit beam, and main frequency components transmitted by different antennas overlap. The frequency diverse array radar is similar to a phased array radar. The frequency diverse array radar may be regarded as an expansion of the phased array radar, and the phased array radar may be regarded as a special case of the frequency diverse array radar.

FIG. 3 is a schematic diagram of a transmit array according to an embodiment of this application. As shown in FIG. 3, a frequency diverse array radar adds a frequency increment $\Delta f$ to a transmit signal on an adjacent array element that is far smaller than a carrier of a transmit beam. It is assumed that a transmit carrier of a first array element is $f_0$. A carrier of a transmit signal of an $m^{th}$ array element is shown in the following formula (1):

$$f_m = f_0 + m \times \Delta f \quad (1).$$

m = 0, 1, 2, ..., and M - 1; m is an integer greater than or equal to 0 and less than or equal to M - 1; M is a quantity of array elements; d is an interval between array elements; $r_0$ is a distance from a target to the array element; $\theta$ is an angle between the target and the array element; a y axis represents a distance; and an x axis represents a frequency. The array element may also be referred to as an antenna.

The one-dimensional linearly uniform transmit array shown in FIG. 3 is used as an example. A uniformly weighted transmit beam pattern of the one-dimensional linearly uniform transmit array may be approximately deduced as the following formula (2):

$$F(\mathrm{t};\theta,\mathrm{r})=\frac{e^{\{\mathrm{j}\times\theta_0\}}}{r}\times\frac{\sin\{\mathrm{M}\times\pi(\Delta f\times t-\Delta f\times\frac{r}{c}+\frac{f_0\times d\times\sin\theta}{c}+\frac{\Delta f\times d\times\sin\theta}{c})\}}{\sin\{\pi(\Delta f\times t-\Delta f\times\frac{r}{c}+\frac{f_0\times d\times\sin\theta}{c}+\frac{\Delta f\times d\times\sin\theta}{c})\}}\quad(2).$$

$$\theta_0=2\times\pi\times f_0\times(\mathrm{t}-\frac{r}{c})-\frac{\pi\times(\mathrm{M}-1)\times(\Delta f\times r-f_0\times d\times\sin\theta-\Delta f\times d\times\sin\theta-\Delta f\times \mathrm{t})\}}{c}\quad(3).$$

t is time; θ is the angle between the target and the array element; r is the distance from the target to the array element; e is a mathematical constant, is a base number of a natural logarithm function, and is also referred to as an Euler number (Euler number); M is the quantity of array elements; j is a complex number; Δf is the frequency increment, and is also referred to as a frequency offset value; c is a speed of light; d is the interval between the array elements; and $\theta_0$ is a phase factor, which may be specifically represented by the foregoing formula (3).

Specifically, the frequency diverse array radar has the following features. (1) The frequency diverse array radar is different from a frequency scanning radar. A frequency offset of the frequency scanning radar is applying a same frequency offset value at different time, where all array elements have the same frequency offset at a same moment. A frequency offset of the frequency diverse array radar is applying different frequency offset values to different array elements at the same time. (2) Instead of an orthogonal multi-frequency signal transmitted by the array itself, the frequency offset of the frequency diverse array radar is additionally added. The transmit signal transmitted by the frequency diverse array radar and a transmit signal of a phased array radar are same coherent signals, where after additional frequency offset control, frequencies of the radiated signals are different. This is different from an orthogonal frequency division multiplexing (orthogonal frequency division multiplexing, OFDM) radar that transmits different carriers. (3) An array direction of the frequency diverse array radar is affected by the added frequency offset value. When the specified distance r is fixed, a beam direction changes with the frequency offset value. In other words, the frequency diverse array radar is frequency offset correlated. When the frequency offset is fixed, the beam direction changes with the distance. In other words, the frequency diverse array radar is distance correlated. (4) A pattern of a frequency diverse array changes with time, and is specifically propagated at the speed of light in a distance. The pattern of the frequency diverse array is periodic along the distance.

FIG. 4 is a schematic direction diagram of a frequency diverse array according to an embodiment of this application. As shown in FIG. 4, a pattern of the frequency diverse array is a pattern of the frequency diverse array obtained when eight transmit antennas are used, a frequency channel number is 5 GHz, and a frequency offset is 1250 kHz. A horizontal coordinate represents a distance, and a vertical coordinate represents an angle. The pattern of the frequency diverse array is distance dependent, and clutter interference in an uninterested area can be avoided. This implements sensing under a high signal-to-noise ratio.

FIG. 5 is a schematic direction diagram of a phased array according to an embodiment of this application. As shown in FIG. 5, a pattern of the phased array is a pattern obtained when eight transmit antennas are used, and there is no frequency offset. A horizontal coordinate represents a distance, and a vertical coordinate represents an angle.

The pattern of the frequency diverse array shown in FIG. 4 is distance dependent, and the S-shaped array pattern shown in FIG. 4 is caused by $\Delta f\times t-\Delta f\times\frac{r}{c}+\frac{f_0\times d\times\sin\theta}{c}+\frac{\Delta f\times d\times\sin\theta}{c}$ in an array factor of the S-shaped array pattern. For a peak value of the array pattern, refer to the following formula (4):

$$\Delta f\times t-\Delta f\times\frac{r}{c}+\frac{f_0\times d\times\sin\theta}{c}+\frac{\Delta f\times d\times\sin\theta}{c}=\mathrm{k}\quad(4).$$

t is time; θ is an angle between a target and an array element; r is a distance from the target to the array element; Δf is a frequency increment, which is also referred to as a frequency offset value; c is a speed of light; d is an interval between array elements; $f_0$ is a transmit carrier of a first array element; and k = 0, ±1, ±2, and the like. The foregoing formula (4) indicates that the peak value of the pattern of the frequency diverse array depends on two parameters: r and t, and the array pattern of the frequency diverse array has distance-dependent and time-varying features.

FIG. 6 is a schematic diagram of an angle direction of a phased array according to an embodiment of this application. As shown in FIG. 6, the phased array changes only a phase, and a pattern with a direction can be implemented. When a target and interference are located in different distance units of a same angle unit, an angle-dependent array pattern is formed by changing different antenna phases, so that the target and the interference are sensed together, and a signal-to-noise ratio for sensing the target is reduced.

FIG. 7 is a schematic diagram of an angle direction of a frequency diverse array according to an embodiment of this application. As shown in FIG. 7, the frequency diverse array can implement a pattern with a direction. When a target and interference are located in different distance units of a same angle unit, the target can also be flexibly identified and the interference can be eliminated.

FIG. 8 is a schematic diagram of a correspondence between a carrier and an antenna according to an embodiment of this application. FIG. 9 is a schematic diagram of an array direction that is angle and distance dependent according to an embodiment of this application.

As shown in FIG. 8, a y axis represents a frequency, an x axis represents a distance, A0 represents an array element or an antenna, and A1 to A7 are similar. f0 represents a $0^{th}$ subcarrier, f4 represents a $4^{th}$ subcarrier, a frequency offset between the antennas is a uniform frequency offset, and d represents an interval between array elements. With reference to FIG. 8, subcarriers of an OFDM signal are placed on different antennas, and a distance-dependent pattern may be formed according to a principle of a frequency diverse array, as shown in FIG. 9. The pattern shown in FIG. 9 is angle and distance dependent, and beams focus on a specified distance angle unit. Due to a propagation feature of an electromagnetic wave, the pattern is propagated at a speed of light in a distance, and a distance scanning feature is formed in the distance.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that with evolution of a network architecture and emergence of a new service scenario, the technical solutions provided in embodiments of this application are also applicable to similar technical problems.

For ease of understanding embodiments of this application, a communications system shown in FIG. 10 is first used as an example to describe in detail a communications system applicable to embodiments of this application. For example, FIG. 10 is a schematic diagram of an architecture of the communications system to which a wireless local area network sensing method is applicable according to an embodiment of this application.

As shown in FIG. 10, the communications system includes a first device and at least one second device.

The first network device is a device that is located on a network side of the communications system and that has a wireless transceiver function, or a chip or a chip system that may be disposed in the device. The first device in this embodiment of this application is an apparatus for providing a service for the second device, and may be an access point (access point, AP). For example, the first device may be a communications entity such as a communications server, a router, a switch, or a network bridge, or the first device may include various forms of macro base stations, micro base stations, relay stations, or the like. Certainly, the first device may further be a chip or a processing system in the various forms of devices, to implement the methods and functions of embodiments of this application. In addition, with continuous evolution of wireless local area network application scenarios, the first device may be further applied to more scenarios, for example, serving as a sensor node (for example, a smart water meter, a smart electricity meter, or a smart air detection node) in a smart city, a smart device (for example, a smart camera, a projector, a display screen, a television, a stereo, a refrigerator, or a washing machine) in a smart home, a node in Internet of things, an entertainment terminal (for example, AR, VR, or another wearable device), a smart device (for example, a printer, or a projector) in a smart office, an Internet of vehicles device in Internet of vehicles, or infrastructure (for example, a vending machine, a self-service navigation console, a self-checkout device, or a self-service food machine) in daily life scenarios.

For example, the second device is an apparatus having a wireless communications function. The apparatus may be a device of an entire device, or may be a chip, a processing system, or the like installed in the entire device. The device on which the chip or the processing system is installed may be controlled by the chip or the processing system to implement the methods and functions in embodiments of this application. For example, the second device in this embodiment of this application has a wireless transceiver function, may be a station (station, STA), and may communicate with the first device or another device. For example, the second device is any user communications device that allows a user to communicate with the first device and further communicate with a WLAN. For example, the second device may be user equipment that can access a network, for example, a tablet computer, a desktop computer, a laptop computer, a notebook computer, an ultra-mobile personal computer (Ultra-mobile Personal Computer, UMPC), a handheld computer, a netbook, a personal digital assistant (Personal Digital Assistant, PDA), or a mobile phone; or may be an Internet of things node in the Internet of things, an in-vehicle communications apparatus in the Internet of vehicles, or the like. The second device may alternatively be a chip or a processing system in the foregoing terminals. Specific forms of the first device and the second device are not specifically limited in embodiments of this application, and are merely examples for description herein.

It should be noted that the wireless local area network sensing method according to this embodiment of this application may be applied between the first device and the second device shown in FIG. 10. For a specific implementation, refer to the following method embodiments. Details are not described herein again.

It should be noted that the solutions in embodiments of this application may also be used in another communications system, and a corresponding name may also be replaced with a name of a corresponding function in the another communications system.

It should be understood that FIG. 10 is merely a simplified schematic diagram of an example for ease of understanding. The communications system may further include another device not drawn in FIG. 10.

The following describes in detail wireless local area network sensing methods according to embodiments of this application with reference to FIG. 11 to FIG. 52.

For example, FIG. 11 is a schematic flowchart 1 of a wireless local area network sensing method according to an embodiment of this application. The wireless local area network sensing method may be applicable to communication between the first device and the second device shown in FIG. 10. The following describes a downlink application scenario in detail based on FIG. 11.

As shown in FIG. 11, the wireless local area network sensing method includes the following steps.

S1101: The first device sends a first message to the second device. Correspondingly, the second device receives the first message from the first device.

Correspondingly, the first message indicates at least one parameter corresponding to a first sensing waveform, and the first sensing waveform is used to sense a target object in an environment.

In some embodiments, the first message may include a sensing null data packet announcement (sensing null data packet announcement, sensing NDPA) frame, and the first sensing waveform may include a sensing null data packet (sensing null data packet, sensing NDP) frame.

In this way, the first device sends the sensing NDPA frame to the second device to indicate parameters of the to-be-sent sensing NDP frame, so that second devices can perform measurement by using a received target echo signal.

For example, the first message carries a difference between frequencies of carriers corresponding to two adjacent antennas of a plurality of antennas of the first device. In this way, spatial beams with different properties can be obtained by changing frequency offsets on different antennas, and a flexible sensing mode can be implemented.

In some embodiments, the first message may include one or more of the following: first indication information, second indication information, third indication information, and fourth indication information.

Optionally, the first indication information may indicate quantity information of beams corresponding to the plurality of antennas of the first device.

For example, the first indication information may include a multi-beam end indication bit of a STA info field of the sensing NDPA frame or a beam indication bit of the STA info field of the sensing NDPA frame. In this way, the first indication information may indicate a specific quantity of beams corresponding to a plurality of antennas of a first beam, a single beam, a plurality of beams, or the like.

For example, the first indication information may indicate whether a current beam is a last beam corresponding to the plurality of antennas of the first device. For example, the first indication information may include the multi-beam end indication bit of the STA info field of the sensing NDPA frame.

For another example, the first indication information may indicate a quantity of beams corresponding to the plurality of antennas of the first device. For example, the first indication information may include the beam indication bit of the STA info field of the sensing NDPA frame.

Optionally, the second indication information may indicate whether all differences between frequencies of carriers corresponding to the two adjacent antennas corresponding to the current beam are equal. In this way, the second indication information may indicate whether a frequency offset between the antennas is a uniform frequency offset.

For example, the second indication information may include a uniform offset indication bit of the STA info field of the sensing NDPA frame.

Optionally, the third indication information may indicate the difference between the frequencies of the carriers corresponding to the two adjacent antennas. In this way, the third indication information may indicate a frequency offset value.

For example, the third indication information may include a frequency offset indication bit of the STA info field of the sensing NDPA frame.

Optionally, the fourth indication information may indicate quantity information of the third indication information corresponding to the current beam. For example, the fourth indication information may include a beam end indication bit of the STA info field of the sensing NDPA frame or an antenna indication bit of the STA info field of the sensing NDPA frame.

For example, the third indication information and the fourth indication information may belong to a first field of the first message, the fourth indication information may indicate whether a next first field of the current first field includes the third indication information corresponding to the current beam, and the first field may be the STA info field.

In this way, when the frequency offset between the antennas is a non-uniform frequency offset, the second device may need to continuously read a plurality of first fields until the fourth indication information indicates that the next first field of the current first field does not include the third indication information corresponding to the current beam. This indicates that an indication of the beam ends. For example, when the frequency offset is the non-uniform frequency offset, the second device may need to continuously read a plurality of STA info fields until the beam end indication bit is 1. This indicates that the indication of the beam ends.

For another example, the fourth indication information may indicate a quantity of pieces of the third indication information corresponding to the current beam. For example, the fourth indication information may include the antenna field of the STA info field of the sensing NDPA frame. When the antenna field is 1, it indicates that the current beam corresponds to one frequency offset value, and there are two antennas. When the antenna field is 2, it indicates that the current beam corresponds to two frequency offset values, and there are three antennas. This is not listed one by one in this application.

For another example, the fourth indication information may indicate the quantity of pieces of the third indication information corresponding to the current beam, and the fourth indication information may further indicate whether all the differences between the frequencies of the carriers corresponding to the two adjacent antennas corresponding to the current beam are equal. For example, when the antenna field is 0, it may indicate that the frequency offset between the antennas is the uniform frequency offset, and there may be two or more antennas.

In some embodiments, the first message may include fifth indication information, and the fifth indication information may indicate that the parameter included in the first message is a frequency diverse array (frequency diverse array, FDA) parameter.

For example, the fifth indication information may include an FDA NDP announcement indication bit of the sensing NDPA frame, and the FDA NDP announcement indication bit may indicate that the sensing NDPA frame is an indication frame of the FDA parameter.

In this way, the first message may indicate that the first sensing waveform is a single beam with a uniform frequency offset; a single beam with a non-uniform frequency offset; a plurality of beams, where all the beams have uniform frequency offsets; a plurality of beams, where some of the beams have uniform frequency offsets; a plurality of beams, where all the beams have non-uniform frequency offsets; or the like.

The following uses the sensing NDPA frame as an example to describe the first message in detail.

The sensing NDPA frame may be referred to as an NDPAFDA sensing frame, an NDPAframe, or the like. Expressed meanings are consistent when differences are not emphasized. The following uses the NDPA frame as an example for description. The sensing NDP frame may be referred to as an NDP frame or the like. Expressed meanings are consistent when differences are not emphasized. The following uses the sensing NDP frame as an example for description.

FIG. 12 is a schematic diagram of a frame format of an NDPA frame according to an embodiment of this application.

For example, fifth indication information may include a reserved field of a sounding dialog token field of the NDPA frame shown in FIG. 12.

FIG. 13 is a schematic diagram of a sounding dialog token field according to an embodiment of this application. With reference to FIG. 13, the reserved field shown in FIG. 13 may indicate that a parameter included in a first message is a frequency diverse array FDA parameter. An indication manner of the reserved field is shown in Table 1. When a value of the reserved field is 0, it indicates that the parameter included in the first message is the frequency diverse array FDA parameter.

**Table 1**

| Subarea value for a sensed FDA | Frame type |
|---|---|
| 0 | NDPA |
| 1 | FDA sensing |

FIG. 14 is a schematic diagram 1 of a STA info field according to an embodiment of this application.

For another example, fifth indication information may include a reserved field of STA info whose AID is 2047, for example, a reserved field whose size is 1 bit in FIG. 14. An indication manner of the reserved field is shown in Table 2. When a value of the reserved field is 0, it indicates that a parameter included in a first message is a frequency diverse array FDA parameter.

**Table 2**

| Subarea value for a sensed FDA | Frame type |
|---|---|
| 0 | NDPA |
| 1 | FDA sensing |

FIG. 15 is a schematic diagram 2 of a STA info field according to an embodiment of this application.

In some embodiments, the STA info field may include the following indication bits: a beam number subfield, a uniform indication subfield, an offset number subfield, and a frequency offset value subfield.

It should be noted that the beam number subfield may be referred to as a beam number. Expressed meanings are consistent when differences are not emphasized. The foregoing uniform indication subfield may be referred to as a uniform indication. Expressed meanings are consistent when differences are not emphasized. The foregoing offset number subfield may be referred to as an offset number. Expressed meanings are consistent when differences are not emphasized. The foregoing frequency offset value subfield may be referred to as a frequency offset value, a frequency offset subfield value, or a frequency offset subfield. Expressed meanings are consistent when differences are not emphasized.

For example, first indication information may include the beam number subfield indication bit, and the beam number subfield may indicate quantity information of beams corresponding to a plurality of antennas of a first device. For example, this is implemented in a manner such as an end bit indication or a specific quantity indication.

For example, second indication information may include the uniform indication subfield, which may indicate whether all differences between frequencies of carriers corresponding to two adjacent antennas corresponding to a current beam are equal, and indicate whether the current beam has a uniform frequency offset.

For example, the third indication information may include the frequency offset value subfield, which may indicate a difference between frequencies of carriers corresponding to two adjacent antennas, for example, indicate a specific frequency offset value.

For example, the fourth indication information may include the offset number subfield to indicate quantity information of pieces of the third indication information corresponding to the current beam. For example, this is implemented in the manner such as the end bit indication or the specific quantity indication.

It should be noted that, in implementation, the subareas shown in FIG. 15 may be combined into one or several large subareas, and a quantity of bits occupied by the subareas may change with a quantity of bits allowed to be used in a corresponding standard.

The following describes the STA info field in detail with reference to manner 1, manner 2, and manner 3.

Manner 1

FIG. 16 is a schematic diagram 3 of a STA info field according to an embodiment of this application.

With reference to FIG. 16, first indication information may include a multi-beam end indication bit, which indicates whether a current beam is a last beam corresponding to a plurality of antennas of a first device.

For example, when the multi-beam end indication bit is set to 0, it indicates that the current STA info field is not a last field indicated by the beam. When the multi-beam end indication bit is set to 1, it indicates that the current field is the last field indicated by the beam. This is not limited in this application.

It should be noted that in this embodiment of this application, the foregoing content represented by setting the indication bit to 0 and the following content represented by setting the indication bit to 1 may be mutually replaced to implement a corresponding function.

For example, second indication information may include a uniform offset indication bit, which indicates whether all differences between frequencies of carriers corresponding to two adjacent antennas corresponding to the current beam are equal. In other words, the second indication information may indicate whether a frequency offset between the antennas is a uniform frequency offset.

For example, if the uniform offset indication bit is set to 1, it indicates that the current beam has the uniform frequency offset. Only one frequency offset field of the field indicates a frequency offset value, and a next beam end indication bit should be set to 1. If the uniform offset indication bit is set to 0, it indicates that the current beam has a non-uniform frequency offset, and a plurality of frequency offset fields may need to be read.

**Table 3**

| Subarea value for a frequency offset | Frequency offset between two adjacent antennas (Frequency offset between two adjacent antennas) |
|---|---|
| 0 | -1250 kHz |
| 1 | -1171.875 kHz |
| 2 | -1093.75 kHz |
| 3 | -1015.625 kHz |
| ... | ... |

(continued)

| Subarea value for a frequency offset | Frequency offset between two adjacent antennas (Frequency offset between two adjacent antennas) |
|---|---|
| 28 | 1015.625 kHz |
| 29 | 1093.75 kHz |
| 30 | 1171.875 kHz |
| 31 | 1250 kHz |

For example, third indication information may include a frequency offset subfield indication bit, which indicates a difference between frequencies of carriers corresponding to the two adjacent antennas. For example, the frequency offset subfield indication bit may include five bits. A correspondence between a value of the frequency offset subfield indication bit and the frequency offset is shown in Table 3. A uniform interval is used, a minimum frequency offset is 78.125 kHz, and a maximum frequency offset is 1250 kHz.

For example, fourth indication information may include a beam end indication bit, which indicates whether a next STA info field of the current STA info field includes the third indication information corresponding to the current beam. In other words, it may be indicated whether the STA info field is a last field used when the current beam indicates the frequency offset value.

For example, when the beam end indication bit is set to 0, it indicates that the current STA info field is not the last field indicating using of the beam, and when the beam end indication bit is set to 1, it indicates that the current STA info field is the last field indicating using of the current beam.

The following describes in detail a single beam with a uniform frequency offset, a single beam with a non-uniform frequency offset, and a plurality of beams by using the STA info field corresponding to manner 1.

FIG. 17 is a schematic diagram 2 of a frame format of an NDPA frame according to an embodiment of this application.

FIG. 17 is a schematic diagram of a sensing NDPA frame and a STA info field used when a beam is a single beam and has a uniform frequency offset. A multi-beam end indication bit may be set to 1, indicating that indication information of the beam ends in the STA info field, that is, there is only one beam. A uniform offset indication bit may be set to 1, indicating that all frequency differences of carriers corresponding to two adjacent antennas corresponding to the current beam are equal. In other words, a frequency offset between the antennas is the uniform frequency offset. The current STA info field includes only one frequency offset subfield indication bit. A beam end indication bit may be set to 1, indicating that the indication information of the current beam ends in the STA info field. A frequency offset field indication bit indicates a uniform frequency offset value.

FIG. 18 is a schematic diagram 3 of a frame format of an NDPA frame according to an embodiment of this application.

FIG. 18 is a schematic diagram of a sensing NDPA frame and a STA info field used when a beam is a single beam and has a non-uniform frequency offset. An example in which a first device includes six antennas is used. A multi-beam end indication bit of a first STA info field may be set to 0, and a multi-beam end indication bit of a second STA info field may be set to 1, indicating that an indication of a plurality of beams ends in the STA info field, that is, there is only one beam. Two uniform offset indication bits are set to 0, indicating that the beam has the non-uniform frequency offset. The STA info field includes a plurality of frequency offset subfield indication bits. A beam end indication bit of the first STA info field may be set to 0, and a beam end indication bit of the second STA info field may be set to 1, indicating that the current beam ends in the STA info field. A frequency offset field indicates a frequency offset value between every two antennas.

FIG. 19 is a schematic diagram 4 of a frame format of an NDPA frame according to an embodiment of this application.

FIG. 19 is a schematic diagram of a sensing NDPA frame and a STA info field used when beams are a plurality of beams. In a multi-beam case, the two single-beam cases in FIG. 17 and FIG. 18 may be combined to form the multi-beam case. A multi-beam end indication bit of a STA info 1 subfield that indicates a uniform frequency offset is set to 0, and a value of another indication bit remains unchanged, indicating that the STA info field shown in FIG. 19 has the plurality of beams. Values of indication bits of a STA info 2 subfield and a STA info 3 subfield remain unchanged, and a multi-beam end location 1 in the STA info 3 subfield indicates that a process of indicating the plurality of beams ends.

Manner 2

FIG. 20 is a schematic diagram 4 of a STA info field according to an embodiment of this application.

With reference to FIG. 20, first indication information may include a beam subfield indication bit, which indicates a quantity of beams corresponding to a plurality of antennas of a first device, and indicating indication information that is of a total quantity of beams and that is included in a current NDPA frame.

For example, when the beam subfield indication bit is set to 00, the current NDPA frame includes indication information of one beam in total. When the beam subfield indication bit is set to 01, the current NDPA frame includes indication information of two beams in total. When the beam subfield indication bit is set to 10, it indicates that the current NDPA frame includes indication information of three beams in total. When the beam subfield indication bit is set to 11, it indicates that the current NDPA frame includes indication information of four beams in total. This is not limited in this embodiment of this application.

For example, fourth indication information may include an antenna field, indicating whether a next STA info field of the current STA info field includes third indication information corresponding to a current beam, that is, indicating a quantity of frequency offset subfields corresponding to the current beam.

For example, when an antenna subfield indication bit is set to 0, it indicates a uniform frequency offset, and the current beam corresponds to one frequency offset subfield. When the antenna subfield indication bit is set to 1, it indicates a non-uniform frequency offset, and the current beam corresponds to a plurality of frequency offset subfields.

For example, the third indication information may include a frequency offset subfield indication bit, which may indicate a difference between frequencies of carriers corresponding to two adjacent antennas, that is, indicate a frequency offset value between every two antennas.

For example, a frequency offset indication bit may include five bits. A correspondence between a value of the frequency offset subfield and a frequency offset is the same as that in manner 1. For details, refer to Table 3. A uniform interval is used, a minimum frequency offset is 78.125 kHz, and a maximum frequency offset is 1250 kHz. Details are not described herein again.

The following describes in detail a single beam with a uniform frequency offset, a single beam with a non-uniform frequency offset, and a plurality of beams by using the STA info field corresponding to manner 2.

FIG. 21 is a schematic diagram 5 of a frame format of an NDPA frame according to an embodiment of this application.

FIG. 21 is a schematic diagram of a sensing NDPA frame and a STA info field used when a beam is a single beam and has a uniform frequency offset. A beam subfield indication bit may be set to 00, indicating that there is only one beam. An antenna subfield indication bit may be set to 0, indicating that a frequency offset between antennas is the uniform frequency offset. The STA info field includes only one frequency offset subfield indication bit. A frequency offset field indication bit indicates a uniform frequency offset value.

FIG. 22 is a schematic diagram 6 of a frame format of an NDPA frame according to an embodiment of this application.

FIG. 22 is a schematic diagram of a frame structure of a STA info field of a sensing NDPA frame used when a beam is a single beam and has a non-uniform frequency offset. An example in which a first device includes six antennas is used. A beam subfield indication bit of a first STA info field is set to 00, indicating that there is only one beam. An antenna subfield indication bit is set to 5, indicating a non-uniform frequency offset. The STA info field includes five frequency offset subfield indication bits. A frequency offset field indicates a frequency offset value between every two antennas.

FIG. 23 is a schematic diagram 7 of a frame format of an NDPA frame according to an embodiment of this application.

FIG. 23 is a schematic diagram of a sensing NDPA frame and a STA info field used when beams are a plurality of beams. In a multi-beam case, the two single-beam cases in FIG. 21 and FIG. 22 may be combined to form the multi-beam case. A beam subfield in a STA info 1 subfield indicates a quantity of beams, and the beam subfield is set to 2, indicating that the quantity of beams is 2. In a STA info 2 subfield, an antenna field is set to 5, indicating that the STA info 2 subfield includes five frequency offset subfield indication bits, and a value of another indication bit remains unchanged.

Manner 3

FIG. 24 is a schematic diagram 5 of a STA info field according to an embodiment of this application.

Compared with manner 1 shown in FIG. 16, in manner 3, the multi-beam end bit in manner 1 is removed, and the beam indication bit in manner 2 indicates a quantity of beams corresponding to a plurality of antennas of a first device.

For example, first indication information may include the beam indication bit, which indicates the quantity of beams. For example, when a value of the beam indication bit is 01, there is one beam. For a specific implementation, refer to the foregoing manner 2. Details are not described one by one herein again.

For example, second indication information may include a uniform offset indication bit, which indicates whether all differences between frequencies of carriers corresponding to two adjacent antennas corresponding to a current beam are equal. In other words, the second indication information may indicate whether a frequency offset between the antennas is a uniform frequency offset. For a specific implementation, refer to foregoing manner 1. Details are not described herein again.

For example, third indication information may include a frequency offset subfield indication bit, which indicates a difference between frequencies of carriers corresponding to two adjacent antennas. For a specific implementation, refer to foregoing manner 1. Details are not described herein again.

For example, fourth indication information may include a beam end indication bit, which indicates whether a next STA info field of the current STA info field includes the third indication information corresponding to the current beam. In other words, it may be indicated whether the STA info field is a last field used when the current beam indicates a frequency offset value. For a specific implementation, refer to foregoing manner 1. Details are not described herein again.

The following describes a plurality of beams in detail by using the STA info field corresponding to manner 3.

FIG. 25 is a schematic diagram 8 of a frame format of an NDPA frame according to an embodiment of this application.

FIG. 25 is a schematic diagram of a sensing NDPA frame and a STA info field used when beams are a plurality of beams. In a multi-beam case, a beam indication bit of a STAinfo 1 subfield may be set to 01, indicating that the sensing NDPA frame includes two beams. A uniform offset indication bit of the STA info 1 subfield may be set to 1, indicating that all frequency differences of carriers corresponding to two adjacent antennas corresponding to a current beam are equal. In other words, a frequency offset between the antennas is a uniform frequency offset. The current STA info field includes only one frequency offset subfield indication bit. A beam end indication bit of the STA info 1 subfield may be set to 1, indicating that indication information of the current beam ends in the STA info field. A frequency offset field indication bit of the STA info 1 subfield indicates a uniform frequency offset value.

An example in which the first device includes six antennas is used. A uniform offset indication bit of a STA info 2 subfield may be set to 0, indicating that all frequency differences of carriers corresponding to two adjacent antennas corresponding to a current beam are not equal. A beam end indication bit of the STA info 2 subfield may be set to 0, indicating that indication information of the current beam further includes a next STA info field. A frequency offset field indication bit of the STA info 2 subfield indicates a non-uniform frequency offset value.

A uniform offset indication bit of a STA info 3 subfield may be set to 0, indicating that all frequency differences of carriers corresponding to two adjacent antennas corresponding to a current beam are not equal. A beam end indication bit of the STA info 3 subfield may be set to 1, indicating that indication information of the current beam ends in the STA info field. A frequency offset field indication bit of the STA info 3 subfield indicates a non-uniform frequency offset value.

In this way, an ended STA info field indicates one beam, and a plurality of antennas transmit one beam at a same frequency or different frequencies.

It should be noted that the STA info field corresponding to manner 3 may indicate a single beam with a uniform frequency offset or a single beam with a non-uniform frequency offset. For example, when the STA info field includes only the STA info 1 subfield shown in FIG. 25, the STA info field may indicate the single beam with the uniform frequency offset. When the STA info field includes only the STA info 2 subfield and the STA info 3 subfield shown in FIG. 25, the STA info field may indicate the single beam with the non-uniform frequency offset. Details are not described herein again in this embodiment of this application.

Manner 4

For example, the multi-beam end indication bit in manner 1 may be combined with the antenna indication bit in manner 2 to obtain a STA info field in manner 4. For a specific implementation of the multi-beam end indication bit, refer to manner 1. For a specific implementation of the antenna indication bit, refer to manner 2. Details are not described herein again.

The following uses an FDA sensing frame as an example to describe a first message.

FIG. 26 is a schematic diagram 9 of a frame format of an NDPA frame according to an embodiment of this application.

The NDPA frame shown in FIG. 26 is different from the NDPA frame shown in FIG. 12. The NDPA frame shown in FIG. 26 is created by rewriting a subtype indication bit of a frame control field. The NDPA frame shown in FIG. 26 may be referred to as an FDA sensing frame (FDA sensing frame). A STA info indication bit of the NDPA frame in FIG. 26 includes 8 octets, and the STA info field of the NDPA frame shown in FIG. 12 includes 4 octets. When a frequency offset is indicated, the NDPA frame in FIG. 26 can mitigate a case in which a quantity of bits of a STA info subfield is insufficient.

FIG. 27 is a schematic diagram 1 of a frame control field according to an embodiment of this application.

**Table 4**

| Value of a subtype field | Frame type |
|---|---|
| 0 | Reserved |
| 1 | FDA NDP announcement |
| 2 | Trigger |
| 3 | Reserved |
| 4 | Beamforming report poll |
| 5 | VHT/HE NDP announcement |
| 6 | Control frame extension |
| 7 | Control wrapper |
| 8 | Block ack request (BlockAckReq) |
| 9 | Block ack (BlockAck) |
| ... | ... |

With reference to FIG. 27, a previous type field of the subtype field is set to 01, indicating a control frame. The subtype field may be set to 1, indicating that a parameter included in a first message is a frequency diverse array FDA parameter. A correspondence between a value of the subtype field and the frame type is shown in Table 4.

It should be noted that the STA info field of the NDPA frame shown in FIG. 26 may alternatively be implemented in the specific implementations recorded in manner 1, manner 2, manner 3, and manner 4. Details are not described again in this application.

S 1102: A first device sends a first sensing waveform to a second device. Correspondingly, the second device receives the first sensing waveform from the first device.

For example, the first sensing waveform is used to sense a target object in an environment.

S1 103: The second device senses the target object based on the first message and the first sensing waveform to obtain sensing feedback information.

In a possible design solution, the wireless local area network sensing method according to this embodiment of this application may further include: The second device sends the sensing feedback information to the first device. Correspondingly, the first device receives the sensing feedback information from the second device.

For example, the second device may send the sensing feedback information to the first device by using a sensing feedback (sensing feedback) frame.

Optionally, the first device may send acknowledgment information such as an ack frame to the second device to end a sensing feedback process.

In a possible design solution, the wireless local area network sensing method according to this embodiment of this application may further include the following step 1 and step 2.

Step 1: The second device sends a first request message to the first device. Correspondingly, the first device receives the first request message from the second device.

Optionally, the first request message may be used to request to sense the target object.

For example, the first request message may include a sensing request (sensing request) frame, requesting to start a sensing process.

Step 2: The first device sends a first acknowledgement message to the second device. Correspondingly, the second device receives the first acknowledgement message from the first device.

Optionally, the first acknowledgement message may be used to confirm that the target object is sensed.

For example, the first acknowledgement message may include an ack frame to end a sensing negotiation phase.

In this way, the foregoing step 1 and step 2 may be performed before S1101 to perform sensing after the sensing negotiation phase is completed.

Based on the wireless local area network sensing method according to the first aspect, the first device sends, to the second device, the first message indicating at least one parameter corresponding to the first sensing waveform, where the first sensing waveform is used to sense the target object in the environment. The first message carries a difference between frequencies of carriers corresponding to two adjacent antennas of a plurality of antennas of the first device, and the first sensing waveform is sent to the second device. In this way, the second device receives the first sensing waveform from the first device, and senses the target object based on the first message and the first sensing waveform to obtain the sensing feedback information. In this way, frequencies of carriers corresponding to the antennas are different, so that a specific spatial location can be focused on, which is not limited to a given angle unit, and a sensing capability can be improved.

For example, FIG. 28 is a schematic flowchart 2 of a wireless local area network sensing method according to an embodiment of this application. The wireless local area network sensing method may be applicable to communication between the first device and the second device shown in FIG. 10. An example in which the first device is an AP and the second device is a STA is used to describe an application scenario of a downlink single-beam with a uniform frequency offset in detail.

As shown in FIG. 28, the wireless local area network sensing method includes the following steps.

S2801: The AP sends a first message to the STA. Correspondingly, the STA receives the first message from the AP.

For a specific implementation of the first message, refer to S1101. Details are not described herein again.

FIG. 29 is a schematic application diagram 1 of a wireless local area network sensing method according to an embodiment of this application. With reference to FIG. 29, the first message may include a sensing NDPA frame shown in FIG. 29.

For example, the AP may send the NDPA frame shown in FIG. 12 or FIG. 26 to the STA, and the foregoing manner 1, manner 2, manner 3, or manner 4 may be used to set values of indication bits of a STA info field. In this way, a beam is the single beam with the uniform frequency offset. Details are not described herein again.

S2802: The AP sends a first sensing waveform to the STA. Correspondingly, the STAreceives the first sensing waveform from the AP.

With reference to FIG. 29, the first sensing waveform may include a sensing NDP frame shown in FIG. 29. In FIG. 29, a frequency offset between an antenna A0 and an antenna A7 is a uniform frequency offset.

S2803: The STA senses a target object based on the first message and the first sensing waveform to obtain sensing feedback information.

For a specific implementation of the S2803, refer to S1103. Details are not described herein again.

In this way, the STA may obtain beam direction weight information of a transmit beam by using the first message. The beam direction weight information may include a correspondence between a subcarrier and an antenna. A STA at any location can analyze a transmit signal echo by using the beam direction weight information. By applying different frequency offsets to different antennas, a specific spatial location can be focused on, and different spatial locations are automatically scanned.

For example, FIG. 30 is a schematic flowchart 3 of a wireless local area network sensing method according to an embodiment of this application. The wireless local area network sensing method may be applicable to communication between the first device and the second device shown in FIG. 10. An example in which the first device is an AP and the second device is a STA is used to describe an application scenario of a downlink single-beam with a non-uniform frequency offset in detail.

As shown in FIG. 30, the wireless local area network sensing method includes the following steps.

S3001: The AP sends a first message to the STA. Correspondingly, the STA receives the first message from the AP.

For a specific implementation of the first message, refer to S1101. Details are not described herein again.

FIG. 31 is a schematic application diagram 2 of a wireless local area network sensing method according to an embodiment of this application. With reference to FIG. 31, the first message may include a sensing NDPA frame shown in FIG. 31.

For example, the AP may send the NDPA frame shown in FIG. 12 or FIG. 26 to the STA, and the foregoing manner 1, manner 2, manner 3, or manner 4 may be used to set values of indication bits of a STA info field. In this way, a beam is the single beam with the non-uniform frequency offset. Details are not described herein again.

S3002: The AP sends a first sensing waveform to the STA. Correspondingly, the STAreceives the first sensing waveform from the AP.

With reference to FIG. 31, the first sensing waveform may include a sensing NDP frame shown in FIG. 31. In FIG. 31, a frequency offset between an antenna A0 and an antenna A7 is a non-uniform frequency offset.

S3003: The STA senses a target object based on the first message and the first sensing waveform to obtain sensing feedback information.

For a specific implementation of the S3003, refer to S1103. Details are not described herein again.

In this way, the STA may obtain beam direction weight information of a transmit beam by using the first message. A STA at any location can analyze a transmit signal echo by using the beam direction weight information. A correspondence between a frequency offset and an antenna is changed to make the frequency offset non-uniform, so that a pattern with different properties can be implemented, and a location of a main lobe of an array can be adjusted. In this way, accurate sensing of different areas is implemented.

For example, FIG. 32 is a schematic flowchart 3 of a wireless local area network sensing method according to an embodiment of this application. The wireless local area network sensing method may be applicable to communication between the first device and the second device shown in FIG. 10. An example in which the first device is an AP and the second device is a STA is used to describe a downlink multi-beam application scenario in detail.

As shown in FIG. 32, the wireless local area network sensing method includes the following steps.

S3201: The AP sends a first message to the STA. Correspondingly, the STA receives the first message from the AP.

For a specific implementation of the first message, refer to S1101. Details are not described herein again.

FIG. 33 is a schematic application diagram 3 of a wireless local area network sensing method according to an embodiment of this application. With reference to FIG. 33, the first message may include a sensing NDPA frame shown in FIG. 33.

For example, the AP may send the NDPA frame shown in FIG. 12 or FIG. 26 to the STA, and the foregoing manner 1, manner 2, manner 3, or manner 4 may be used to set values of indication bits of a STA info field. In this way, beams are a plurality of beams. Details are not described herein again.

S3202: The AP sends a first sensing waveform to the STA. Correspondingly, the STAreceives the first sensing waveform from the AP.

With reference to FIG. 33, the first sensing waveform may include a sensing NDP frame shown in FIG. 33.

S3203: The STA senses a target object based on the first message and the first sensing waveform to obtain sensing feedback information.

For a specific implementation of the S3203, refer to S1103. Details are not described herein again.

In this way, the STA may obtain beam direction weight information of a plurality of consecutive transmit beams by using the first message. Sensing capabilities in different modes can be implemented by analyzing echo information of different beams, a distance periodicity problem of an FDA technology can be resolved, and sensing precision and a sensing capability can be improved. Different antennas transmit different subcarriers, and sensing capabilities that are of different sensing modes and that are for different areas are implemented by simultaneously indicating a plurality of waveforms.

FIG. 34 is a schematic flowchart 2 of a wireless local area network sensing method according to an embodiment of this application.

The wireless local area network sensing method may be applicable to communication between the first device and the second device shown in FIG. 10. The following describes an uplink application scenario in detail based on FIG. 34.

As shown in FIG. 34, the wireless local area network sensing method includes the following steps.

S3401: The first device sends a second message to the second device. Correspondingly, the second device receives the second message from the first device.

Correspondingly, the second message indicates at least one parameter corresponding to a second sensing waveform, and the second sensing waveform is used to sense a target object in an environment.

In some embodiments, the second message may include a trigger (trigger) frame, and the second sensing waveform may include a sensing null data packet (sensing null data packet, sensing NDP) frame.

In this way, the first device sends the trigger frame to the second device to indicate parameters of the to-be-received sensing NDP frame, so that second devices send NDP frames to the first device based on received trigger frames, and the first device performs measurement based on the NDP frame.

For example, the second message carries a difference between frequencies of carriers corresponding to two adjacent antennas of a plurality of antennas of the second device.

In some embodiments, the second message may include one or more of the following: sixth indication information, seventh indication information, eighth indication information, and ninth indication information.

For example, the second message may include a trigger dependent common info field of a common info field of the trigger frame.

Optionally, the sixth indication information may indicate quantity information of beams corresponding to the plurality of antennas of the second device.

For example, the sixth indication information may include a multi-beam end indication bit of the trigger frame or a beam indication bit of the trigger frame. In this way, the sixth indication information may indicate a specific quantity of beams corresponding to a plurality of antennas of a first beam, a single beam, a plurality of beams, or the like.

For example, the sixth indication information may indicate whether a current beam is a last beam corresponding to the plurality of antennas of the first device. For example, the sixth indication information may include the multi-beam end indication bit of the trigger dependent common info field of the trigger frame.

For another example, the sixth indication information may indicate a quantity of beams corresponding to the plurality of antennas of the first device. For example, the sixth indication information may include the beam indication bit of the trigger dependent common info field of the trigger frame.

It should be noted that the foregoing trigger frame may be referred to as a sensing trigger frame. Expressed meanings are consistent when differences are not emphasized. The foregoing trigger dependent common info field may be referred to as a trigger dependent common info subfield. Expressed meanings are consistent when differences are not emphasized.

Optionally, the seventh indication information may indicate whether all differences between frequencies of carriers corresponding to the two adjacent antennas corresponding to the current beam are equal. In this way, the seventh indication information may indicate whether a frequency offset between the antennas is a uniform frequency offset.

For example, the seventh indication information may include a uniform offset indication bit of the trigger dependent common info field of the trigger frame.

Optionally, the eighth indication information may indicate the difference between the frequencies of the carriers corresponding to the two adjacent antennas. In this way, the eighth indication information may indicate a frequency offset value.

For example, the eighth indication information may include a frequency offset indication bit of the trigger dependent common info field of the trigger frame.

Optionally, the ninth indication information may indicate quantity information of the eighth indication information corresponding to the current beam. For example, the ninth indication information may include a beam end indication bit of the trigger dependent common info field of the trigger frame or an antenna indication bit of the trigger dependent common info field of the trigger frame.

For example, the eighth indication information and the ninth indication information may belong to a second field of the second message, the ninth indication information indicates whether a next second field of the current second field includes the eighth indication information corresponding to the current beam, and the second field may be the trigger dependent common info field.

For another example, the ninth indication information may indicate a quantity of pieces of the eighth indication information corresponding to the current beam. For example, the ninth indication information may include an antenna field of the trigger dependent common info field of the trigger frame. When the antenna field is 1, it indicates that the current beam corresponds to one frequency offset value, and there are two antennas. When the antenna field is 2, it indicates that the current beam corresponds to two frequency offset values, and there are three antennas. This is not listed one by one in this application.

For another example, the ninth indication information may indicate the quantity of pieces of the eighth indication information corresponding to the current beam, and the ninth indication information may further indicate whether all the differences between the frequencies of the carriers corresponding to the two adjacent antennas corresponding to the current beam are equal. For example, when the antenna field is 0, it may indicate that the frequency offset between the antennas is the uniform frequency offset, and there may be two or more antennas.

In some embodiments, the second message may include tenth indication information, and the tenth indication information may indicate that the parameter included in the second message is a frequency diverse array (frequency diverse array, FDA) parameter.

For example, the tenth indication information may include a trigger type field of the common info field of the trigger frame, and the trigger type field may indicate that the trigger frame is an indication frame of the FDA parameter.

FIG. 35 is a schematic diagram 1 of a frame format of a trigger frame according to an embodiment of this application.

For example, tenth indication information may include the trigger type field of the common info field of the trigger frame shown in FIG. 35. As shown in Table 5, when a value of trigger type is set to 9, it indicates that a parameter included in the trigger frame is a frequency diverse array FDA parameter.

FIG. 36 is a schematic diagram 1 of a common info field according to an embodiment of this application.

For example, a format of the common info field of the trigger frame shown in FIG. 35 may be shown in FIG. 36. The common info field includes a trigger dependent common info field, and the trigger dependent common info field may indicate an FDA parameter.

FIG. 37 is a schematic diagram 1 of a trigger dependent common info field according to an embodiment of this application.

In some embodiments, the trigger dependent common info field may include the following indication bits: a beam number subfield, a uniform indication subfield, an offset number subfield, and a frequency offset value subfield. The trigger dependent common info field is similar to a STA info field of an NDPA frame.

It should be noted that the beam number subfield may be referred to as a beam number. Expressed meanings are consistent when differences are not emphasized. The foregoing uniform indication subfield may be referred to as a uniform indication. Expressed meanings are consistent when differences are not emphasized. The foregoing offset number subfield may be referred to as an offset number. Expressed meanings are consistent when differences are not emphasized. The foregoing frequency offset value subfield may be referred to as a frequency offset value, a frequency offset subfield value, or a frequency offset subfield. Expressed meanings are consistent when differences are not emphasized.

**Table 5**

| Value of a trigger type subarea | Variable of a trigger frame |
|---|---|
| 0 | Basic |
| 1 | Beamforming report poll (BFRP) |
| 2 | MLT-BAR |
| 3 | MU-RTS |
| 4 | Buffer status report poll (BSRP) |
| 5 | GCR MU-BAR |
| 6 | Bandwidth query report poll (BQRP) |
| 7 | NDP feedback report poll (NFRP) |
| 8 | Ranging |
| 9 | WLAN FDA sensing |
| 10-15 | Reserved |

For example, sixth indication information may include the beam number subfield indication bit, and the beam number subfield may indicate quantity information of beams corresponding to a plurality of antennas of a first device. For example, this is implemented in the manner such as an end bit indication or a specific quantity indication.

For example, seventh indication information may include the uniform indication subfield, which may indicate whether all differences between frequencies of carriers corresponding to two adjacent antennas corresponding to a current beam are equal, and indicate whether the current beam has a uniform frequency offset.

For example, eighth indication information may include the frequency offset value subfield, which may indicate a difference between frequencies of carriers corresponding to two adjacent antennas, for example, indicate a specific frequency offset value.

For example, ninth indication information may include the offset number subfield to indicate quantity information of pieces of the eighth indication information corresponding to the current beam. For example, this is implemented in the manner such as the end bit indication or the specific quantity indication.

It should be noted that, in implementation, the subareas shown in FIG. 37 may be combined into one or several large subareas, and a quantity of bits occupied by the subareas may change with a quantity of bits allowed to be used in a corresponding standard.

The following describes the trigger dependent common info field in detail with reference to the following manner 6, manner 7, manner 8, and manner 9.

FIG. 38A and FIG. 38B are a schematic diagram 2 of a trigger dependent common info field according to an embodiment of this application.

A format of the trigger dependent common info field is similar to a format of a STA info field of an NDPA frame. Manner 6 is similar to manner 1, manner 7 is similar to manner 2, manner 8 is similar to manner 3, and manner 9 is similar to manner 4. For details, refer to the following corresponding description.

Manner 6

Different from the STA info subfield field, the trigger dependent common info field is continuous. In a frame structure of manner 6, 18 bits are used as one trigger dependent common info field.

With reference to FIG. 38, sixth indication information may include a multi-beam end indication bit, which indicates whether a current beam is a last beam corresponding to a plurality of antennas of a first device.

For example, when the multi-beam end indication bit is set to 0, it indicates that the current trigger dependent common info field is not a last field indicated by the beam. When the multi-beam end indication bit is set to 1, it indicates that the current field is the last field indicated by the beam. This is not limited in this application.

It should be noted that in this embodiment of this application, the foregoing content represented by setting the indication bit to 0 and the following content represented by setting the indication bit to 1 may be mutually replaced to implement a corresponding function.

For example, seventh indication information may include a uniform offset indication bit, which indicates whether all differences between frequencies of carriers corresponding to two adjacent antennas corresponding to the current beam are equal. In other words, the second indication information may indicate whether a frequency offset between the antennas is a uniform frequency offset. When the frequency offset is the uniform frequency offset, there is only one frequency offset subfield, that is, the trigger dependent common info indication bit includes eight bits.

For example, if the uniform offset indication bit is set to 1, it indicates that the current beam has the uniform frequency offset. Only one frequency offset field of the field indicates a frequency offset value, and a next beam end indication bit should be set to 1. If the uniform offset indication bit is set to 0, it indicates that the current beam has a non-uniform frequency offset, and a plurality of frequency offset fields may need to be read.

For example, eighth indication information may include a frequency offset subfield indication bit, which indicates a difference between frequencies of carriers corresponding to two adjacent antennas. For a specific implementation, refer to the specific implementation of the frequency offset subfield indication bit in the foregoing manner 1. Details are not described herein again.

For example, ninth indication information may include a beam end indication bit, which indicates whether a next trigger dependent common info field of the current trigger dependent common info field includes the eighth indication information corresponding to the current beam. In other words, it may be indicated whether the trigger dependent common info field is a last field used when the current beam indicates the frequency offset value.

For example, when the beam end indication bit is set to 0, it indicates that the current trigger dependent common info field is not the last field indicating using of the beam, and when the beam end indication bit is set to 1, it indicates that the current trigger dependent common info field is the last field indicating using of the current beam.

The following describes in detail a single beam with a uniform frequency offset, a single beam with a non-uniform frequency offset, and a plurality of beams by using the trigger dependent common info field corresponding to manner 6.

FIG. 39 is a schematic diagram 3 of a trigger dependent common info field according to an embodiment of this application.

FIG. 39 is a schematic diagram of a common info field and the trigger dependent common info field used when a beam is a single beam with a uniform frequency offset. A multi-beam end indication bit may be set to 1, indicating that indication information of the beam ends in the trigger dependent common info field, that is, there is only one beam. A uniform offset indication bit may be set to 1, indicating that all frequency differences of carriers corresponding to two adjacent antennas corresponding to the current beam are equal. In other words, a frequency offset between the antennas is the uniform frequency offset. The current trigger dependent common info field includes only one frequency offset subfield indication bit. A beam end indication bit may be set to 1, indicating that the indication information of the current beam ends in the trigger dependent common info field. A frequency offset field indication bit indicates a uniform frequency offset value.

FIG. 40 is a schematic diagram 4 of a trigger dependent common info field according to an embodiment of this application.

FIG. 40 is a schematic diagram of a common info field and the trigger dependent common info field used when a beam is a single beam with a non-uniform frequency offset. Four antennas are used as an example. A multi-beam end indication bit may be set to 0, indicating that there is only one beam. Uniform offset indication bits are set to 0, indicating that the beam has the non-uniform frequency offset. The trigger dependent common info field includes a plurality of frequency offset subfield indication bits. A beam end indication bit may be set to 1, indicating that the current beam ends in the trigger dependent common info field. The frequency offset field indicates a frequency offset value between every two antennas.

FIG. 41 is a schematic diagram 5 of a trigger dependent common info field according to an embodiment of this application.

FIG. 41 is a schematic diagram of a common info field and the trigger dependent common info field used when beams are a plurality of beams. In a multi-beam case, the two single-beam cases in FIG. 39 and FIG. 40 may be combined to form the multi-beam case. A multi-beam end indication bit of a first trigger dependent common info field may be set to 0, and a value of another indication bit remains unchanged, indicating that the trigger dependent common info field shown in FIG. 41 has the plurality of beams. Values of indication bits of a second trigger dependent common info field remain unchanged, and a multi-beam end location 1 in the second trigger dependent common info field indicates that an indication process of the plurality of beams ends.

Manner 7

FIG. 42 is a schematic diagram 6 of a trigger dependent common info field according to an embodiment of this application.

With reference to FIG. 42, sixth indication information may include a beam subfield indication bit, which indicates a quantity of beams, and indicating indication information that is of a total quantity of beams and that is included in a current trigger frame.

For example, when the beam subfield indication bit is set to 00, the current trigger frame includes indication information of one beam in total. When the beam subfield indication bit is set to 01, the current trigger frame includes indication information of two beams in total. When the beam subfield indication bit is set to 10, it indicates that the current trigger frame includes indication information of three beams in total. When the beam subfield indication bit is set to 11, it indicates that the current trigger frame includes indication information of four beams in total. This is not limited in this embodiment of this application.

For example, ninth indication information may include an antenna field, indicating whether a next trigger dependent common info field of the current trigger dependent common info field includes eighth indication information corresponding to a current beam, that is, indicating a quantity of frequency offset subfields corresponding to the current beam.

For example, when an antenna subfield indication bit is set to 0, it indicates a uniform frequency offset, and the current beam corresponds to one frequency offset subfield. When the antenna subfield indication bit is set to 1, it indicates a non-uniform frequency offset, and the current beam corresponds to a plurality of frequency offset subfields.

For example, the eighth indication information may include a frequency offset subfield indication bit, which may indicate a difference between frequencies of carriers corresponding to two adjacent antennas, that is, indicate a frequency offset value between every two antennas. For a specific implementation of the frequency offset subfield indication bit, refer to the specific implementation of the frequency offset subfield indication bit in the foregoing manner 2. Details are not described herein again.

The following describes in detail a single beam with a uniform frequency offset, a single beam with a non-uniform frequency offset, and a plurality of beams by using the trigger dependent common info field corresponding to manner 2.

FIG. 42 is a schematic diagram of a common info field and a trigger dependent common info field used when a beam is a single beam with a uniform frequency offset. A beam subfield indication bit may be set to 00, indicating that there is only one beam. An antenna subfield indication bit may be set to 0, indicating that a frequency offset between antennas is the uniform frequency offset. The trigger dependent common info field includes only one frequency offset subfield indication bit. A frequency offset field indication bit indicates a uniform frequency offset value.

FIG. 43 is a schematic diagram 7 of a trigger dependent common info field according to an embodiment of this application.

FIG. 43 is a schematic diagram of structures of a common info field and the trigger dependent common info field used when a beam is a single beam with a non-uniform frequency offset. Four antennas are used as an example. A beam subfield indication bit may be set to 00, indicating that there is only one beam. An antenna subfield indication bit is set to 3, indicating the uniform frequency offset. The trigger dependent common info field includes three frequency offset subfield indication bits. A frequency offset field indicates a frequency offset value between every two antennas.

FIG. 44 is a schematic diagram 8 of a trigger dependent common info field according to an embodiment of this application.

FIG. 44 is a schematic diagram of a common info field and the trigger dependent common info field used when beams are a plurality of beams. A beam subfield in a first trigger dependent common info field is set to 2, indicating that a quantity of beams is 2. An antenna field of the first trigger dependent common info field is set to 3, indicating that the first trigger dependent common info field includes three frequency offset subfields. An antenna field of a second trigger dependent common info field is set to 1, indicating that the second trigger dependent common info field includes one frequency offset subfield.

Manner 8

FIG. 45 is a schematic diagram 9 of a trigger dependent common info field according to an embodiment of this application.

For example, the uniform offset indication bit and the beam end indication bit in manner 6 may be combined with the beam subfield indication bit in manner 7 to obtain the trigger dependent common info field in manner 8, as shown in FIG. 45.

For example, sixth indication information may include a beam indication bit, which indicates a quantity of beams. For a specific implementation, refer to foregoing manner 7. Details are not described one by one herein again.

For example, seventh indication information may include the uniform offset indication bit, which indicates whether all differences between frequencies of carriers corresponding to two adjacent antennas corresponding to a current beam are equal. In other words, the second indication information may indicate whether a frequency offset between the antennas is a uniform frequency offset. For a specific implementation, refer to foregoing manner 6. Details are not described herein again.

For example, eighth indication information may include a frequency offset subfield indication bit, which indicates a difference between frequencies of carriers corresponding to two adjacent antennas. For a specific implementation, refer to foregoing manner 6. Details are not described herein again.

For example, ninth indication information may include the beam end indication bit, which indicates whether a next trigger dependent common info field of the current trigger dependent common info field includes the eighth indication information corresponding to the current beam. In other words, it may be indicated whether the trigger dependent common info field is a last field used when the current beam indicates a frequency offset value. For a specific implementation, refer to foregoing manner 6. Details are not described herein again.

The following describes a plurality of beams in detail by using the trigger dependent common info field corresponding to manner 8.

FIG. 45 shows a common info field and the trigger dependent common info field used when beams are the plurality of beams. In a multi-beam case, a beam indication bit of a first trigger dependent common info field may be set to 01, indicating that the trigger frame includes two beams. A uniform offset indication bit of the first trigger dependent common info field may be set to 0, indicating that all frequency differences of carriers corresponding to the two adjacent antennas corresponding to the current beam are not equal. A beam end indication bit of the first trigger dependent common info field may be set to 1, indicating that indication information of the current beam ends in the trigger dependent common info field. A frequency offset field indication bit of the first trigger dependent common info field indicates a non-uniform frequency offset value.

A uniform offset indication bit of a second trigger dependent common info field may be set to 1, indicating that all the frequency differences of the carriers corresponding to the two adjacent antennas corresponding to the current beam are equal. In other words, the frequency offset between the antennas is the uniform frequency offset. The current trigger dependent common info field includes only one frequency offset subfield indication bit. Abeam end indication bit of the second trigger dependent common info field may be set to 1, indicating that indication information of the current beam ends in the trigger dependent common info field. A frequency offset field indication bit of the second trigger dependent common info field indicates a uniform frequency offset value.

It should be noted that the trigger dependent common info field corresponding to manner 8 may indicate a single beam with a uniform frequency offset or a single beam with a non-uniform frequency offset. For example, when the trigger dependent common info field includes only the second trigger dependent common info field shown in FIG. 45, the trigger dependent common info field may indicate the single beam with the uniform frequency offset. When the trigger dependent common info field includes only the first trigger dependent common info field shown in FIG. 45, the trigger dependent common info field may indicate the single beam with the non-uniform frequency offset. Details are not described herein again in this embodiment of this application.

Manner 9

FIG. 46 is a schematic diagram 6 of a trigger dependent common info field according to an embodiment of this application.

For example, the multi-beam end indication bit in manner 6 and the antenna indication bit in manner 7 may be combined to obtain the trigger dependent common info field in manner 9, as shown in FIG. 45.

For a specific implementation of the multi-beam end indication bit, refer to manner 6. For a specific implementation of the antenna indication bit, refer to manner 7. Details are not described herein again.

FIG. 46 shows a common info field and the trigger dependent common info field used when beams are a plurality of beams. Details are not described herein again.

S3402: The second device determines the second sensing waveform based on the second message.

For example, the second sensing waveform is used to sense the target object in the environment. For a specific implementation of the second sensing waveform, refer to S3401. Details are not described herein again.

S3403: The second device sends the second sensing waveform to the first device. Correspondingly, the first device receives the second sensing waveform from the second device.

For example, the second sensing waveform is used to sense the target object in the environment.

S3404: The first device senses the target object based on the second sensing waveform to obtain sensing feedback information.

In a possible design solution, the wireless local area network sensing method according to this embodiment of this application may further include the following step 3 and step 4.

Step 3: The first device sends a second request message to the second device. Correspondingly, the second device receives the second request message from the first device.

Optionally, the second request message may be used to request to sense the target object.

For example, the second request message may include a sensing poll (sensing poll) frame to start a sensing polling process.

Step 4: The first device receives a second acknowledgement message from the second device. Correspondingly, the second device sends the second acknowledgement message to the first device.

Optionally, the second acknowledgement message may be used to confirm that the target object is sensed.

For example, the second acknowledgement message may include a permission to send a (clear to send-to-self, CTS-to-Self) frame to end the sensing polling process.

Based on the wireless local area network sensing method according to FIG. 34, the second device receives the second message that is from the first device and that indicates the at least one parameter corresponding to the second sensing waveform, where the second sensing waveform is used to sense the target object in the environment. The second message carries the difference between the frequencies of the carriers corresponding to the two adjacent antennas of the plurality of antennas of the second device. The second device determines the second sensing waveform based on the second message, and sends the second sensing waveform to the first device. The first device senses the target object based on the second sensing waveform to obtain the sensing feedback information. In this way, frequencies of carriers corresponding to the antennas are different, so that a specific spatial location can be focused on, which is not limited to a given angle unit, and a sensing capability can be improved.

For example, FIG. 47 is a schematic flowchart 6 of a wireless local area network sensing method according to an embodiment of this application. The wireless local area network sensing method may be applicable to communication between the first device and the second device shown in FIG. 10. An example in which the first device is an AP and the second device is a STA is used to describe an application scenario of an uplink single-beam with a uniform frequency offset in detail.

As shown in FIG. 47, the wireless local area network sensing method includes the following steps.

S4701: The AP sends a second message to the STA. Correspondingly, the STA receives the second message from the AP.

For a specific implementation of the second message, refer to S3401. Details are not described herein again.

FIG. 48 is a schematic application diagram 4 of a wireless local area network sensing method according to an embodiment of this application. With reference to FIG. 48, the second message may include the sensing trigger frame shown in FIG. 35.

For example, the AP may send the sensing trigger frame shown in FIG. 35 to the STA, and the foregoing manner 6, manner 7, manner 8, or manner 9 may be used to set values of indication bits of a trigger dependent common info field. In this way, a beam is the single-beam with the uniform frequency offset. Details are not described herein again.

S4702: The STA determines a second sensing waveform based on the second message.

For a specific implementation of the S4702, refer to S3402. Details are not described herein again.

S4703: The STA sends the second sensing waveform to the AP. Correspondingly, the AP receives the second sensing waveform from the STA.

For a specific implementation of the S4703, refer to S3403. Details are not described herein again.

S4704: The AP senses a target object based on the second sensing waveform to obtain sensing feedback information.

For a specific implementation of the S4704, refer to S3404. Details are not described herein again.

For example, after obtaining the sensing feedback information, the AP sends a trigger frame to a next STA participating in sensing during negotiation, to perform an uplink measurement process until all STAs participating in measurement are traversed.

FIG. 49 is a schematic flowchart 7 of a wireless local area network sensing method according to an embodiment of this application. The wireless local area network sensing method may be applicable to communication between the first device and the second device shown in FIG. 10. An example in which the first device is an AP and the second device is a STA is used to describe an application scenario of an uplink single-beam with a non-uniform frequency offset in detail.

As shown in FIG. 49, the wireless local area network sensing method includes the following steps.

S4901: The AP sends a second message to the STA. Correspondingly, the STA receives the second message from the AP.

For a specific implementation of the second message, refer to S3401. Details are not described herein again.

FIG. 50 is a schematic application diagram 5 of a wireless local area network sensing method according to an embodiment of this application. With reference to FIG. 50, the second message may include the sensing trigger frame shown in FIG. 35.

For example, the AP may send the sensing trigger frame shown in FIG. 35 to the STA, and the foregoing manner 6, manner 7, manner 8, or manner 9 may be used to set values of indication bits of a trigger dependent common info field. In this way, a beam is the single-beam with the non-uniform frequency offset. Details are not described herein again.

S4902: The STA determines a second sensing waveform based on the second message.

For a specific implementation of the S4902, refer to S3402. Details are not described herein again.

S4903: The STA sends the second sensing waveform to the AP. Correspondingly, the AP receives the second sensing waveform from the STA.

For a specific implementation of the S4903, refer to S3403. Details are not described herein again.

S4904: The AP senses a target obj ect based on the second sensing waveform to obtain sensing feedback information.

For a specific implementation of the S4904, refer to S3404. Details are not described herein again.

For example, after obtaining the sensing feedback information, the AP sends a trigger frame to a next STA participating in sensing during negotiation, to perform an uplink measurement process until all STAs participating in measurement are traversed.

FIG. 51 is a schematic flowchart 8 of a wireless local area network sensing method according to an embodiment of this application. The wireless local area network sensing method may be applicable to communication between the first device and the second device shown in FIG. 10. An example in which the first device is an AP and the second device is a STA is used to describe an uplink multi-beam application scenario in detail.

As shown in FIG. 51, the wireless local area network sensing method includes the following steps.

S5101: The AP sends a second message to the STA. Correspondingly, the STA receives the second message from the AP.

For a specific implementation of the second message, refer to S3401. Details are not described herein again.

FIG. 52 is a schematic application diagram 6 of a wireless local area network sensing method according to an embodiment of this application. With reference to FIG. 52, the second message may include the sensing trigger frame shown in FIG. 35.

For example, the AP may send the sensing trigger frame shown in FIG. 35 to the STA, and the foregoing manner 6, manner 7, manner 8, or manner 9 may be used to set values of indication bits of a trigger dependent common info field. In this way, beams are a plurality of beams. Details are not described herein again.

S5102: The STA determines a second sensing waveform based on the second message.

For a specific implementation of the S5102, refer to S3402. Details are not described herein again.

S5103: The STA sends the second sensing waveform to the AP. Correspondingly, the AP receives the second sensing waveform from the STA.

For a specific implementation of the S5103, refer to S3403. Details are not described herein again.

S5104: The AP senses a target object based on the second sensing waveform to obtain sensing feedback information.

For a specific implementation of the S5104, refer to S3404. Details are not described herein again.

For example, after obtaining the sensing feedback information, the AP sends a trigger frame to a next STA participating in sensing during negotiation, to perform an uplink measurement process until all STAs participating in measurement are traversed.

The foregoing describes in detail the wireless local area network sensing methods according to embodiments of this application with reference to FIG. 3 to FIG. 52. The following describes in detail communications apparatuses provided in embodiments of this application with reference to FIG. 53 to FIG. 56.

For example, FIG. 53 is a schematic diagram 1 of a structure of a communications apparatus according to an embodiment of this application.

In a possible implementation, the communications apparatus 5300 may be a first device or a second device, and can implement the method on the first device side or the method on the second device side in the method embodiment shown in FIG. 11, FIG. 28, FIG. 30, FIG. 32, FIG. 34, FIG. 47, FIG. 49, or FIG. 51. Alternatively, the communications apparatus 5300 may be an apparatus that can support the first device or the second device to implement the method. The communications apparatus 5300 may be disposed in the first device or the second device, or may be used in matching with the first device or the second device. The communications apparatus 5300 includes a receive antenna, a full-band filter, and a subband filter. After a sensing waveform passes through the full-band filter and the subband filter, receive matrices formed by the sensing waveform on different subbands of different antennas may be obtained.

For example, FIG. 54 is a schematic diagram 2 of a structure of a communications apparatus according to an embodiment of this application. The communications apparatus may be a first device or a second device, or may be a chip (system) or another component or assembly that may be disposed in a first device or a second device. As shown in FIG. 54, the communications apparatus 5400 may include a processor 5401. Optionally, the communications apparatus 5400 may further include a memory 5402 and/or a transceiver 5403. The processor 5401 is coupled to the memory 5402 and the transceiver 5403, for example, may be connected to the memory 5402 and the transceiver 5403 through a communications bus.

The following specifically describes components of the communications apparatus 5400 with reference to FIG. 54.

The processor 5401 is a control center of the communications apparatus 5400, and may be one processor, or may be a collective term of a plurality of processing elements. For example, the processor 5401 is one or more central processing units (central processing unit, CPU), or may be an application-specific integrated circuit (application-specific integrated circuit, ASIC), or is configured as one or more integrated circuits implementing embodiments of this application, for example, one or more microprocessors (digital signal processors, DSPs) or one or more field programmable gate arrays (field programmable gate array, FPGAs).

Optionally, the processor 5401 may perform various functions of the communications apparatus 5400 by running or executing a software program stored in the memory 5402 and invoking data stored in the memory 5402.

In a specific implementation, in an embodiment, the processor 5401 may include one or more CPUs, such as a CPU 0 and a CPU 1 shown in FIG. 54.

In a specific implementation, in an embodiment, the communications apparatus 5400 may alternatively include a plurality of processors, such as the processor 5401 and a processor 5404 shown in FIG. 54. Each of the processors may be a single-core processor (single-CPU) or a multicore processor (multi-CPU). The processor herein may be one or more devices, circuits, and/or processing cores configured to process data (for example, computer program instructions).

The memory 5402 is configured to store the software program for executing the solutions in this application, and the processor 5401 controls execution. For a specific implementation, refer to the foregoing method embodiments. Details are not described herein again.

Optionally, the memory 5402 may be a read-only memory (read-only memory, ROM) or another type of static storage device that may store static information and instructions, or a random access memory (random access memory, RAM) or another type of dynamic storage device that may store information and instructions, or may be an electrically erasable programmable read-only memory (electrically erasable programmable read-only memory, EEPROM), a compact disc read-only memory (compact disc read-only memory, CD-ROM), another optical disc storage medium, optical disc storage medium (including a compact disc, a laser disc, an optical disc, a digital versatile disc, a Blu-ray disc, or the like), or magnetic disc storage medium, another magnetic storage device, or any other medium that can carry or store expected program code in a form of instructions or a data structure and that can be accessed by a computer, but is not limited thereto. The memory 5402 may be integrated with the processor 5401; or may exist independently, and is coupled to the processor 5401 through an input/output port (not shown in FIG. 54) of the communications apparatus 5400. This is not specifically limited in this embodiment of this application.

The transceiver 5403 is configured to communicate with another communications apparatus. For example, the communications apparatus 5400 is the first device, and the transceiver 5403 may be configured to communicate with the second device or communicate with another second device. For another example, the communications apparatus 5400 is the second device, and the transceiver 5403 may be configured to communicate with the first device.

Optionally, the transceiver 5403 may include a receiver and a transmitter (not separately shown in FIG. 54). The receiver is configured to implement a receiving function, and the transmitter is configured to implement a sending function.

Optionally, the transceiver 5403 may be integrated with the processor 5401; or may exist independently, and is coupled to the processor 5401 through the input/output port (not shown in FIG. 54) of the communications apparatus 5400. This is not specifically limited in this embodiment of this application.

It should be noted that, the structure of the communications apparatus 5400 shown in FIG. 54 does not constitute a limitation on the communications apparatus. An actual communications apparatus may include more or fewer components than those shown in the figure, combine some components, or have different component arrangement.

FIG. 55 is a schematic diagram 3 of a structure of a communications apparatus according to an embodiment of this application.

In a possible implementation, the communications apparatus 5500 may be a first device or a second device, and can implement the method on the first device side or the method on the second device side in the method embodiment shown in FIG. 11, FIG. 28, FIG. 30, FIG. 32, FIG. 34, FIG. 47, FIG. 49, or FIG. 51. Alternatively, the communications apparatus 5500 may be an apparatus, for example, a chip system, that can support the first device or the second device to implement the method. The communications apparatus 5500 may be disposed in the first device or the second device, or may be used in matching with the first device or the second device.

As shown in FIG. 55, the communications apparatus 5500 includes a RAM, a ROM, and a CPU. Optionally, the communications apparatus 5500 may further include a physical layer (physical layer, PHY) and a media access control (media access control, MAC) layer.

FIG. 56 is a schematic diagram 4 of a structure of a communications apparatus according to an embodiment of this application.

In a possible implementation, the communications apparatus 5600 may be a first device or a second device, and can implement the method on the first device side or the method on the second device side in the method embodiment shown in FIG. 11, FIG. 28, FIG. 30, FIG. 32, FIG. 34, FIG. 47, FIG. 49, or FIG. 51. Alternatively, the communications apparatus 5600 may be an apparatus, for example, a chip system, that can support the first device or the second device to implement the method. The communications apparatus 5600 may be disposed in the first device or the second device, or may be used in matching with the first device or the second device.

The communications apparatus 5600 may be a hardware structure, a software module, or a combination of a hardware structure and a software module. The communications apparatus 5600 may be implemented by the chip system. In this embodiment of this application, the chip system may include a chip, or may include a chip and another discrete component. The communications apparatus 5600 includes a processing module 5610 and a communications module 5620. The processing module 5610 may generate a to-be-sent signal, and may send the signal by using the communications module 5620. The processing module 5610 may receive a signal by using the communications module 5620, and process the received signal. The processing module 5610 is coupled to the communications module 5620.

The coupling in this embodiment of this application may be an indirect coupling or connection between apparatuses, units, or modules in an electrical form, a mechanical form, or another form, and is used for information exchange between the apparatuses, the units, or the modules. The coupling may be a wired connection or a wireless connection.

In this embodiment of this application, the communications module may be a circuit, a module, a bus, an interface, a transceiver, a pin, or another apparatus that can implement a transceiver function. This is not limited in this embodiment of this application.

An embodiment of this application provides a communications system. The communications system includes the foregoing first device and one or more second devices.

An embodiment of this application provides a chip system. The chip system includes a processor and an input/output port. The processor is configured to implement a processing function in the wireless local area network sensing method according to embodiments of this application. The input/output port is configured for receiving and sending functions in the wireless local area network sensing method according to embodiments of this application.

In a possible design, the chip system further includes a memory. The memory is configured to store program instructions and data for implementing a function in the wireless local area network sensing method according to embodiments of this application.

The chip system may include a chip, or may include a chip and another discrete component.

An embodiment of this application provides a computer-readable storage medium. The computer-readable storage medium includes a computer program or instructions. When the computer program or the instructions are run on a computer, the computer is enabled to perform the wireless local area network sensing method according to embodiments of this application.

An embodiment of this application provides a computer program product. The computer program product includes a computer program or instructions. When the computer program or the instructions are run on a computer, the computer is enabled to perform the wireless local area network sensing method according to embodiments of this application.

It should be understood that in embodiments of this application, the processor may be a central processing unit (central processing unit, CPU). The processor may alternatively be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. By way of example but not limitation, random access memories (random access memory, RAM) in a plurality of forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware (for example, circuit), firmware, or any combination thereof. When software is used to implement embodiments, the foregoing embodiments may be implemented completely or partially in a form of a computer program product. The computer program product includes one or more computer instructions or computer programs. When the program instructions or the computer programs are loaded and executed on the computer, the procedures or functions according to embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid state disk.

It should be understood that the term "and/or" in this specification describes only an association relationship between associated objects, and indicates that three relationships may exist. For example, A and/or B may indicate the following three cases: Only A exists, both A and B exist, and only B exists, where A and B may be singular or plural. In addition, the character "/" in this specification usually indicates an "or" relationship between associated objects, or may indicate an "and/or" relationship. A specific meaning depends on the context.

In this application, "at least one" means one or more, and "a plurality of" means two or more. "At least one of the following items (pieces)" or a similar expression thereof refers to any combination of these items, including a single item (piece) or any combination of a plurality of items (pieces). For example, at least one item (piece) of a, b, or c may indicate a, b, c, a and b, a and c, b and c, or a, b, and c, where a, b, and c may be singular or plural.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed systems, apparatuses, and methods may be implemented in other manners. For example, the described apparatus embodiments are merely examples. For example, division into units is merely logical function division and may be other division in an actual implementation. For example, a plurality of units or components may be combined or integrated into another system, or some features may be ignored or not performed. In addition, the displayed or discussed mutual couplings or direct couplings or communications connections may be implemented through some interfaces. The indirect couplings or communications connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on an actual requirement to achieve the objectives of the solutions of embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium, for example, a USB flash drive, a removable hard disk, a read-only memory (read-only memory, ROM), a random access memory (random access memory, RAM), a magnetic disk, an optical disc, or the like that can store program code.

The foregoing description is merely a specific implementation of this application, but is not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

**1.** A wireless local area network sensing method, comprising:

sending a first message to a second device, wherein the first message indicates at least one parameter corresponding to a first sensing waveform, the first sensing waveform is used to sense a target object in an environment, and the first message carries a difference between frequencies of carriers corresponding to two adjacent antennas of a plurality of antennas of a first device; and
sending the first sensing waveform to the second device.

2. The wireless local area network sensing method according to claim 1, wherein the first message comprises one or more of the following: first indication information, second indication information, third indication information, and fourth indication information; the first indication information indicates quantity information of beams corresponding to the plurality of antennas of the first device; the second indication information indicates whether all differences between frequencies of carriers corresponding to the two adj acent antennas corresponding to a current beam are equal; the third indication information indicates the difference between the frequencies of the carriers corresponding to the two adjacent antennas; and the fourth indication information indicates quantity information of the third indication information corresponding to the current beam.

3. The wireless local area network sensing method according to claim 2, wherein the first indication information indicates whether the current beam is a last beam corresponding to the plurality of antennas of the first device.

4. The wireless local area network sensing method according to claim 2, wherein the first indication information indicates a quantity of beams corresponding to the plurality of antennas of the first device.

5. The wireless local area network sensing method according to any one of claims 2 to 4, wherein the third indication information and the fourth indication information belong to a first field of the first message, and the fourth indication information indicates whether a next first field of the current first field comprises the third indication information corresponding to the current beam.

6. The wireless local area network sensing method according to any one of claims 2 to 4, wherein the fourth indication information indicates a quantity of pieces of the third indication information corresponding to the current beam.

7. The wireless local area network sensing method according to claim 6, wherein the fourth indication information further indicates whether all the differences between the frequencies of the carriers corresponding to the two adjacent antennas corresponding to the current beam are equal.

8. The wireless local area network sensing method according to any one of claims 1 to 7, wherein the first message further comprises fifth indication information, and the fifth indication information indicates that the parameter comprised in the first message is a frequency diverse array FDA parameter.

9. A wireless local area network sensing method, comprising:

receiving a first message from a first device, wherein the first message indicates at least one parameter corresponding to a first sensing waveform, the first sensing waveform is used to sense a target object in an environment, and the first message carries a difference between frequencies of carriers corresponding to two adjacent antennas of a plurality of antennas of the first device;
receiving the first sensing waveform from the first device; and
sensing the target object based on the first message and the first sensing waveform to obtain sensing feedback information.

10. The wireless local area network sensing method according to claim 9, wherein the first message comprises one or more of the following: first indication information, second indication information, third indication information, and fourth indication information; the first indication information indicates quantity information of beams corresponding to the plurality of antennas of the first device; the second indication information indicates whether all differences between frequencies of carriers corresponding to the two adj acent antennas corresponding to a current beam are equal; the third indication information indicates the difference between the frequencies of the carriers corresponding to the two adjacent antennas; and the fourth indication information indicates quantity information of the third indication information corresponding to the current beam.

11. The wireless local area network sensing method according to claim 10, wherein the first indication information indicates whether the current beam is a last beam corresponding to the plurality of antennas of the first device.

**12.** The wireless local area network sensing method according to claim 10, wherein the first indication information indicates a quantity of beams corresponding to the plurality of antennas of the first device.

**13.** The wireless local area network sensing method according to any one of claims 10 to 12, wherein the fourth indication information indicates a quantity of pieces of the third indication information corresponding to the current beam.

**14.** A wireless local area network sensing method, comprising:

sending a second message to a second device, wherein the second message indicates at least one parameter corresponding to a second sensing waveform, the second sensing waveform is used to sense a target object in an environment, and the second message carries a difference between frequencies of carriers corresponding to two adjacent antennas of a plurality of antennas of the second device;
receiving the second sensing waveform from the second device; and
sensing the target object based on the second sensing waveform to obtain sensing feedback information.

**15.** The wireless local area network sensing method according to claim 14, wherein the second message comprises one or more of the following: sixth indication information, seventh indication information, eighth indication information, and ninth indication information; the sixth indication information indicates quantity information of beams corresponding to the plurality of antennas of the second device; the seventh indication information indicates whether all differences between frequencies of carriers corresponding to the two adjacent antennas corresponding to a current beam are equal; the eighth indication information indicates the difference between the frequencies of the carriers corresponding to the two adjacent antennas; and the ninth indication information indicates quantity information of the eighth indication information corresponding to the current beam.

**16.** The wireless local area network sensing method according to claim 15, wherein the sixth indication information indicates whether the current beam is a last beam corresponding to the plurality of antennas of the second device.

**17.** The wireless local area network sensing method according to claim 15, wherein the sixth indication information indicates a quantity of beams corresponding to the plurality of antennas of the second device.

**18.** The wireless local area network sensing method according to any one of claims 15 to 17, wherein the eighth indication information and the ninth indication information belong to a second field of the second message, and the ninth indication information indicates whether a next second field of the current second field comprises the eighth indication information corresponding to the current beam.

**19.** The wireless local area network sensing method according to any one of claims 15 to 17, wherein the ninth indication information indicates a quantity of pieces of the eighth indication information corresponding to the current beam.

**20.** The wireless local area network sensing method according to claim 19, wherein the ninth indication information further indicates whether all the differences between the frequencies of the carriers corresponding to the two adjacent antennas corresponding to the current beam are equal.

**21.** The wireless local area network sensing method according to any one of claims 14 to 20, wherein the second message further comprises tenth indication information, and the tenth indication information indicates that the parameter comprised in the second message is a frequency diverse array FDA parameter.

**22.** A wireless local area network sensing method, comprising:

receiving a second message from a first device, wherein the second message indicates at least one parameter corresponding to a second sensing waveform, the second sensing waveform is used to sense a target object in an environment, and the second message carries a difference between frequencies of carriers corresponding to two adjacent antennas of a plurality of antennas of a second device;
determining the second sensing waveform based on the second message; and
sending the second sensing waveform to the first device.

**23.** The wireless local area network sensing method according to claim 22, wherein the second message comprises one or more of the following: sixth indication information, seventh indication information, eighth indication information, and ninth indication information; the sixth indication information indicates quantity information of beams corresponding to the plurality of antennas of the second device; the seventh indication information indicates whether all differences between frequencies of carriers corresponding to the two adjacent antennas corresponding to a current beam are equal; the eighth indication information indicates the difference between the frequencies of the carriers corresponding to the two adjacent antennas; and the ninth indication information indicates quantity information of the eighth indication information corresponding to the current beam.

**24.** The wireless local area network sensing method according to claim 23, wherein the sixth indication information indicates whether the current beam is a last beam corresponding to the plurality of antennas of the second device.

**25.** The wireless local area network sensing method according to claim 23, wherein the sixth indication information indicates a quantity of beams corresponding to the plurality of antennas of the second device.

**26.** The wireless local area network sensing method according to any one of claims 23 to 25, wherein the ninth indication information indicates a quantity of pieces of the eighth indication information corresponding to the current beam.

**27.** A communications apparatus, comprising a unit or a module configured to perform the method according to any one of claims 1 to 8, claims 9 to 13, claims 14 to 21, or claims 22 to 26.

**28.** A communications apparatus, wherein the communications apparatus comprises a processor, and the processor is coupled to a memory;

the memory is configured to store a computer program; and
the processor is configured to execute the computer program stored in the memory to enable the communications apparatus to perform the wireless local area network sensing method according to any one of claims 1 to 26.

**29.** A computer-readable storage medium, wherein the computer-readable storage medium comprises a computer program or instructions, and when the computer program or the instructions are run on a computer, the computer is enabled to perform the wireless local area network sensing method according to any one of claims 1 to 26.

**30.** A computer program product, wherein the computer program product comprises a computer program or instructions, and when the computer program or the instructions are run on a computer, the computer is enabled to perform the wireless local area network sensing method according to any one of claims 1 to 26.

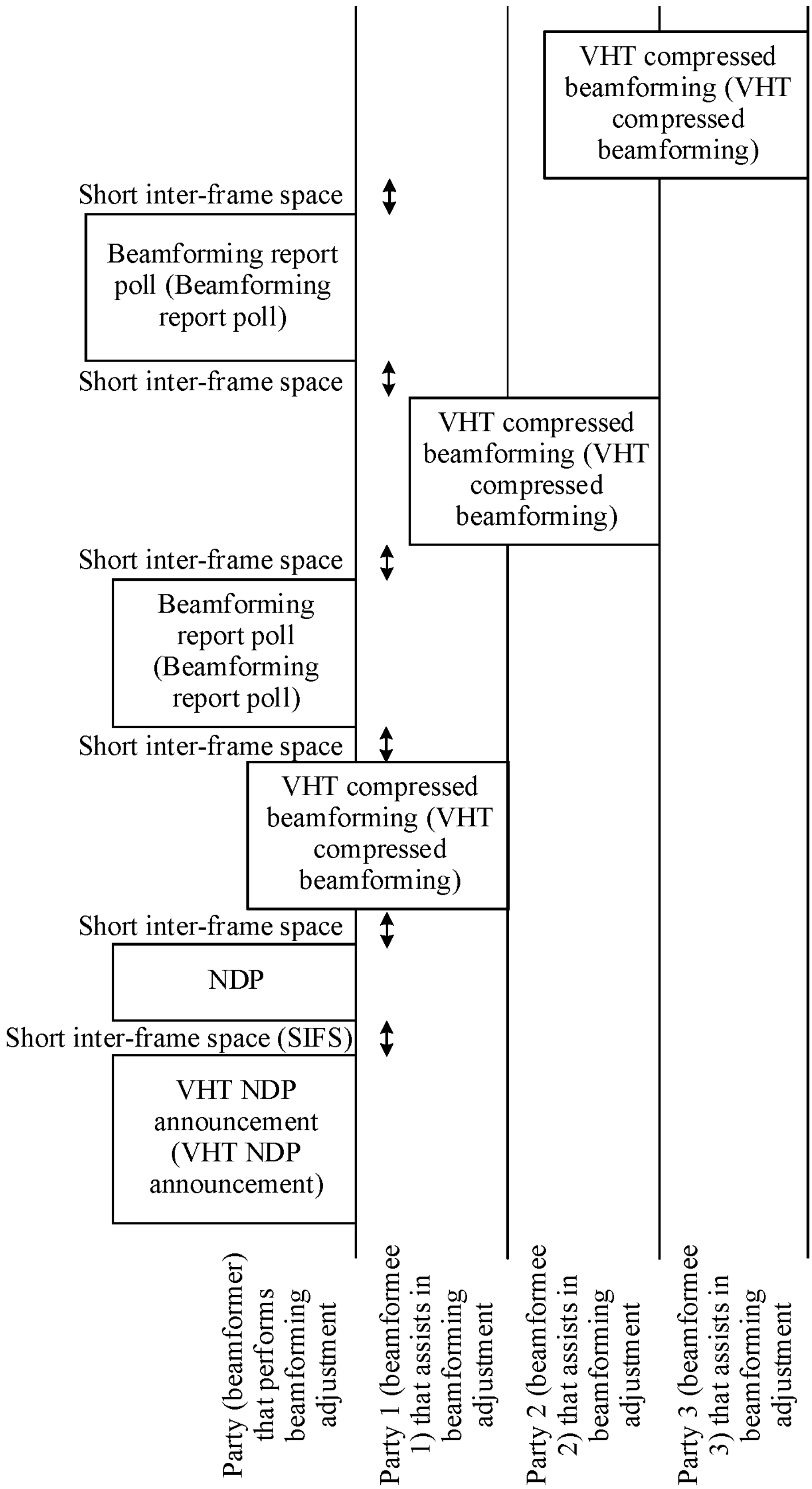
VHT compressed beamforming (VHT compressed beamforming)
Short inter-frame space
Beamforming report poll (Beamforming report poll)
Short inter-frame space
VHT compressed beamforming (VHT compressed beamforming)
Short inter-frame space
Beamforming report poll (Beamforming report poll)
Short inter-frame space
VHT compressed beamforming (VHT compressed beamforming)
Short inter-frame space
NDP
Short inter-frame space (SIFS)
VHT NDP announcement (VHT NDP announcement)
Party (beamformer) that performs beamforming adjustment
Party 1 (beamformee 1) that assists in beamforming adjustment
Party 2 (beamformee 2) that assists in beamforming adjustment
Party 3 (beamformee 3) that assists in beamforming adjustment

FIG. 1

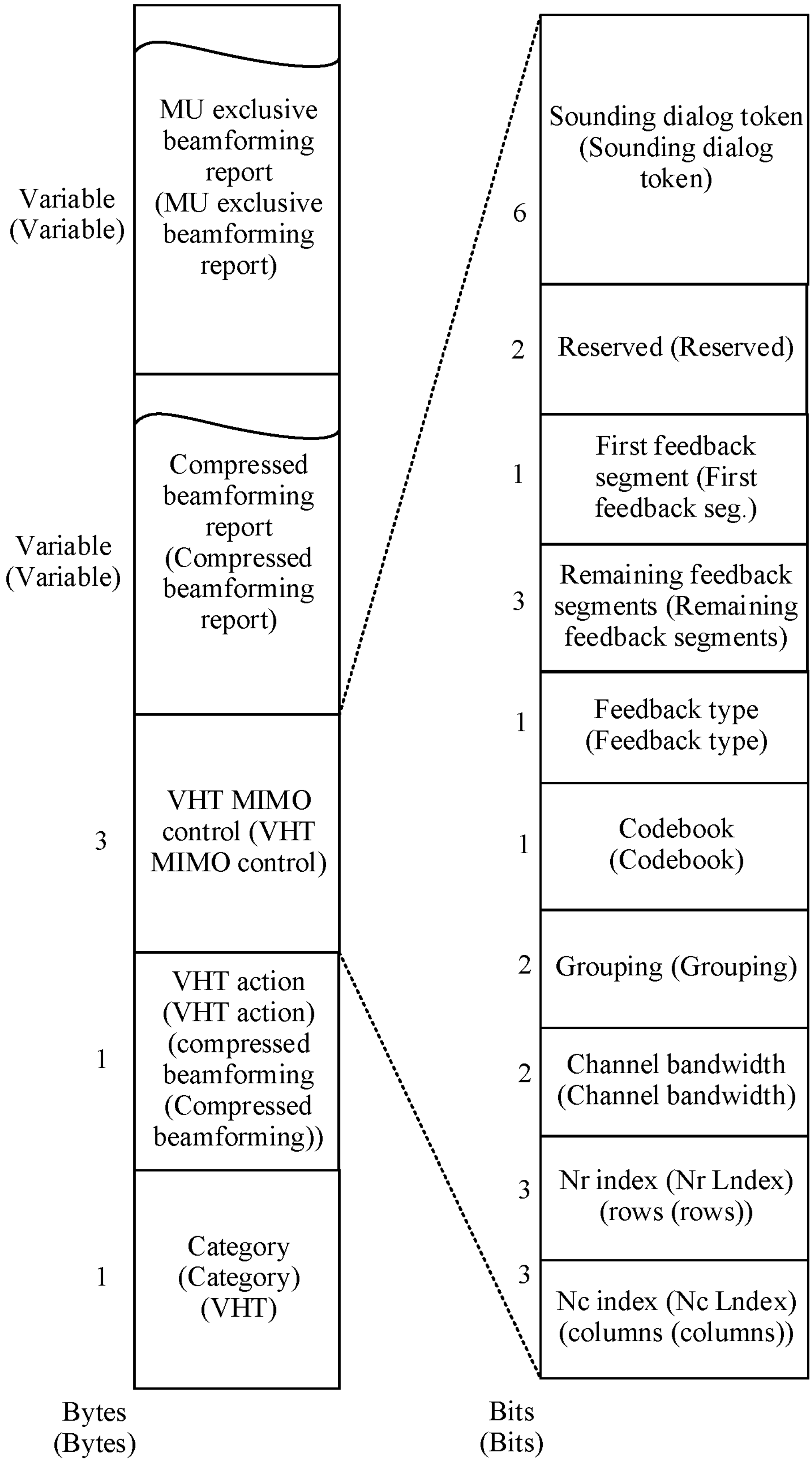
MU exclusive beamforming report (MU exclusive beamforming report)
Variable (Variable)
Compressed beamforming report (Compressed beamforming report)
Variable (Variable)
VHT MIMO control (VHT MIMO control)
3
VHT action (VHT action) (compressed beamforming (Compressed beamforming))
1
Category (Category) (VHT)
1
Bytes (Bytes)
Sounding dialog token (Sounding dialog token)
6
Reserved (Reserved)
2
First feedback segment (First feedback seg.)
1
Remaining feedback segments (Remaining feedback segments)
3
Feedback type (Feedback type)
1
Codebook (Codebook)
1
Grouping (Grouping)
2
Channel bandwidth (Channel bandwidth)
2
Nr index (Nr Lndex) (rows (rows))
3
Nc index (Nc Lndex) (columns (columns))
3
Bits (Bits)

FIG. 2

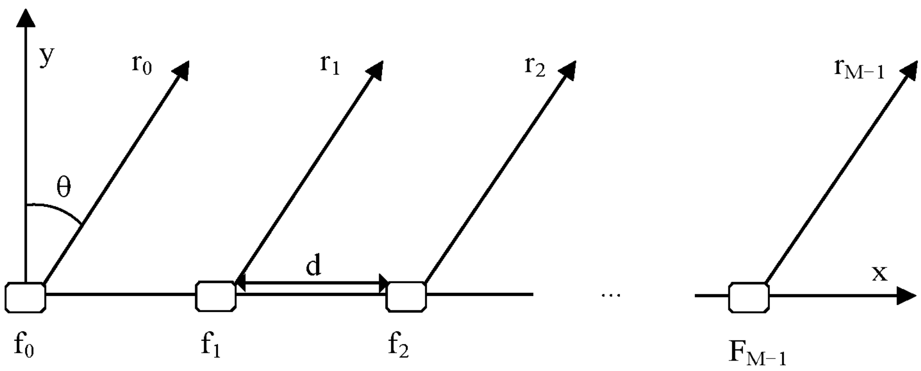
y
r0
r1
r2
rM−1
θ
d
x
...
f0
f1
f2
FM−1

FIG. 3

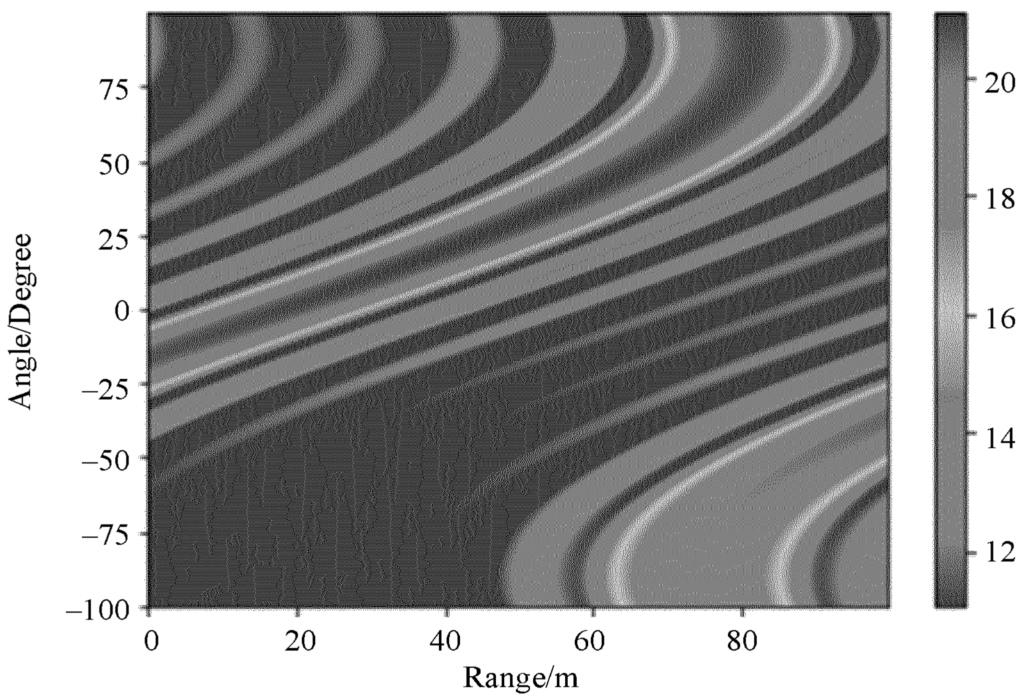
Angle/Degree
75
50
25
0
−25
−50
−75
−100
0
20
40
60
80
Range/m
20
18
16
14
12

FIG. 4

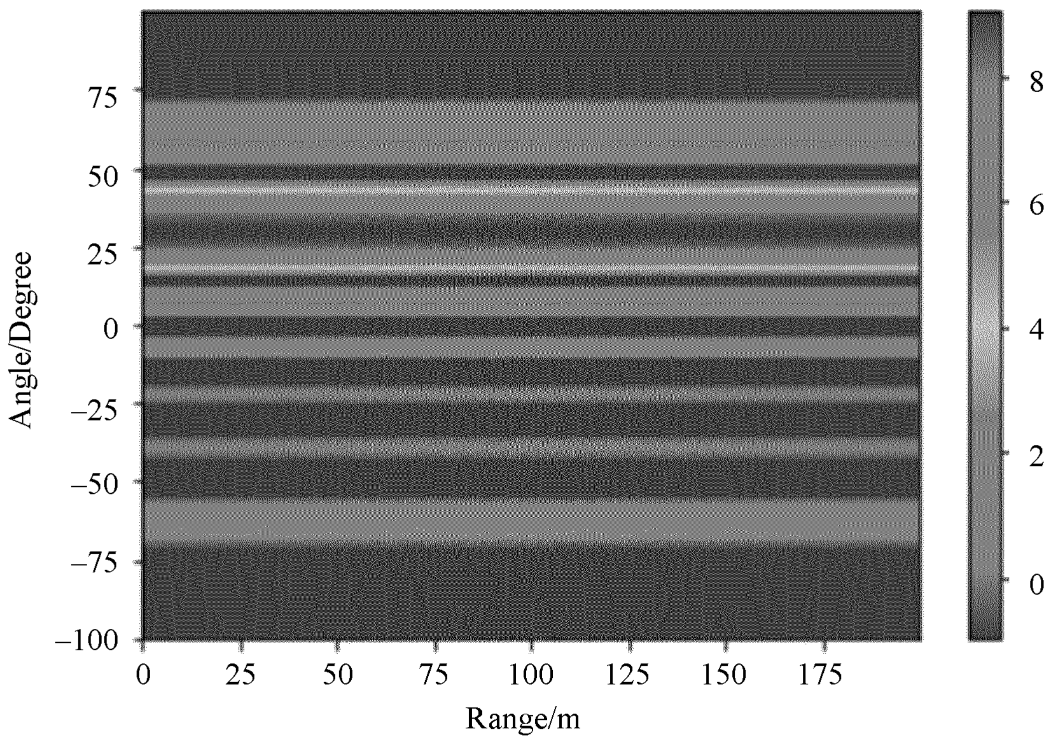
Angle/Degree
75
50
25
0
−25
−50
−75
−100
0
25
50
75
100
125
150
175
Range/m
8
6
4
2
0

FIG. 5

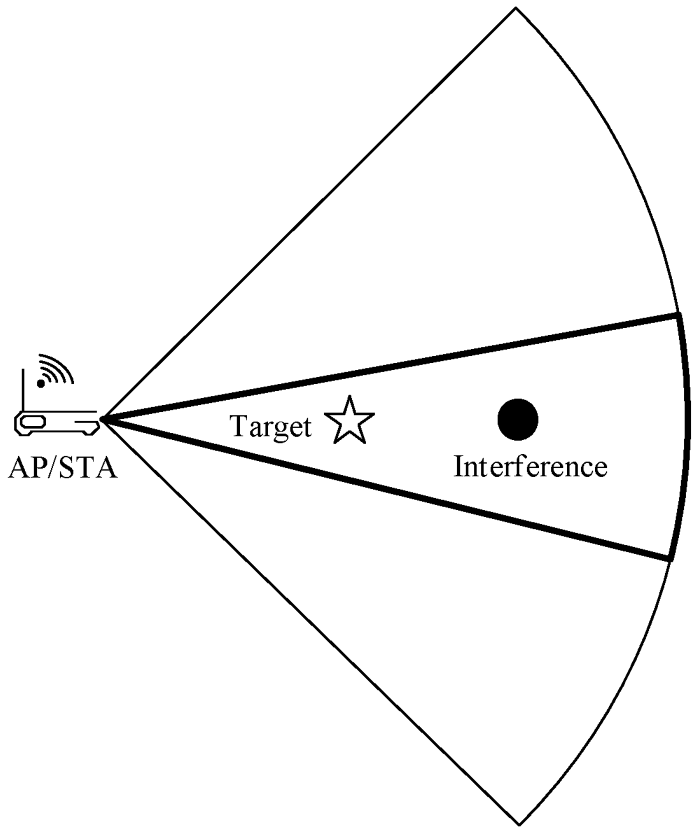
AP/STA
Target
Interference

FIG. 6

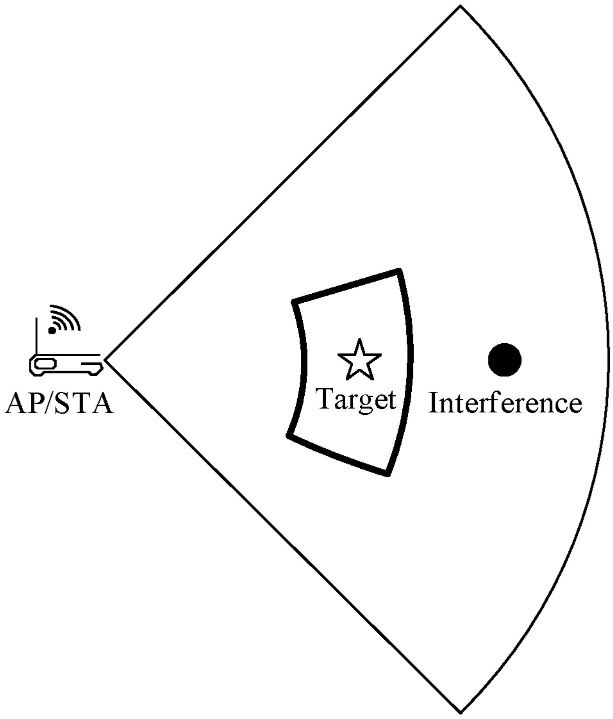
AP/STA
Target
Interference

FIG. 7

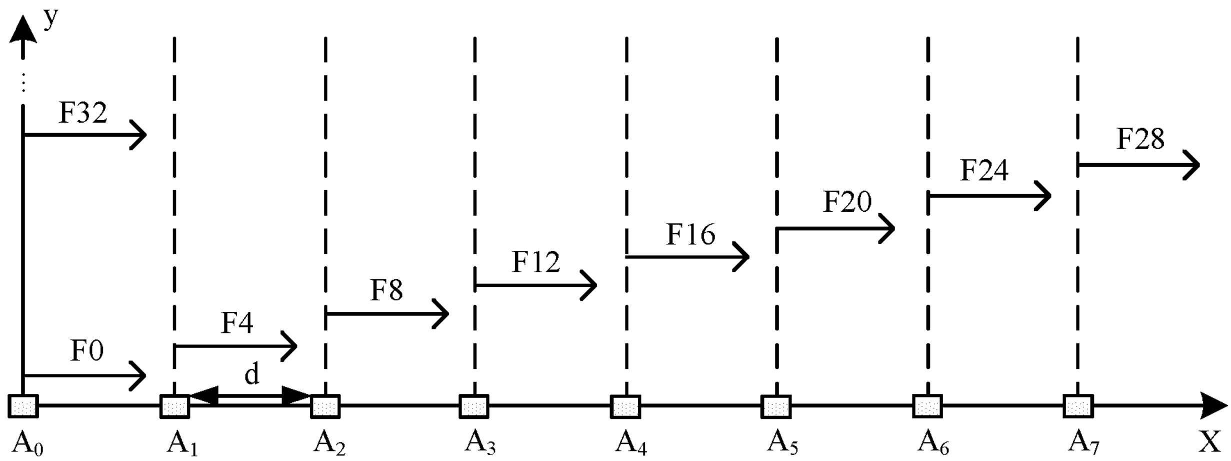
y
F32
F28
F24
F20
F16
F12
F8
F4
F0
d
A0
A1
A2
A3
A4
A5
A6
A7
X

FIG. 8

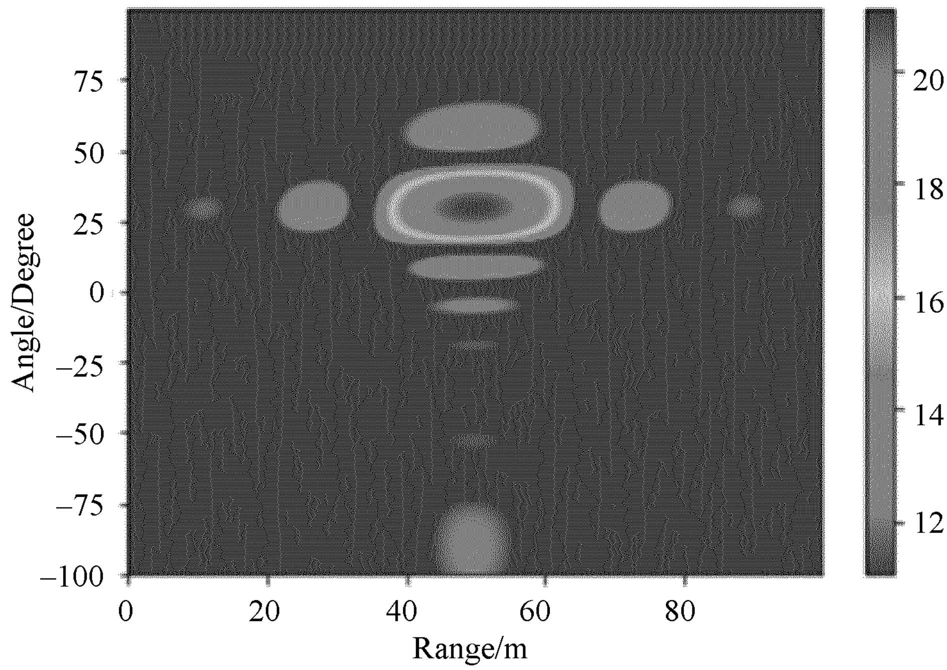
75
50
25
0
−25
−50
−75
−100
Angle/Degree
0
20
40
60
80
Range/m
20
18
16
14
12

FIG. 9

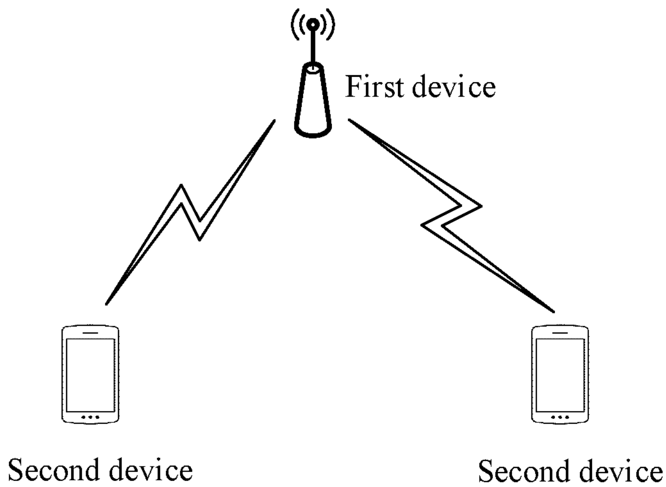
First device
Second device
Second device

FIG. 10

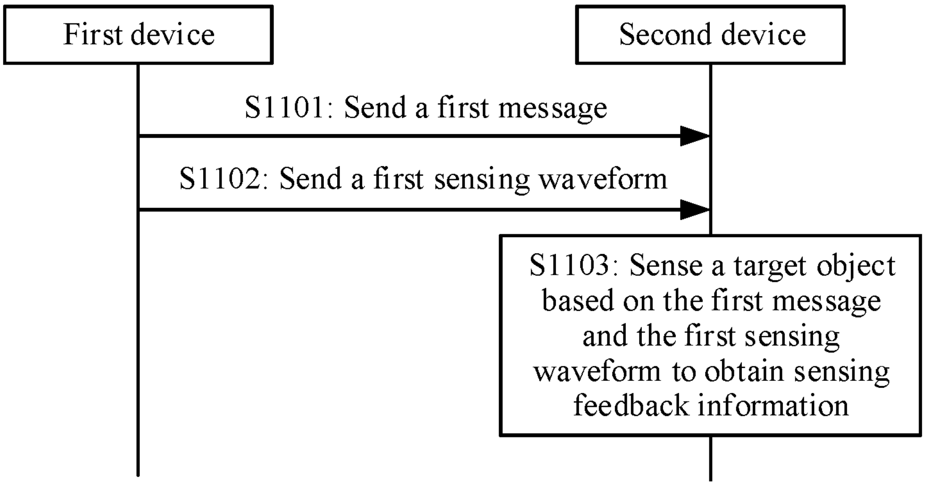
First device
Second device
S1101: Send a first message
S1102: Send a first sensing waveform
S1103: Sense a target object based on the first message and the first sensing waveform to obtain sensing feedback information

FIG. 11

| NDPA frame | Frame control (Frame control) | Duration (Duration) | Receiver address (RA) | Transmitter address (TA) | Sounding dialog token (Sounding dialog token) | STA information 1 (STA info 1) | ... | STA information N (STA info N) | STA information SAC (STA info SAC) | Frame check sequence (FCS) |
|---|---|---|---|---|---|---|---|---|---|---|
| Octets (Octets) | 2 | 2 | 6 | 6 | 1 | 4 | | 4 | 4 | 4 |

FIG. 12

| | Reserved (Reserved) | HE/VHT | Sounding dialog token quantity (Sounding dialog token number) |
|---|---|---|---|
| Bits (Bits) | 1 | 1 | 6 |

FIG. 13

| | Association identifier 11 (AID 11) | Disallowed subchannel bitmap (Disallowed subchannel bitmap) | Reserved (Reserved) | Reserved (Reserved) | Disambiguation (Disambiguation) | Reserved (Reserved) |
|---|---|---|---|---|---|---|
| Bits (Bits) | 11 | 8 | 7 | 1 | 1 | 4 |

FIG. 14

| | | | |
|---|---|---|---|
| Beam quantity (Beam number) | Uniform indication (Uniform indication) | Offset quantity (Offset number) | Frequency offset value (Frequency offset value) |

FIG. 15

| | Association identifier 11 (AID 11) | Multi-beam end (Multi-beam end) | Uniform offset (Uniform offset) | Beam end (Beam end) | Frequency offset (Frequency offset) | Frequency offset (Frequency offset) | Frequency offset (Frequency offset) | Reserved (Reserved) |
|---|---|---|---|---|---|---|---|---|
| Bits (Bits) | 11 | 1 | 1 | 1 | 5 | 5 | 5 | 3 |

FIG. 16

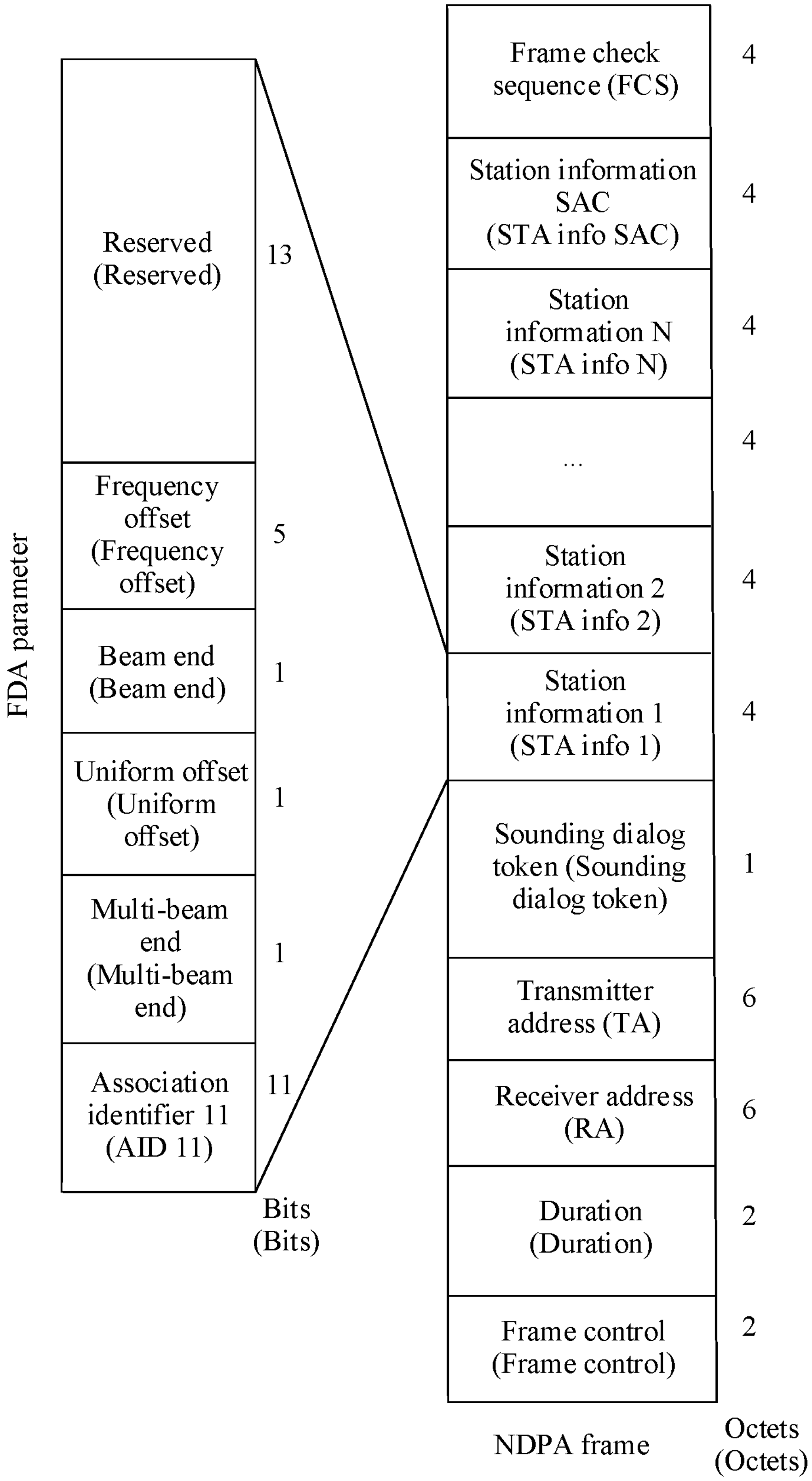
FDA parameter
Reserved (Reserved)
13
Frequency offset (Frequency offset)
5
Beam end (Beam end)
1
Uniform offset (Uniform offset)
1
Multi-beam end (Multi-beam end)
1
Association identifier 11 (AID 11)
11
Bits (Bits)
Frame check sequence (FCS)
4
Station information SAC (STA info SAC)
4
Station information N (STA info N)
4
...
4
Station information 2 (STA info 2)
4
Station information 1 (STA info 1)
4
Sounding dialog token (Sounding dialog token)
1
Transmitter address (TA)
6
Receiver address (RA)
6
Duration (Duration)
2
Frame control (Frame control)
2
NDPA frame
Octets (Octets)

FIG. 17

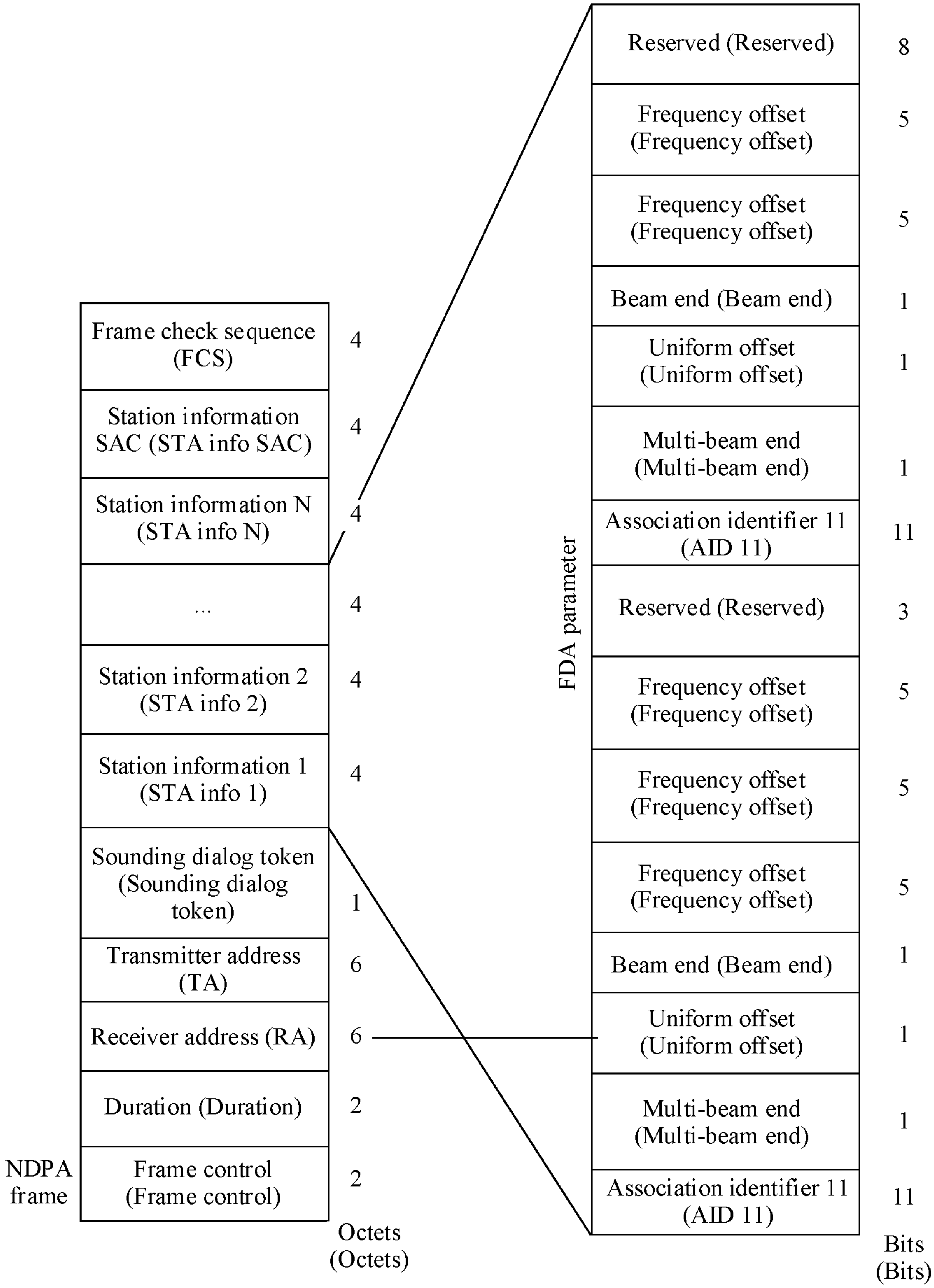
Reserved (Reserved)
8
Frequency offset (Frequency offset)
5
Frequency offset (Frequency offset)
5
Beam end (Beam end)
1
Uniform offset (Uniform offset)
1
Multi-beam end (Multi-beam end)
1
Association identifier 11 (AID 11)
11
Reserved (Reserved)
3
Frequency offset (Frequency offset)
5
Frequency offset (Frequency offset)
5
Frequency offset (Frequency offset)
5
Beam end (Beam end)
1
Uniform offset (Uniform offset)
1
Multi-beam end (Multi-beam end)
1
Association identifier 11 (AID 11)
11
Bits (Bits)
FDA parameter
Frame check sequence (FCS)
4
Station information SAC (STA info SAC)
4
Station information N (STA info N)
4
...
4
Station information 2 (STA info 2)
4
Station information 1 (STA info 1)
4
Sounding dialog token (Sounding dialog token)
1
Transmitter address (TA)
6
Receiver address (RA)
6
Duration (Duration)
2
Frame control (Frame control)
2
NDPA frame
Octets (Octets)

FIG. 18

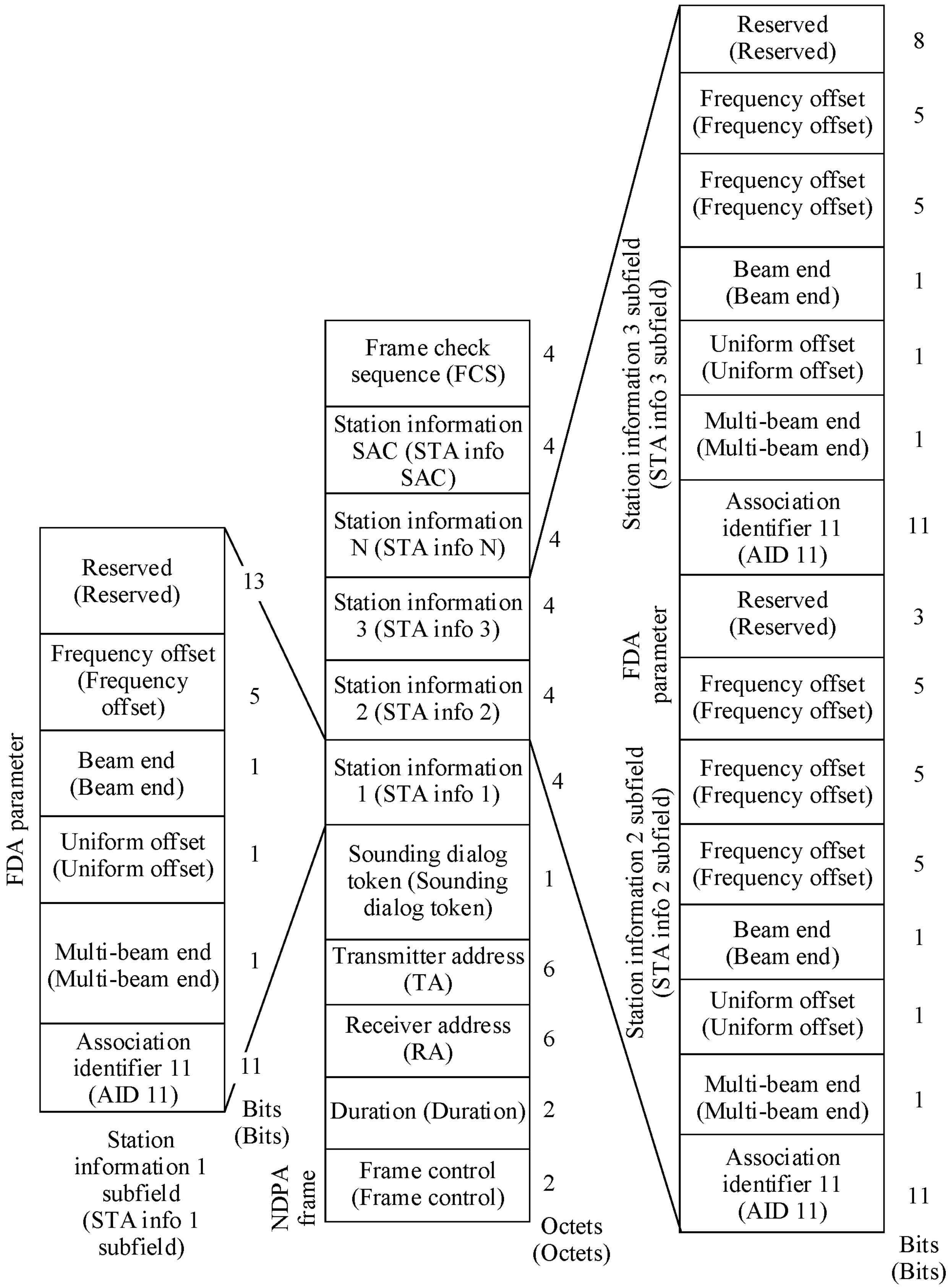
Reserved (Reserved)
13
Frequency offset (Frequency offset)
5
Beam end (Beam end)
1
Uniform offset (Uniform offset)
1
Multi-beam end (Multi-beam end)
1
Association identifier 11 (AID 11)
11
Bits (Bits)
FDA parameter
Station information 1 subfield (STA info 1 subfield)
Frame check sequence (FCS)
4
Station information SAC (STA info SAC)
4
Station information N (STA info N)
4
Station information 3 (STA info 3)
4
Station information 2 (STA info 2)
4
Station information 1 (STA info 1)
4
Sounding dialog token (Sounding dialog token)
1
Transmitter address (TA)
6
Receiver address (RA)
6
Duration (Duration)
2
Frame control (Frame control)
2
NDPA frame
Octets (Octets)
Station information 3 subfield (STA info 3 subfield)
FDA parameter
Station information 2 subfield (STA info 2 subfield)
Reserved (Reserved)
8
Frequency offset (Frequency offset)
5
Frequency offset (Frequency offset)
5
Beam end (Beam end)
1
Uniform offset (Uniform offset)
1
Multi-beam end (Multi-beam end)
1
Association identifier 11 (AID 11)
11
Reserved (Reserved)
3
Frequency offset (Frequency offset)
5
Frequency offset (Frequency offset)
5
Frequency offset (Frequency offset)
5
Beam end (Beam end)
1
Uniform offset (Uniform offset)
1
Multi-beam end (Multi-beam end)
1
Association identifier 11 (AID 11)
11
Bits (Bits)

FIG. 19

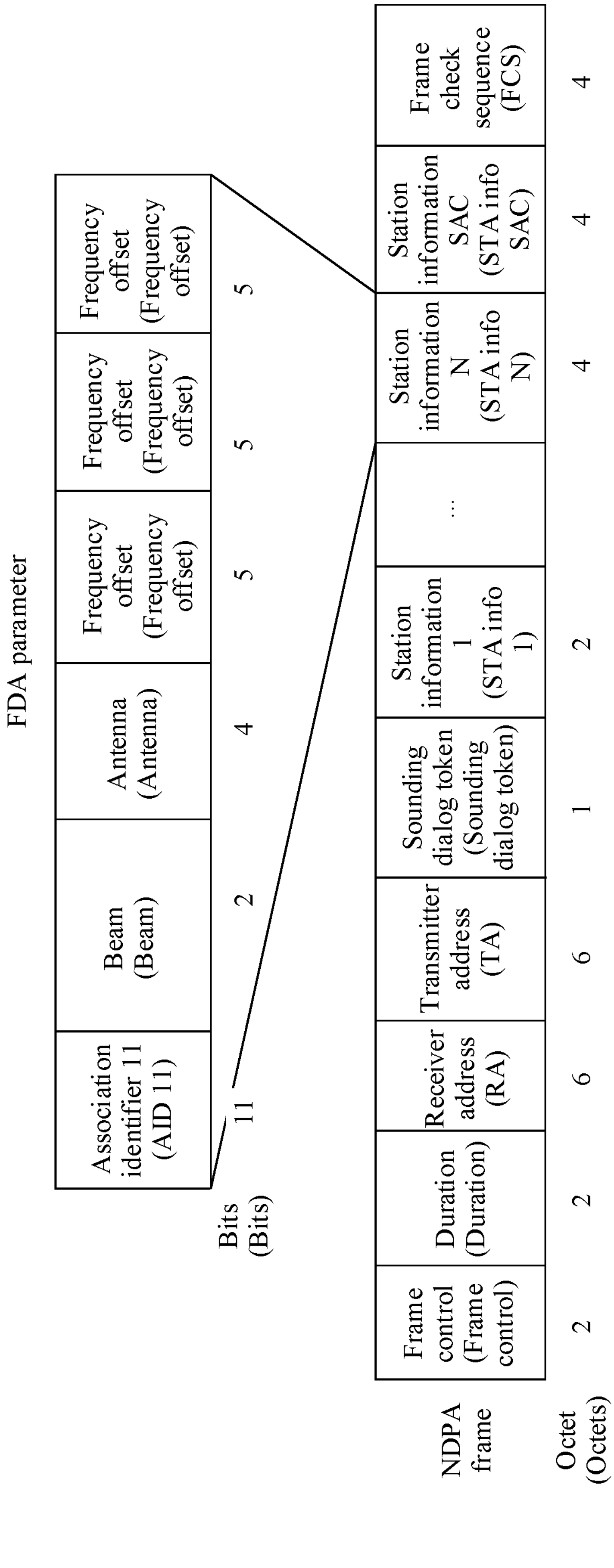
FDA parameter
Association identifier 11 (AID 11)
Beam (Beam)
Antenna (Antenna)
Frequency offset (Frequency offset)
Frequency offset (Frequency offset)
Frequency offset (Frequency offset)
Bits (Bits)
11
2
4
5
5
5
NDPA frame
Frame control (Frame control)
Duration (Duration)
Receiver address (RA)
Transmitter address (TA)
Sounding dialog token (Sounding dialog token)
Station information 1 (STA info 1)
...
Station information N (STA info N)
Station information SAC (STA info SAC)
Frame check sequence (FCS)
Octet (Octets)
2
2
6
6
1
2
4
4
4

FIG. 20

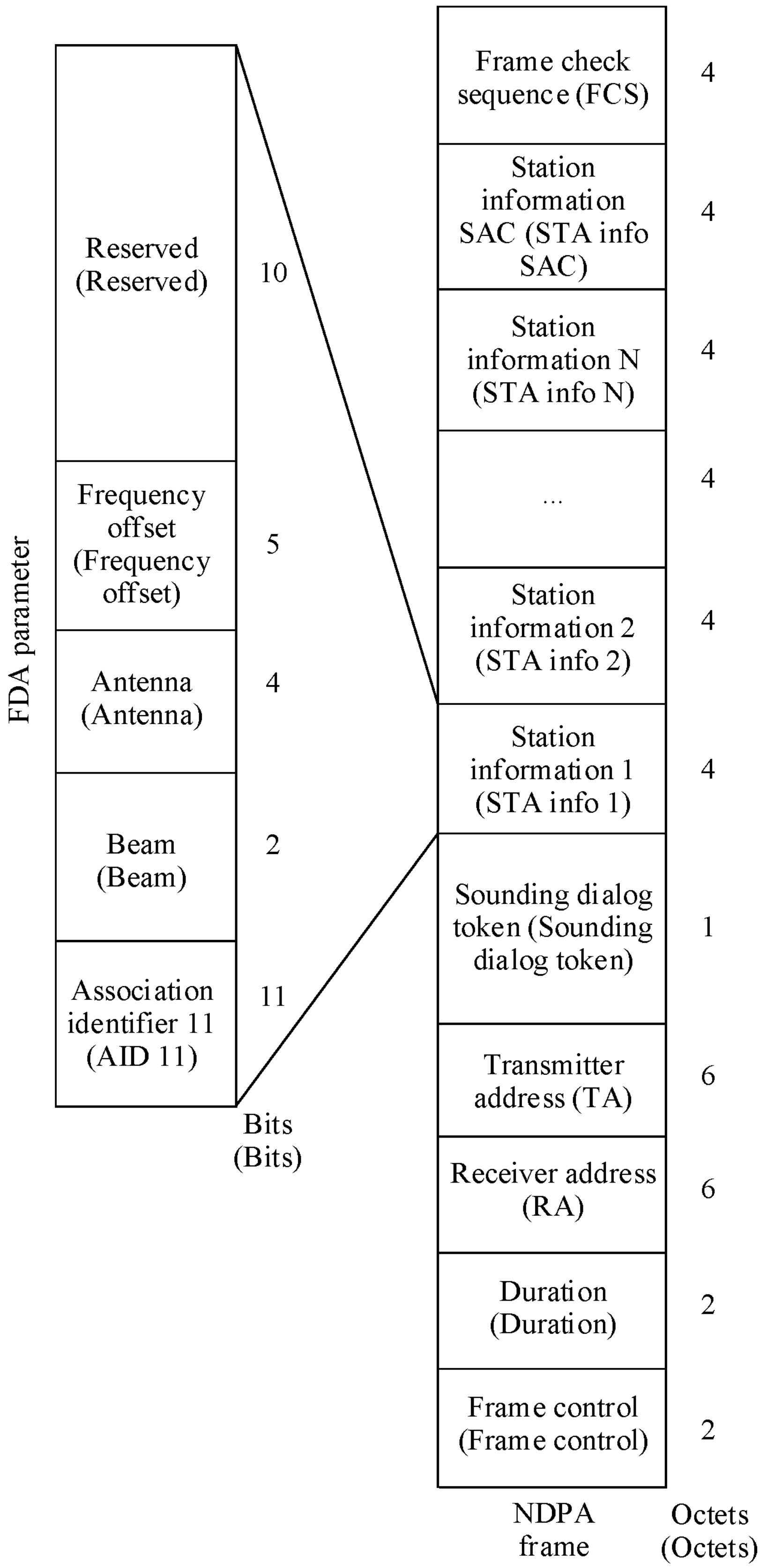
FDA parameter
Reserved (Reserved)
10
Frequency offset (Frequency offset)
5
Antenna (Antenna)
4
Beam (Beam)
2
Association identifier 11 (AID 11)
11
Bits (Bits)
Frame check sequence (FCS)
4
Station information SAC (STA info SAC)
4
Station information N (STA info N)
4
...
4
Station information 2 (STA info 2)
4
Station information 1 (STA info 1)
4
Sounding dialog token (Sounding dialog token)
1
Transmitter address (TA)
6
Receiver address (RA)
6
Duration (Duration)
2
Frame control (Frame control)
2
NDPA frame
Octets (Octets)

FIG. 21

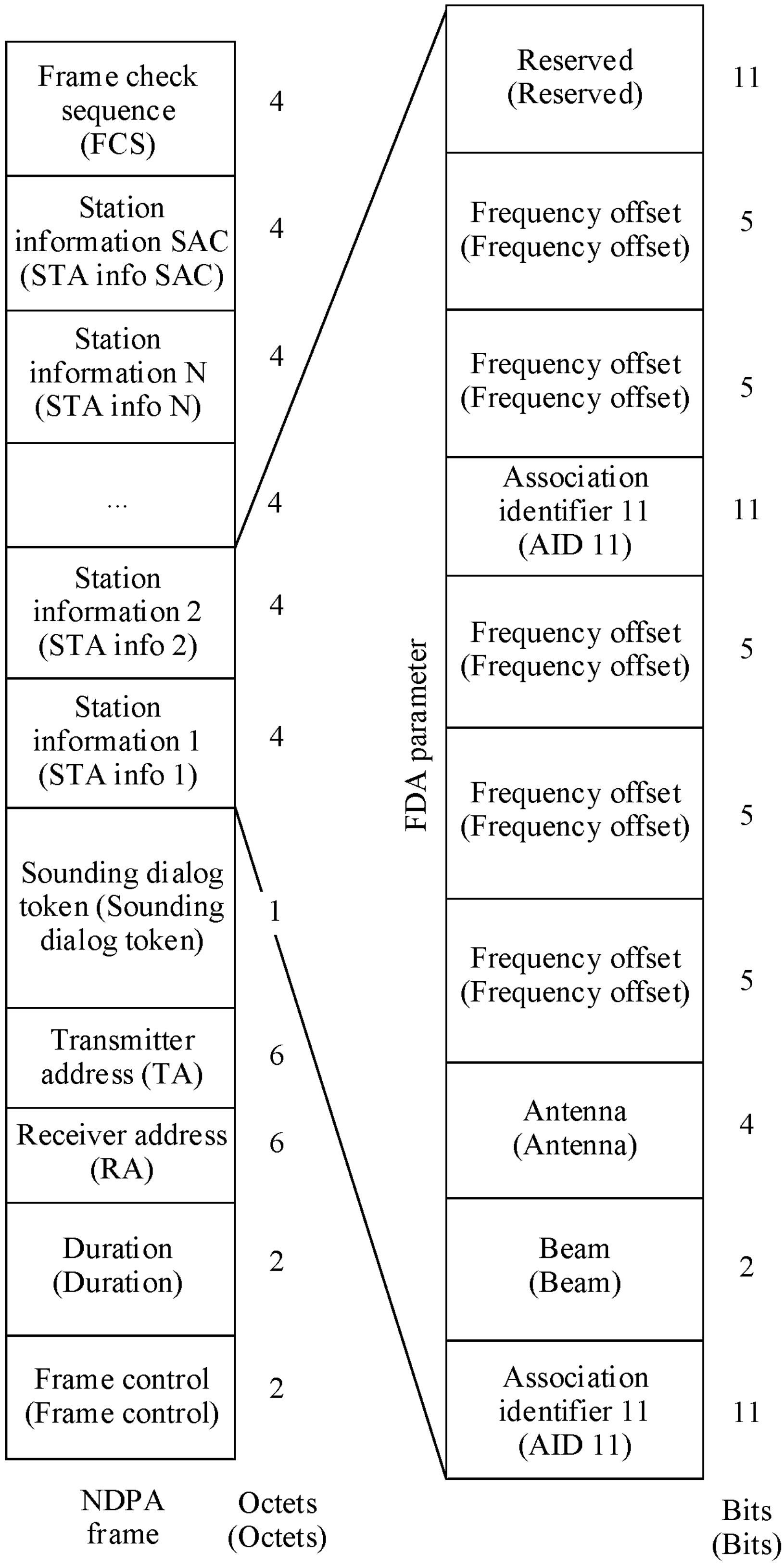
Frame check sequence (FCS)
4
Station information SAC (STA info SAC)
4
Station information N (STA info N)
4
...
4
Station information 2 (STA info 2)
4
Station information 1 (STA info 1)
4
Sounding dialog token (Sounding dialog token)
1
Transmitter address (TA)
6
Receiver address (RA)
6
Duration (Duration)
2
Frame control (Frame control)
2
NDPA frame
Octets (Octets)
FDA parameter
Reserved (Reserved)
11
Frequency offset (Frequency offset)
5
Frequency offset (Frequency offset)
5
Association identifier 11 (AID 11)
11
Frequency offset (Frequency offset)
5
Frequency offset (Frequency offset)
5
Frequency offset (Frequency offset)
5
Antenna (Antenna)
4
Beam (Beam)
2
Association identifier 11 (AID 11)
11
Bits (Bits)

FIG. 22

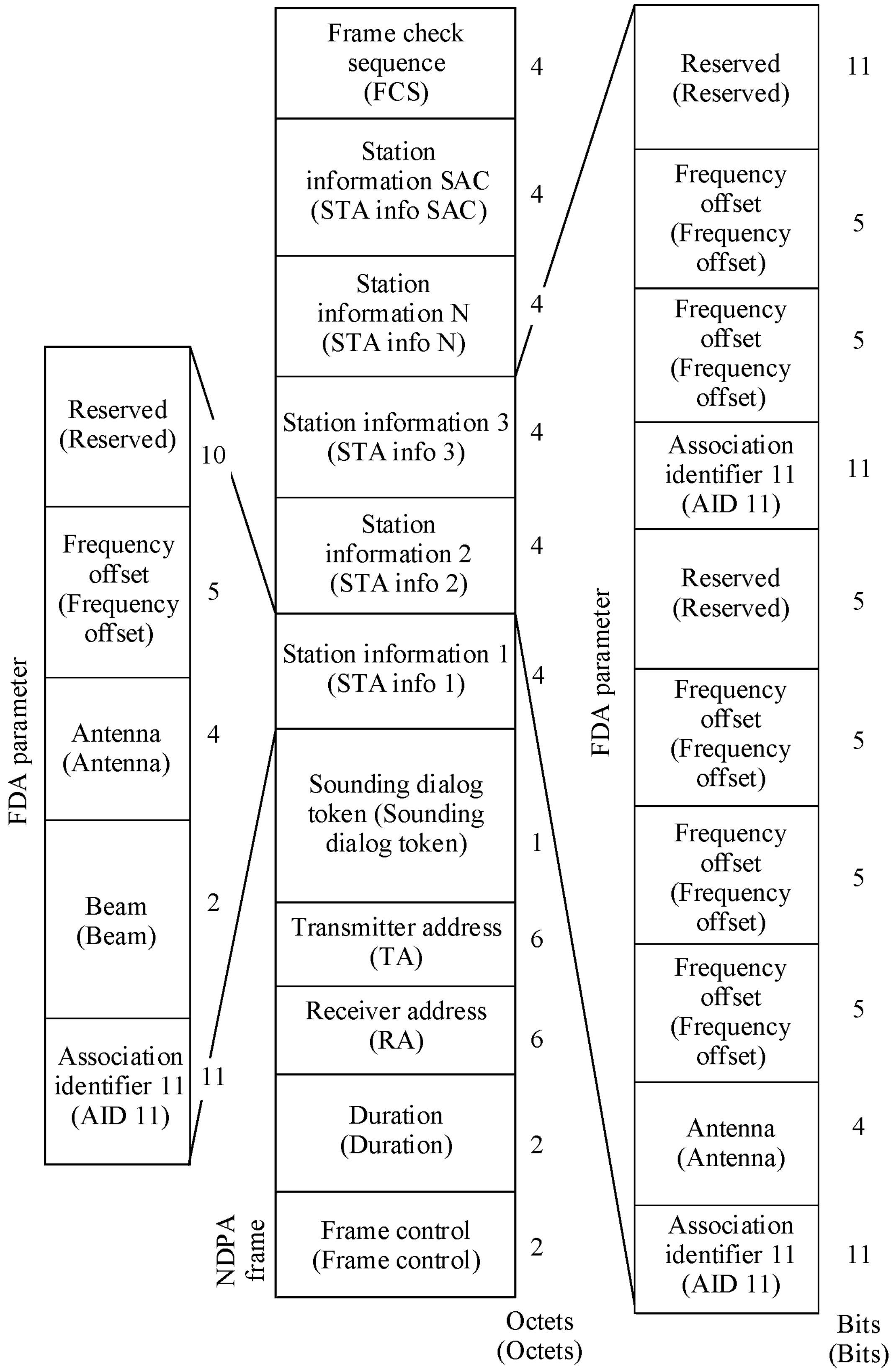
Frame check sequence (FCS)
4
Station information SAC (STA info SAC)
4
Station information N (STA info N)
4
Station information 3 (STA info 3)
4
Station information 2 (STA info 2)
4
Station information 1 (STA info 1)
4
Sounding dialog token (Sounding dialog token)
1
Transmitter address (TA)
6
Receiver address (RA)
6
Duration (Duration)
2
Frame control (Frame control)
2
NDPA frame
Octets (Octets)
FDA parameter
Reserved (Reserved)
10
Frequency offset (Frequency offset)
5
Antenna (Antenna)
4
Beam (Beam)
2
Association identifier 11 (AID 11)
11
FDA parameter
Reserved (Reserved)
11
Frequency offset (Frequency offset)
5
Frequency offset (Frequency offset)
5
Association identifier 11 (AID 11)
11
Reserved (Reserved)
5
Frequency offset (Frequency offset)
5
Frequency offset (Frequency offset)
5
Frequency offset (Frequency offset)
5
Antenna (Antenna)
4
Association identifier 11 (AID 11)
11
Bits (Bits)

FIG. 23

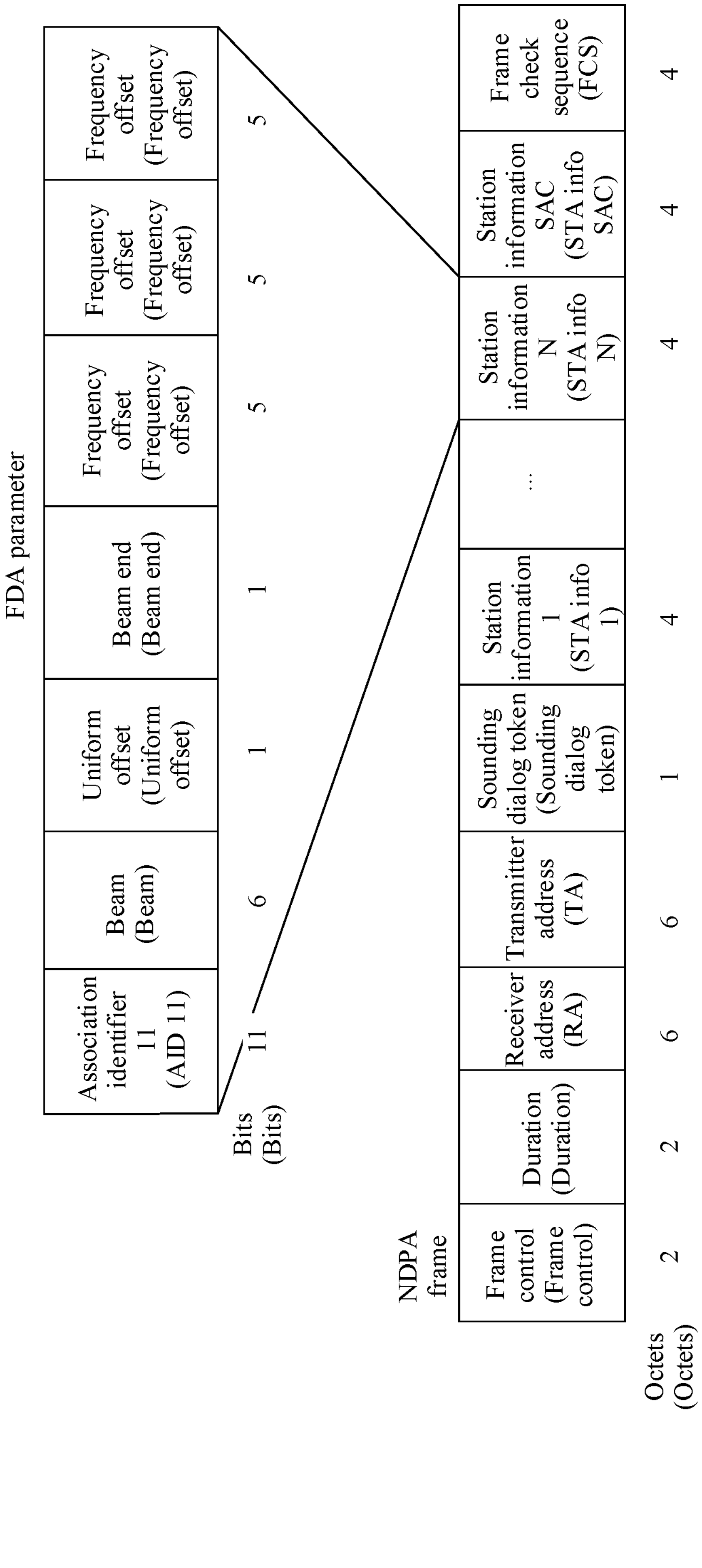
FDA parameter
Association identifier 11 (AID 11)
Beam (Beam)
Uniform offset (Uniform offset)
Beam end (Beam end)
Frequency offset (Frequency offset)
Frequency offset (Frequency offset)
Frequency offset (Frequency offset)
Bits (Bits)
11
6
1
1
5
5
5
NDPA frame
Frame control (Frame control)
Duration (Duration)
Receiver address (RA)
Transmitter address (TA)
Sounding dialog token (Sounding dialog token)
Station information 1 (STA info 1)
...
Station information N (STA info N)
Station information SAC (STA info SAC)
Frame check sequence (FCS)
Octets (Octets)
2
2
6
6
1
4
4
4
4

FIG. 24

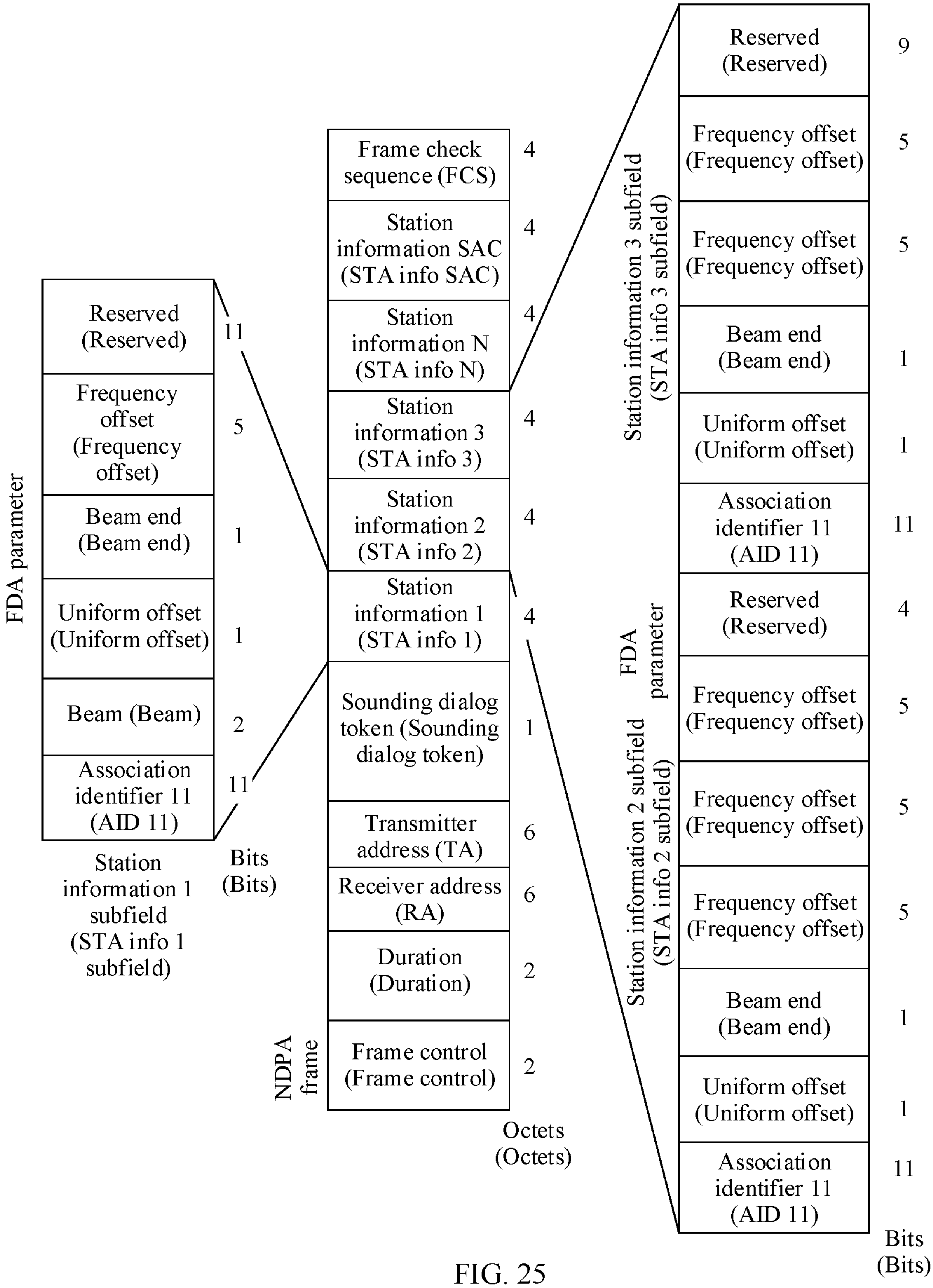
FDA parameter
Reserved (Reserved)
11
Frequency offset (Frequency offset)
5
Beam end (Beam end)
1
Uniform offset (Uniform offset)
1
Beam (Beam)
2
Association identifier 11 (AID 11)
11
Station information 1 subfield (STA info 1 subfield)
Bits (Bits)
Frame check sequence (FCS)
4
Station information SAC (STA info SAC)
4
Station information N (STA info N)
4
Station information 3 (STA info 3)
4
Station information 2 (STA info 2)
4
Station information 1 (STA info 1)
4
Sounding dialog token (Sounding dialog token)
1
Transmitter address (TA)
6
Receiver address (RA)
6
Duration (Duration)
2
NDPA frame
Frame control (Frame control)
2
Octets (Octets)
Station information 3 subfield (STA info 3 subfield)
Reserved (Reserved)
9
Frequency offset (Frequency offset)
5
Frequency offset (Frequency offset)
5
Beam end (Beam end)
1
Uniform offset (Uniform offset)
1
Association identifier 11 (AID 11)
11
FDA parameter
Station information 2 subfield (STA info 2 subfield)
Reserved (Reserved)
4
Frequency offset (Frequency offset)
5
Frequency offset (Frequency offset)
5
Frequency offset (Frequency offset)
5
Beam end (Beam end)
1
Uniform offset (Uniform offset)
1
Association identifier 11 (AID 11)
11
Bits (Bits)

FIG. 25

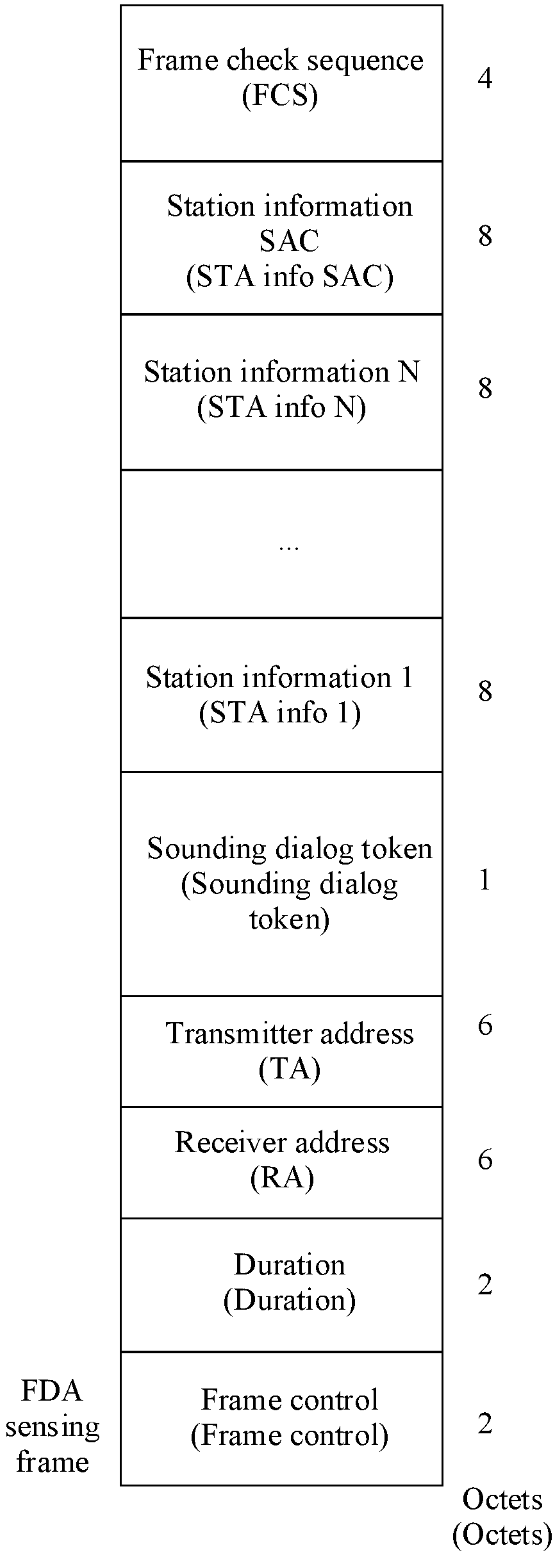
Frame check sequence (FCS)
4
Station information SAC (STA info SAC)
8
Station information N (STA info N)
8
...
Station information 1 (STA info 1)
8
Sounding dialog token (Sounding dialog token)
1
Transmitter address (TA)
6
Receiver address (RA)
6
Duration (Duration)
2
FDA sensing frame
Frame control (Frame control)
2
Octets (Octets)

FIG. 26

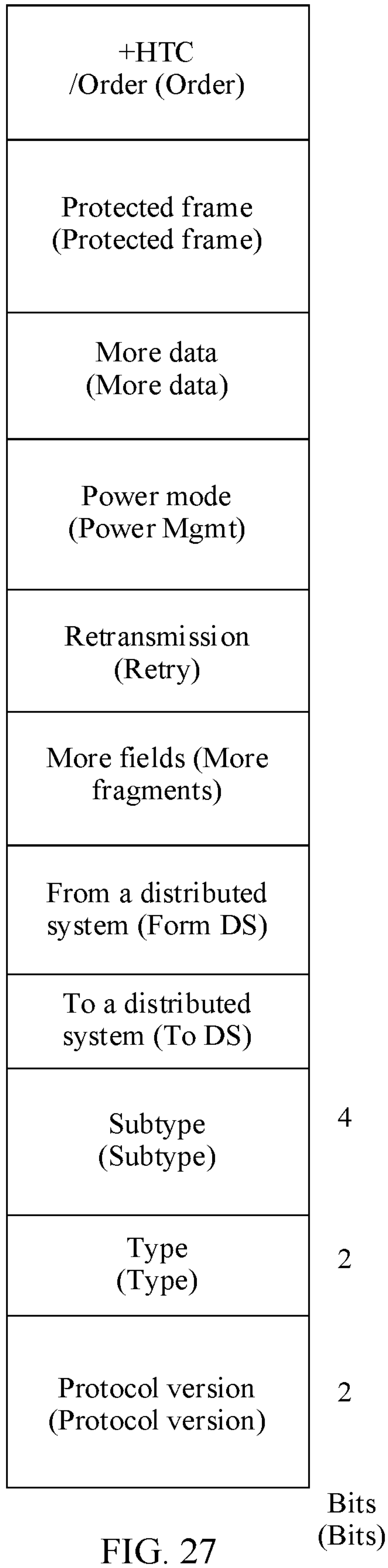
+HTC
/Order (Order)
Protected frame
(Protected frame)
More data
(More data)
Power mode
(Power Mgmt)
Retransmission
(Retry)
More fields (More
fragments)
From a distributed
system (Form DS)
To a distributed
system (To DS)
Subtype
(Subtype)
4
Type
(Type)
2
Protocol version
(Protocol version)
2
Bits
(Bits)

FIG. 27

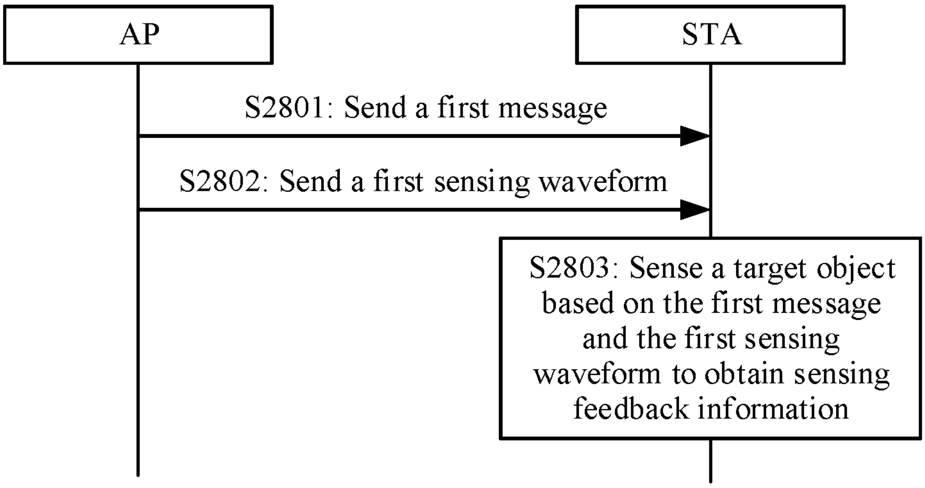
AP
STA
S2801: Send a first message
S2802: Send a first sensing waveform
S2803: Sense a target object based on the first message and the first sensing waveform to obtain sensing feedback information

FIG. 28

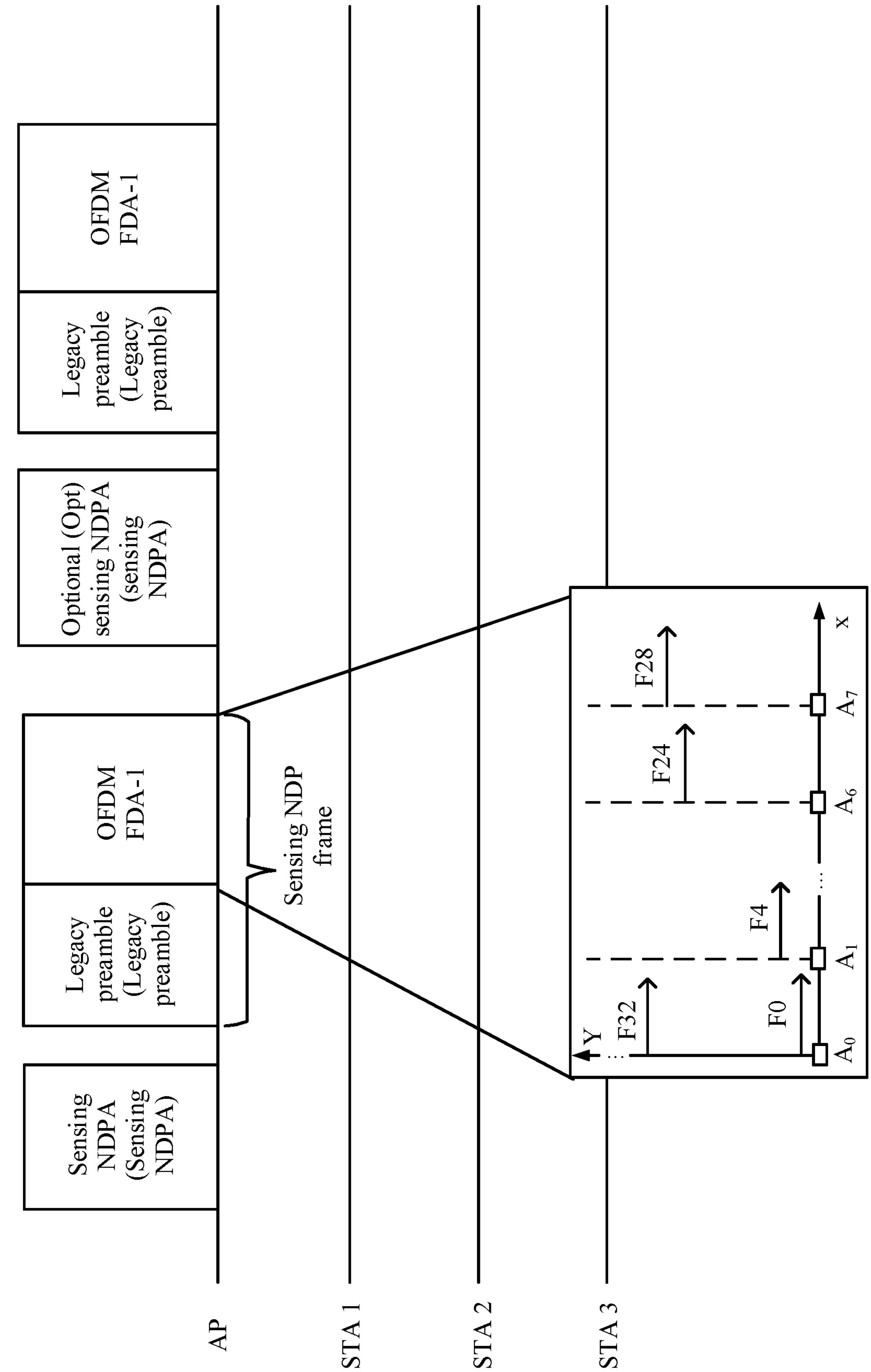
AP
STA 1
STA 2
STA 3
Sensing NDPA (Sensing NDPA)
Legacy preamble (Legacy preamble)
OFDM FDA-1
Sensing NDP frame
Optional (Opt) sensing NDPA (sensing NDPA)
Legacy preamble (Legacy preamble)
OFDM FDA-1
Y
F32
F0
F4
F24
F28
x
A0
A1
…
A6
A7

FIG. 29

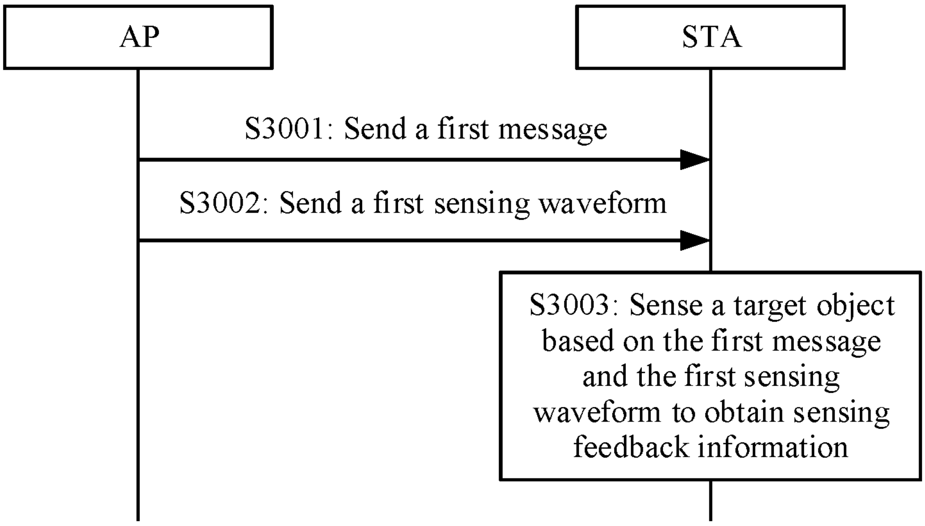
AP
STA
S3001: Send a first message
S3002: Send a first sensing waveform
S3003: Sense a target object based on the first message and the first sensing waveform to obtain sensing feedback information

FIG. 30

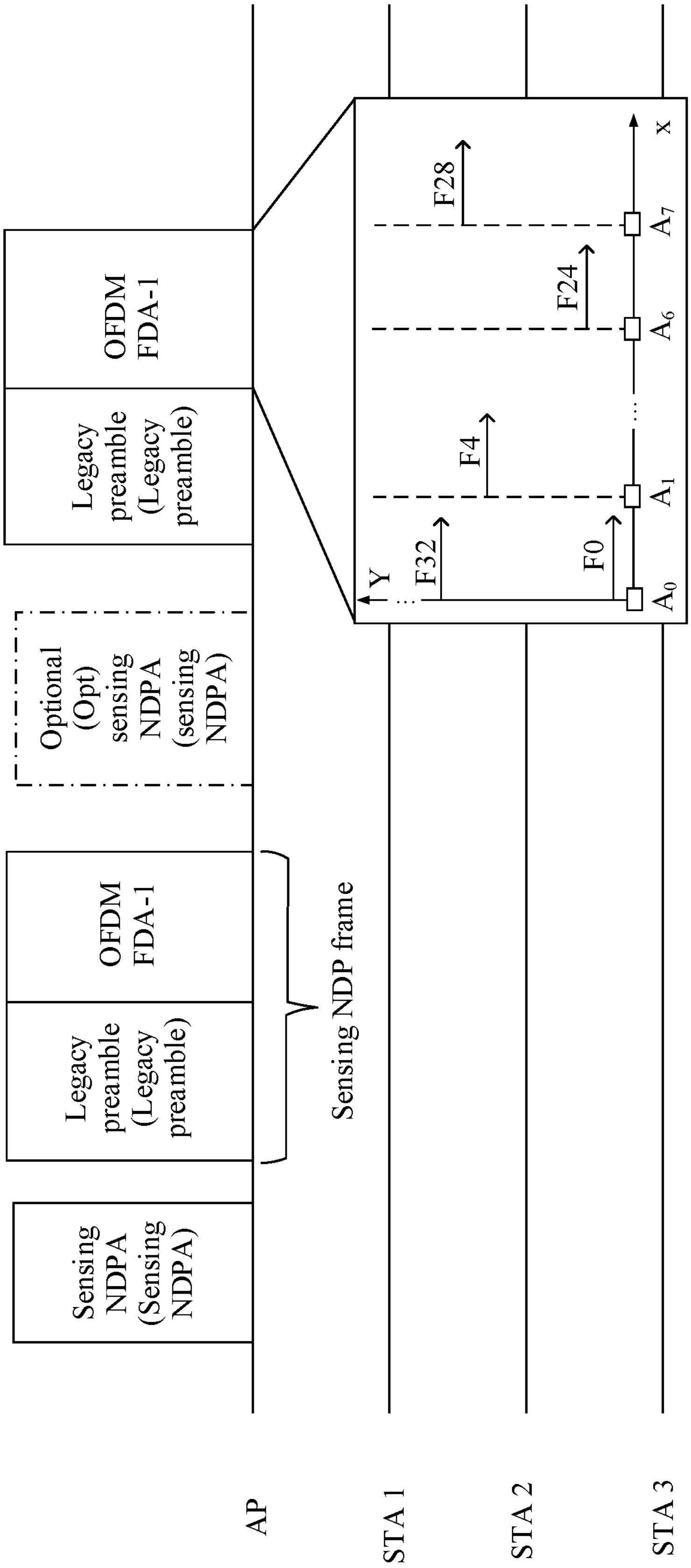
AP
STA 1
STA 2
STA 3
Sensing NDPA (Sensing NDPA)
Legacy preamble (Legacy preamble)
OFDM FDA-1
Sensing NDP frame
Optional (Opt) sensing NDPA (sensing NDPA)
Legacy preamble (Legacy preamble)
OFDM FDA-1
Y
F32
F0
$A_0$
$A_1$
F4
$A_6$
F24
$A_7$
F28
x

FIG. 31

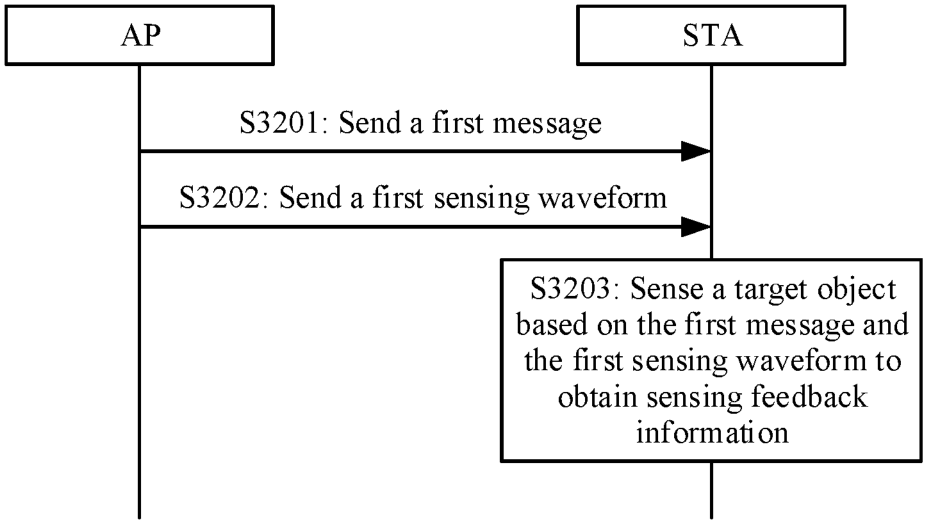
AP
STA
S3201: Send a first message
S3202: Send a first sensing waveform
S3203: Sense a target object based on the first message and the first sensing waveform to obtain sensing feedback information

FIG. 32

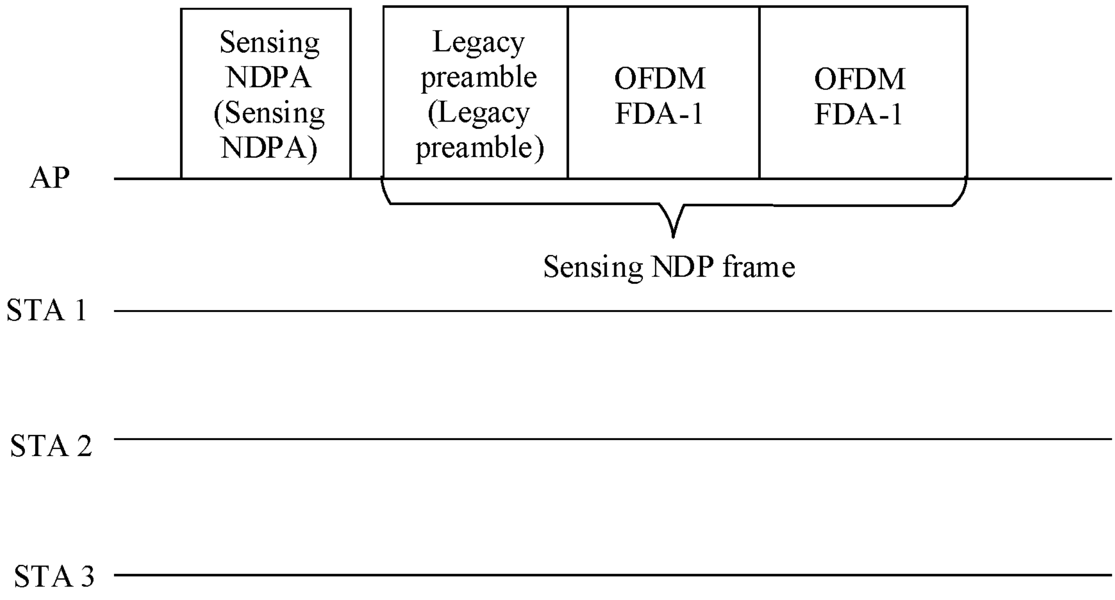
Sensing NDPA (Sensing NDPA)
Legacy preamble (Legacy preamble)
OFDM FDA-1
OFDM FDA-1
AP
Sensing NDP frame
STA 1
STA 2
STA 3

FIG. 33

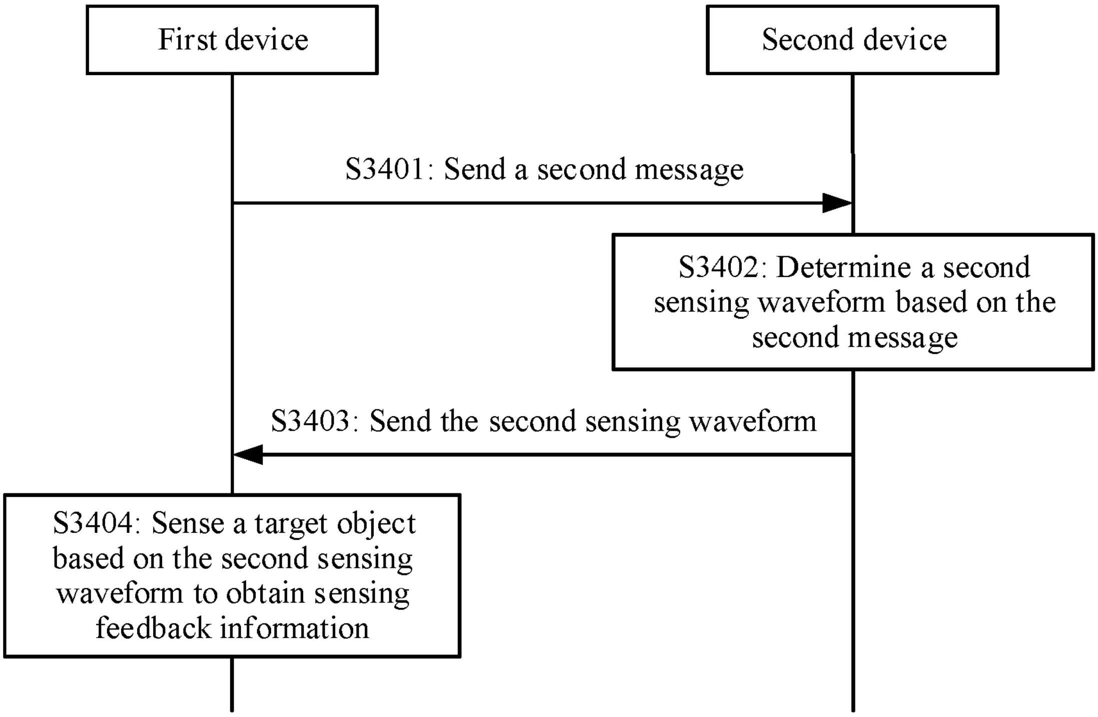
First device
Second device
S3401: Send a second message
S3402: Determine a second sensing waveform based on the second message
S3403: Send the second sensing waveform
S3404: Sense a target object based on the second sensing waveform to obtain sensing feedback information

FIG. 34

← MAC header (MAC header) →

| | Frame control (Frame control) | Duration (Duration) | Receiver address (RA) | Transmitter address (TA) | Common information (Common info) | User information (User info) | ... | User information (User info) | Padding (Padding) | Frame check sequence (FCS) |
|---|---|---|---|---|---|---|---|---|---|---|
| Octets (Octets) | 2 | 2 | 6 | 6 | 8 or greter than 8 | 5 or greter than 5 | | 5 or greter than 5 | Variable | 4 |

FIG. 35

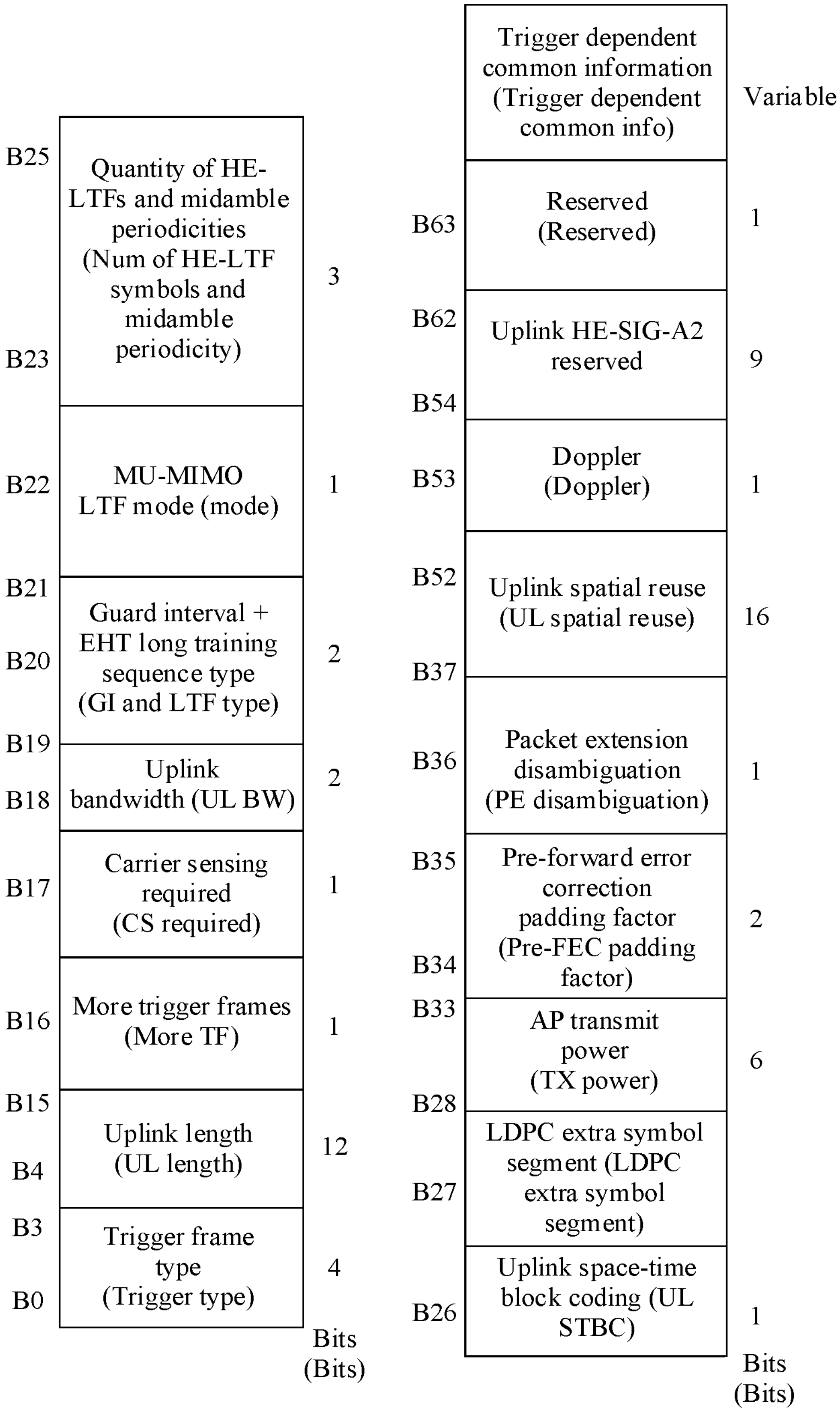
B25
B23
Quantity of HE-LTFs and midamble periodicities (Num of HE-LTF symbols and midamble periodicity)
3
B22
MU-MIMO LTF mode (mode)
1
B21
B20
Guard interval + EHT long training sequence type (GI and LTF type)
2
B19
B18
Uplink bandwidth (UL BW)
2
B17
Carrier sensing required (CS required)
1
B16
More trigger frames (More TF)
1
B15
B4
Uplink length (UL length)
12
B3
B0
Trigger frame type (Trigger type)
4
Bits (Bits)
Trigger dependent common information (Trigger dependent common info)
Variable
B63
Reserved (Reserved)
1
B62
B54
Uplink HE-SIG-A2 reserved
9
B53
Doppler (Doppler)
1
B52
B37
Uplink spatial reuse (UL spatial reuse)
16
B36
Packet extension disambiguation (PE disambiguation)
1
B35
B34
Pre-forward error correction padding factor (Pre-FEC padding factor)
2
B33
B28
AP transmit power (TX power)
6
B27
LDPC extra symbol segment (LDPC extra symbol segment)
B26
Uplink space-time block coding (UL STBC)
1
Bits (Bits)

FIG. 36

FDA parameter

| | | | |
|---|---|---|---|
| Beam quantity (Beam number) | Uniform indication (Uniform indication) | Offset quantity (Offset number) | Frequency offset value (Frequency offset value) |

FIG. 37

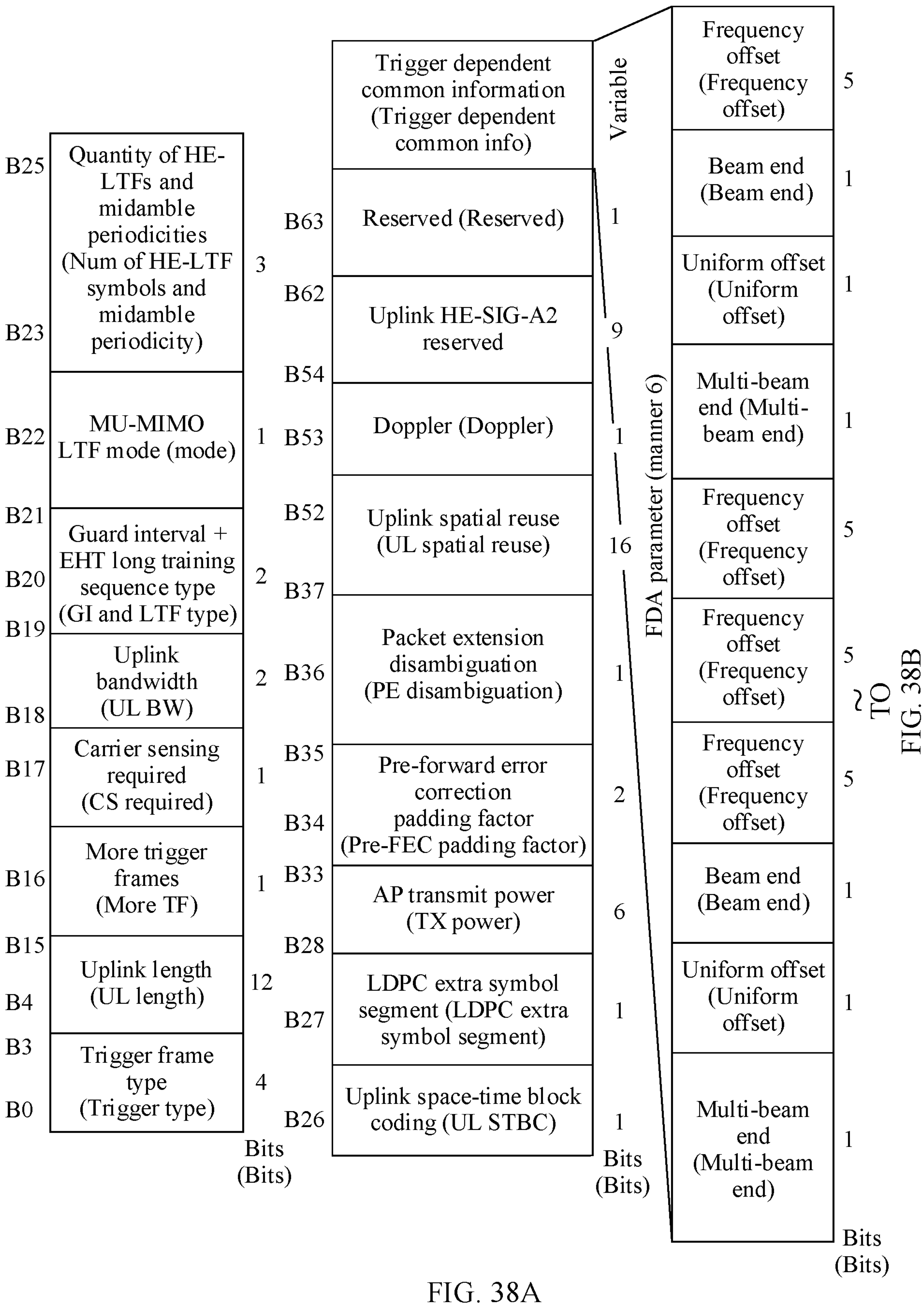
B25
Quantity of HE-LTFs and midamble periodicities (Num of HE-LTF symbols and midamble periodicity)
3
B23
B22
MU-MIMO LTF mode (mode)
1
B21
Guard interval + EHT long training sequence type (GI and LTF type)
B20
2
B19
Uplink bandwidth (UL BW)
2
B18
B17
Carrier sensing required (CS required)
1
B16
More trigger frames (More TF)
1
B15
Uplink length (UL length)
12
B4
B3
Trigger frame type (Trigger type)
4
B0
Bits (Bits)
Trigger dependent common information (Trigger dependent common info)
Variable
B63
Reserved (Reserved)
1
B62
Uplink HE-SIG-A2 reserved
9
B54
B53
Doppler (Doppler)
1
B52
Uplink spatial reuse (UL spatial reuse)
16
B37
B36
Packet extension disambiguation (PE disambiguation)
1
B35
Pre-forward error correction padding factor (Pre-FEC padding factor)
2
B34
B33
AP transmit power (TX power)
6
B28
B27
LDPC extra symbol segment (LDPC extra symbol segment)
1
B26
Uplink space-time block coding (UL STBC)
1
Bits (Bits)
FDA parameter (manner 6)
Frequency offset (Frequency offset)
5
Beam end (Beam end)
1
Uniform offset (Uniform offset)
1
Multi-beam end (Multi-beam end)
1
Frequency offset (Frequency offset)
5
Frequency offset (Frequency offset)
5
Frequency offset (Frequency offset)
5
Beam end (Beam end)
1
Uniform offset (Uniform offset)
1
Multi-beam end (Multi-beam end)
1
Bits (Bits)
~ TO FIG. 38B

FIG. 38A

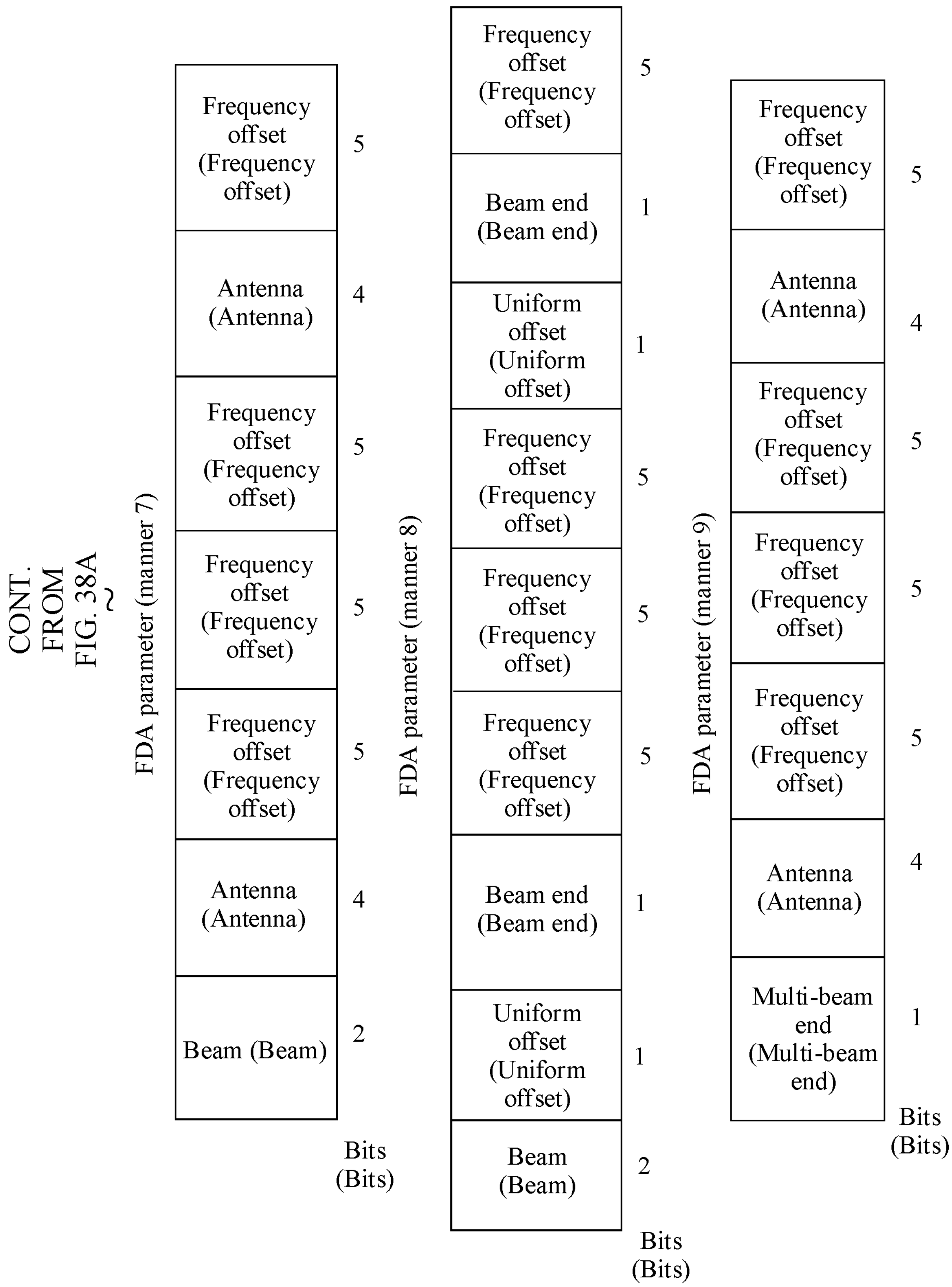
CONT. FROM FIG. 38A
FDA parameter (manner 7)
Frequency offset (Frequency offset)
5
Antenna (Antenna)
4
Frequency offset (Frequency offset)
5
Frequency offset (Frequency offset)
5
Frequency offset (Frequency offset)
5
Antenna (Antenna)
4
Beam (Beam)
2
Bits (Bits)
FDA parameter (manner 8)
Frequency offset (Frequency offset)
5
Beam end (Beam end)
1
Uniform offset (Uniform offset)
1
Frequency offset (Frequency offset)
5
Frequency offset (Frequency offset)
5
Frequency offset (Frequency offset)
5
Beam end (Beam end)
1
Uniform offset (Uniform offset)
1
Beam (Beam)
2
Bits (Bits)
FDA parameter (manner 9)
Frequency offset (Frequency offset)
5
Antenna (Antenna)
4
Frequency offset (Frequency offset)
5
Frequency offset (Frequency offset)
5
Frequency offset (Frequency offset)
5
Antenna (Antenna)
4
Multi-beam end (Multi-beam end)
1
Bits (Bits)

FIG. 38B

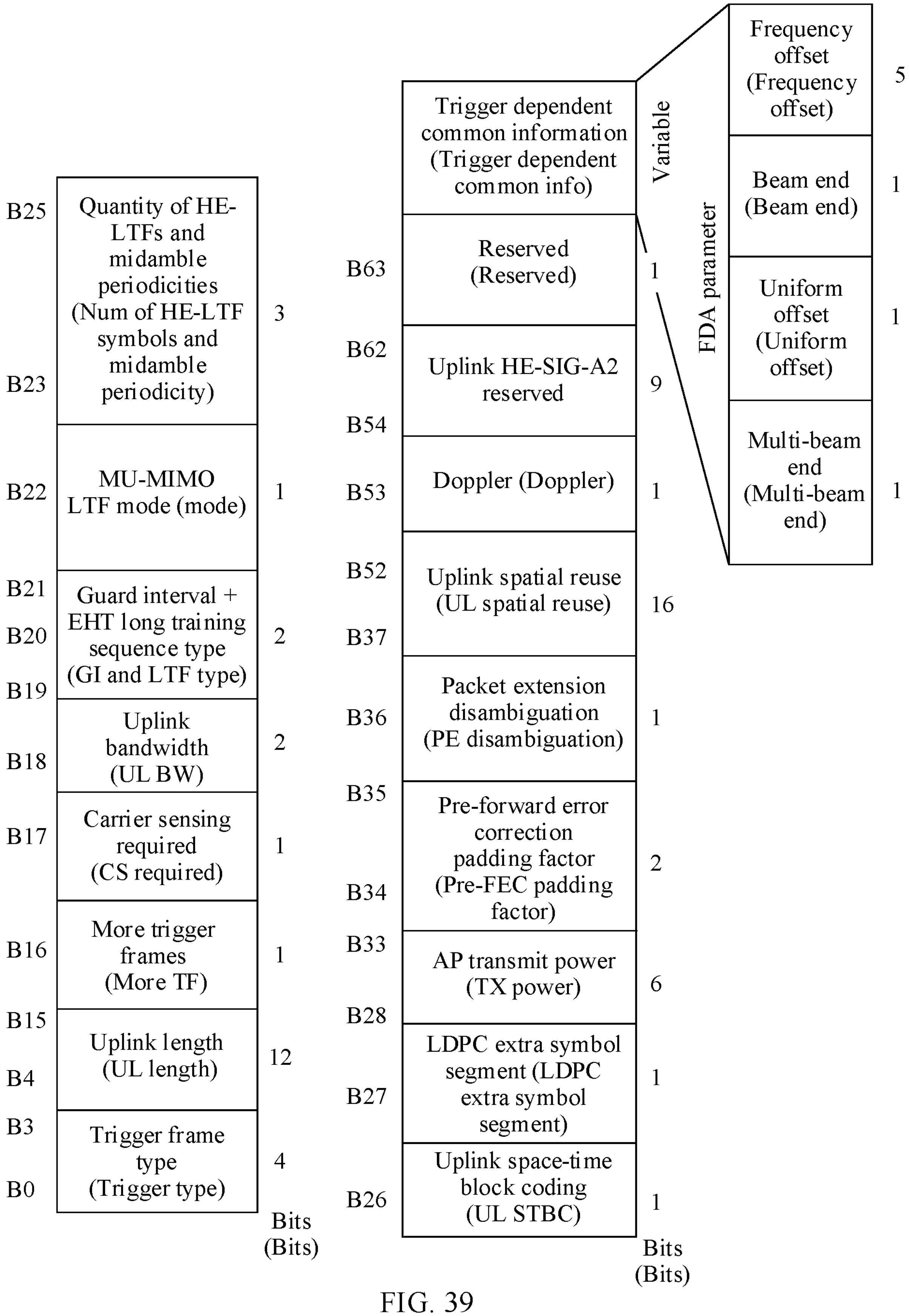

B25
Quantity of HE-LTFs and midamble periodicities (Num of HE-LTF symbols and midamble periodicity)
3
B23
B22
MU-MIMO LTF mode (mode)
1
B21
B20
Guard interval + EHT long training sequence type (GI and LTF type)
2
B19
B18
Uplink bandwidth (UL BW)
2
B17
Carrier sensing required (CS required)
1
B16
More trigger frames (More TF)
1
B15
B4
Uplink length (UL length)
12
B3
B0
Trigger frame type (Trigger type)
4
Bits (Bits)
Trigger dependent common information (Trigger dependent common info)
Variable
B63
Reserved (Reserved)
1
B62
B54
Uplink HE-SIG-A2 reserved
9
B53
Doppler (Doppler)
1
B52
B37
Uplink spatial reuse (UL spatial reuse)
16
B36
Packet extension disambiguation (PE disambiguation)
1
B35
B34
Pre-forward error correction padding factor (Pre-FEC padding factor)
2
B33
B28
AP transmit power (TX power)
6
B27
LDPC extra symbol segment (LDPC extra symbol segment)
1
B26
Uplink space-time block coding (UL STBC)
1
Bits (Bits)
FDA parameter
Frequency offset (Frequency offset)
5
Beam end (Beam end)
1
Uniform offset (Uniform offset)
1
Multi-beam end (Multi-beam end)
1


FIG. 39

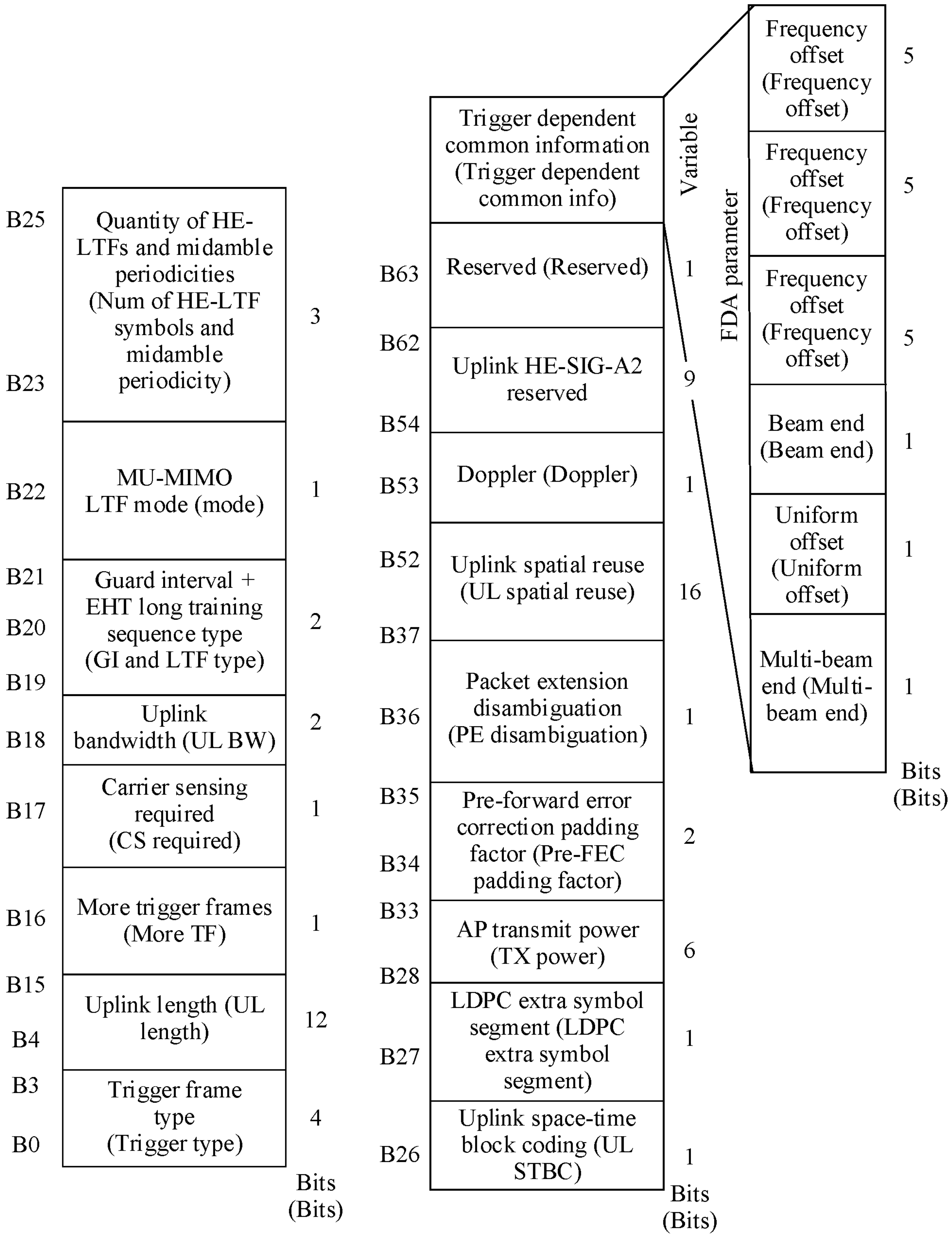
B25
Quantity of HE-LTFs and midamble periodicities (Num of HE-LTF symbols and midamble periodicity)
3
B23
B22
MU-MIMO LTF mode (mode)
1
B21
B20
B19
Guard interval + EHT long training sequence type (GI and LTF type)
2
B18
Uplink bandwidth (UL BW)
2
B17
Carrier sensing required (CS required)
1
B16
More trigger frames (More TF)
1
B15
B4
Uplink length (UL length)
12
B3
B0
Trigger frame type (Trigger type)
4
Bits (Bits)
Trigger dependent common information (Trigger dependent common info)
Variable
B63
Reserved (Reserved)
1
B62
B54
Uplink HE-SIG-A2 reserved
9
B53
Doppler (Doppler)
1
B52
B37
Uplink spatial reuse (UL spatial reuse)
16
B36
Packet extension disambiguation (PE disambiguation)
1
B35
B34
Pre-forward error correction padding factor (Pre-FEC padding factor)
2
B33
B28
AP transmit power (TX power)
6
B27
LDPC extra symbol segment (LDPC extra symbol segment)
1
B26
Uplink space-time block coding (UL STBC)
1
Bits (Bits)
FDA parameter
Frequency offset (Frequency offset)
5
Frequency offset (Frequency offset)
5
Frequency offset (Frequency offset)
5
Beam end (Beam end)
1
Uniform offset (Uniform offset)
1
Multi-beam end (Multi-beam end)
1
Bits (Bits)

FIG. 40

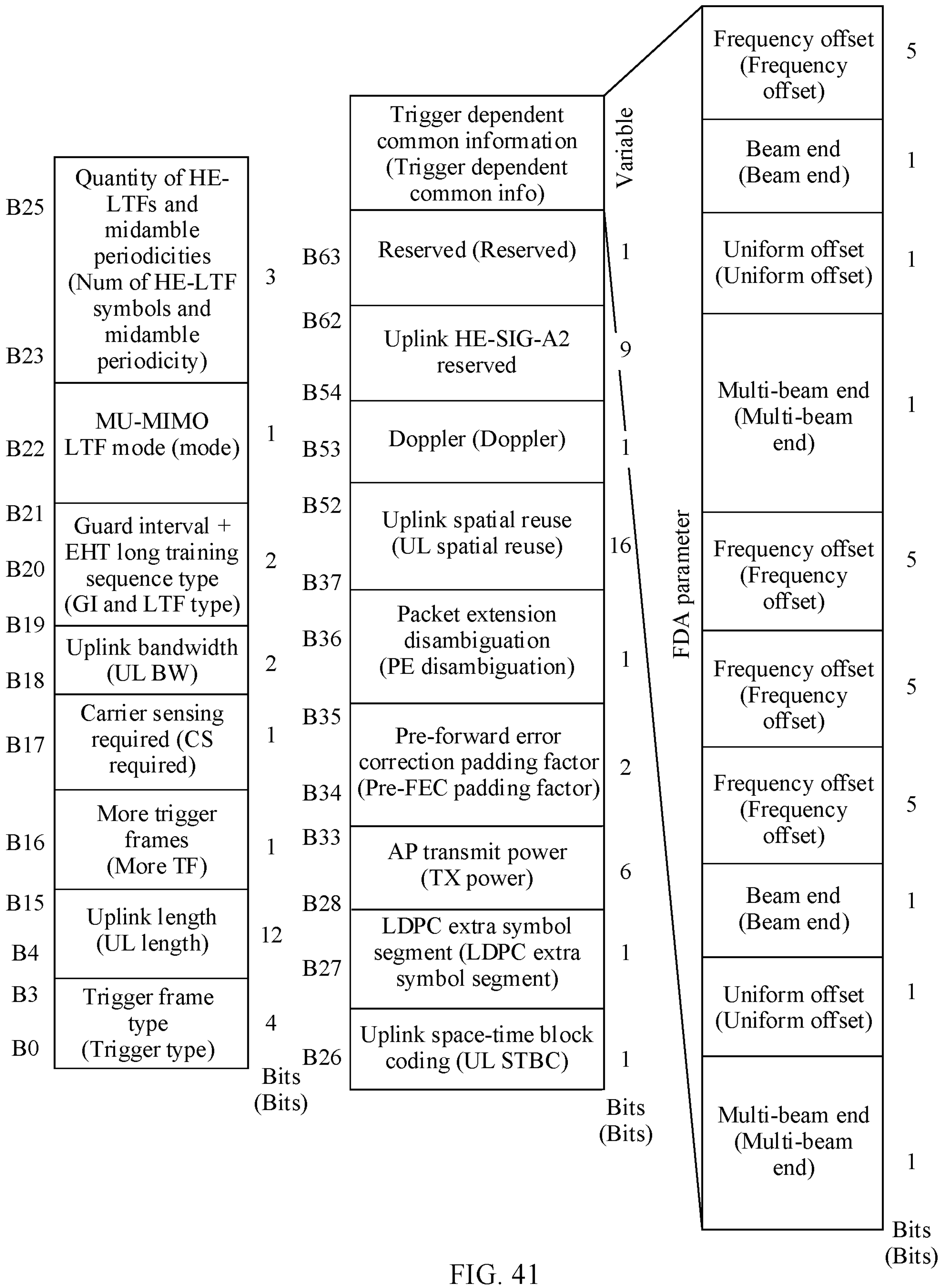
B25
Quantity of HE-LTFs and midamble periodicities (Num of HE-LTF symbols and midamble periodicity)
3
B23
B22
MU-MIMO LTF mode (mode)
1
B21
Guard interval + EHT long training sequence type (GI and LTF type)
2
B20
B19
Uplink bandwidth (UL BW)
2
B18
B17
Carrier sensing required (CS required)
1
B16
More trigger frames (More TF)
1
B15
Uplink length (UL length)
12
B4
B3
Trigger frame type (Trigger type)
4
B0
Bits (Bits)
Trigger dependent common information (Trigger dependent common info)
Variable
B63
Reserved (Reserved)
1
B62
Uplink HE-SIG-A2 reserved
9
B54
B53
Doppler (Doppler)
1
B52
Uplink spatial reuse (UL spatial reuse)
16
B37
B36
Packet extension disambiguation (PE disambiguation)
1
B35
Pre-forward error correction padding factor (Pre-FEC padding factor)
2
B34
B33
AP transmit power (TX power)
6
B28
LDPC extra symbol segment (LDPC extra symbol segment)
1
B27
B26
Uplink space-time block coding (UL STBC)
1
Bits (Bits)
FDA parameter
Frequency offset (Frequency offset)
5
Beam end (Beam end)
1
Uniform offset (Uniform offset)
1
Multi-beam end (Multi-beam end)
1
Frequency offset (Frequency offset)
5
Frequency offset (Frequency offset)
5
Frequency offset (Frequency offset)
5
Beam end (Beam end)
1
Uniform offset (Uniform offset)
1
Multi-beam end (Multi-beam end)
1
Bits (Bits)

FIG. 41

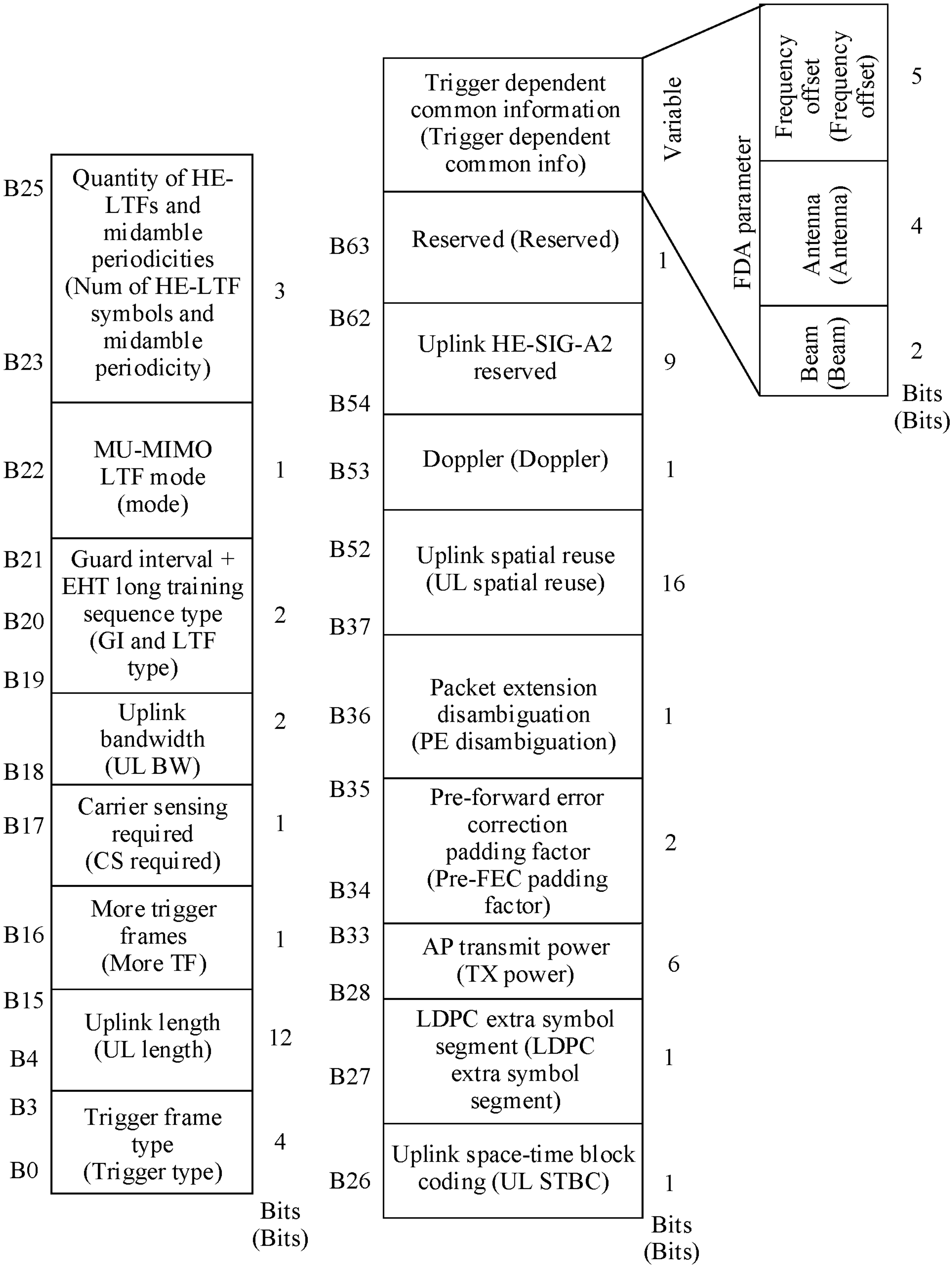
B25
Quantity of HE-LTFs and midamble periodicities (Num of HE-LTF symbols and midamble periodicity)
B23
3
B22
MU-MIMO LTF mode (mode)
1
B21
B20
B19
Guard interval + EHT long training sequence type (GI and LTF type)
2
B18
Uplink bandwidth (UL BW)
2
B17
Carrier sensing required (CS required)
1
B16
More trigger frames (More TF)
1
B15
B4
Uplink length (UL length)
12
B3
B0
Trigger frame type (Trigger type)
4
Bits (Bits)
Trigger dependent common information (Trigger dependent common info)
Variable
B63
Reserved (Reserved)
1
B62
B54
Uplink HE-SIG-A2 reserved
9
B53
Doppler (Doppler)
1
B52
B37
Uplink spatial reuse (UL spatial reuse)
16
B36
Packet extension disambiguation (PE disambiguation)
1
B35
B34
Pre-forward error correction padding factor (Pre-FEC padding factor)
2
B33
B28
AP transmit power (TX power)
6
B27
LDPC extra symbol segment (LDPC extra symbol segment)
1
B26
Uplink space-time block coding (UL STBC)
1
Bits (Bits)
FDA parameter
Frequency offset (Frequency offset)
5
Antenna (Antenna)
4
Beam (Beam)
2
Bits (Bits)

FIG. 42

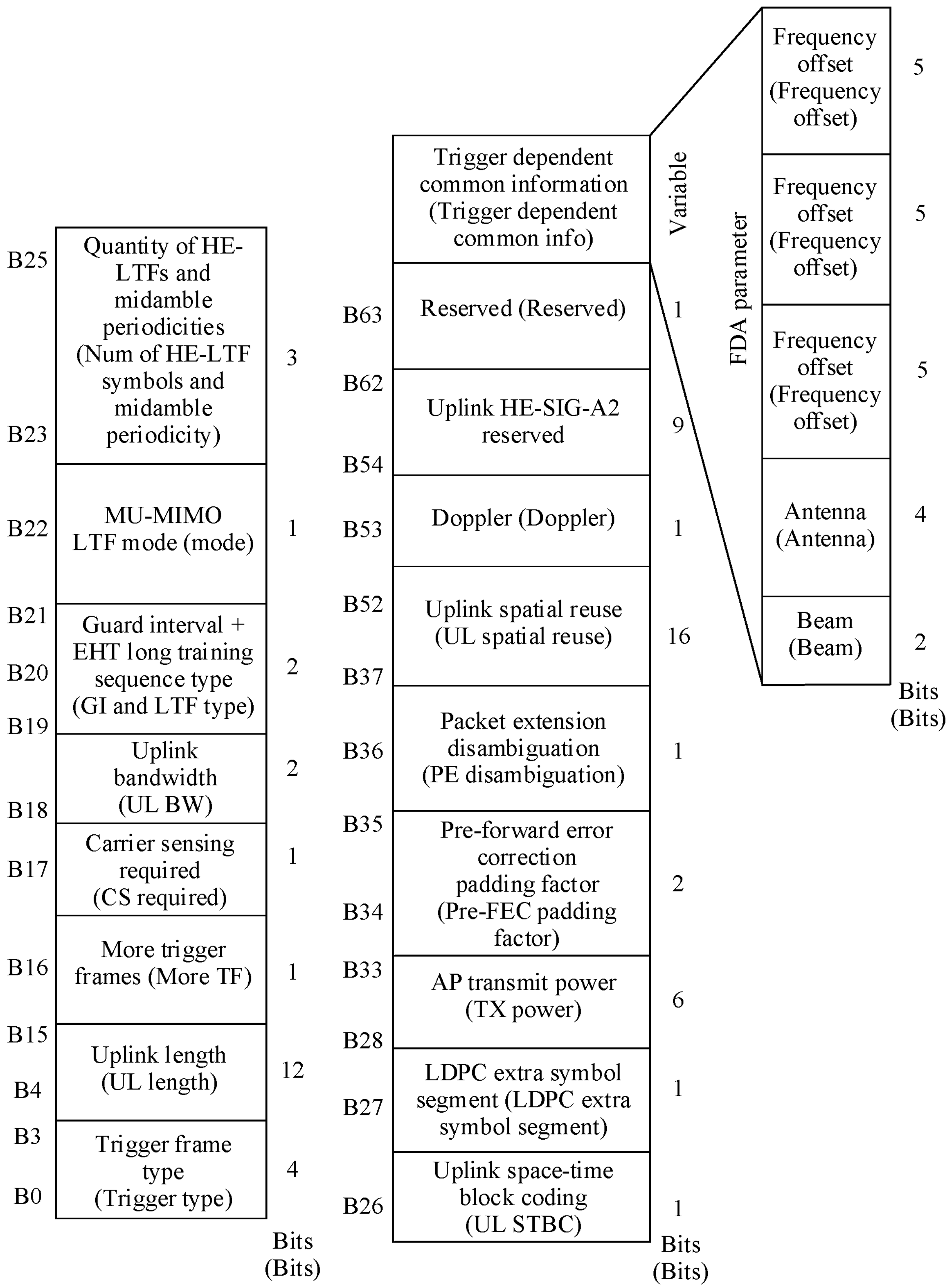

B25
Quantity of HE-LTFs and midamble periodicities (Num of HE-LTF symbols and midamble periodicity)
3
B23
B22
MU-MIMO LTF mode (mode)
1
B21
Guard interval + EHT long training sequence type (GI and LTF type)
B20
2
B19
Uplink bandwidth (UL BW)
2
B18
Carrier sensing required (CS required)
B17
1
B16
More trigger frames (More TF)
1
B15
Uplink length (UL length)
12
B4
B3
Trigger frame type (Trigger type)
4
B0
Bits (Bits)
Trigger dependent common information (Trigger dependent common info)
Variable
B63
Reserved (Reserved)
1
B62
Uplink HE-SIG-A2 reserved
9
B54
B53
Doppler (Doppler)
1
B52
Uplink spatial reuse (UL spatial reuse)
16
B37
B36
Packet extension disambiguation (PE disambiguation)
1
B35
Pre-forward error correction padding factor (Pre-FEC padding factor)
2
B34
B33
AP transmit power (TX power)
6
B28
LDPC extra symbol segment (LDPC extra symbol segment)
1
B27
Uplink space-time block coding (UL STBC)
B26
1
Bits (Bits)
FDA parameter
Frequency offset (Frequency offset)
5
Frequency offset (Frequency offset)
5
Frequency offset (Frequency offset)
5
Antenna (Antenna)
4
Beam (Beam)
2
Bits (Bits)


FIG. 43

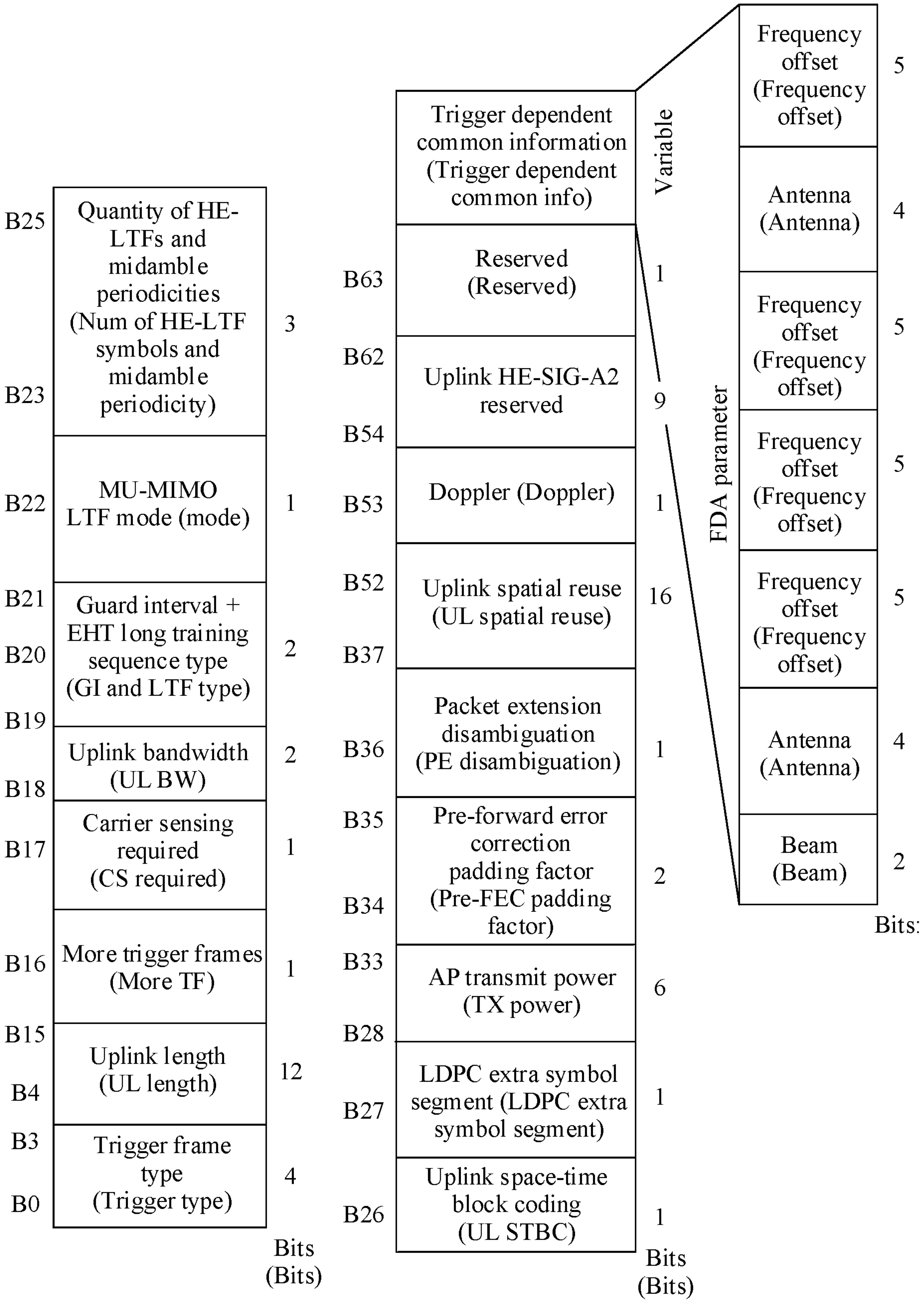
B25
Quantity of HE-LTFs and midamble periodicities (Num of HE-LTF symbols and midamble periodicity)
3
B23
B22
MU-MIMO LTF mode (mode)
1
B21
Guard interval + EHT long training sequence type (GI and LTF type)
2
B20
B19
Uplink bandwidth (UL BW)
2
B18
B17
Carrier sensing required (CS required)
1
B16
More trigger frames (More TF)
1
B15
Uplink length (UL length)
12
B4
B3
Trigger frame type (Trigger type)
4
B0
Bits (Bits)
Trigger dependent common information (Trigger dependent common info)
Variable
B63
Reserved (Reserved)
1
B62
Uplink HE-SIG-A2 reserved
9
B54
B53
Doppler (Doppler)
1
B52
Uplink spatial reuse (UL spatial reuse)
16
B37
B36
Packet extension disambiguation (PE disambiguation)
1
B35
Pre-forward error correction padding factor (Pre-FEC padding factor)
2
B34
B33
AP transmit power (TX power)
6
B28
B27
LDPC extra symbol segment (LDPC extra symbol segment)
1
B26
Uplink space-time block coding (UL STBC)
1
Bits (Bits)
FDA parameter
Frequency offset (Frequency offset)
5
Antenna (Antenna)
4
Frequency offset (Frequency offset)
5
Frequency offset (Frequency offset)
5
Frequency offset (Frequency offset)
5
Antenna (Antenna)
4
Beam (Beam)
2
Bits:

FIG. 44

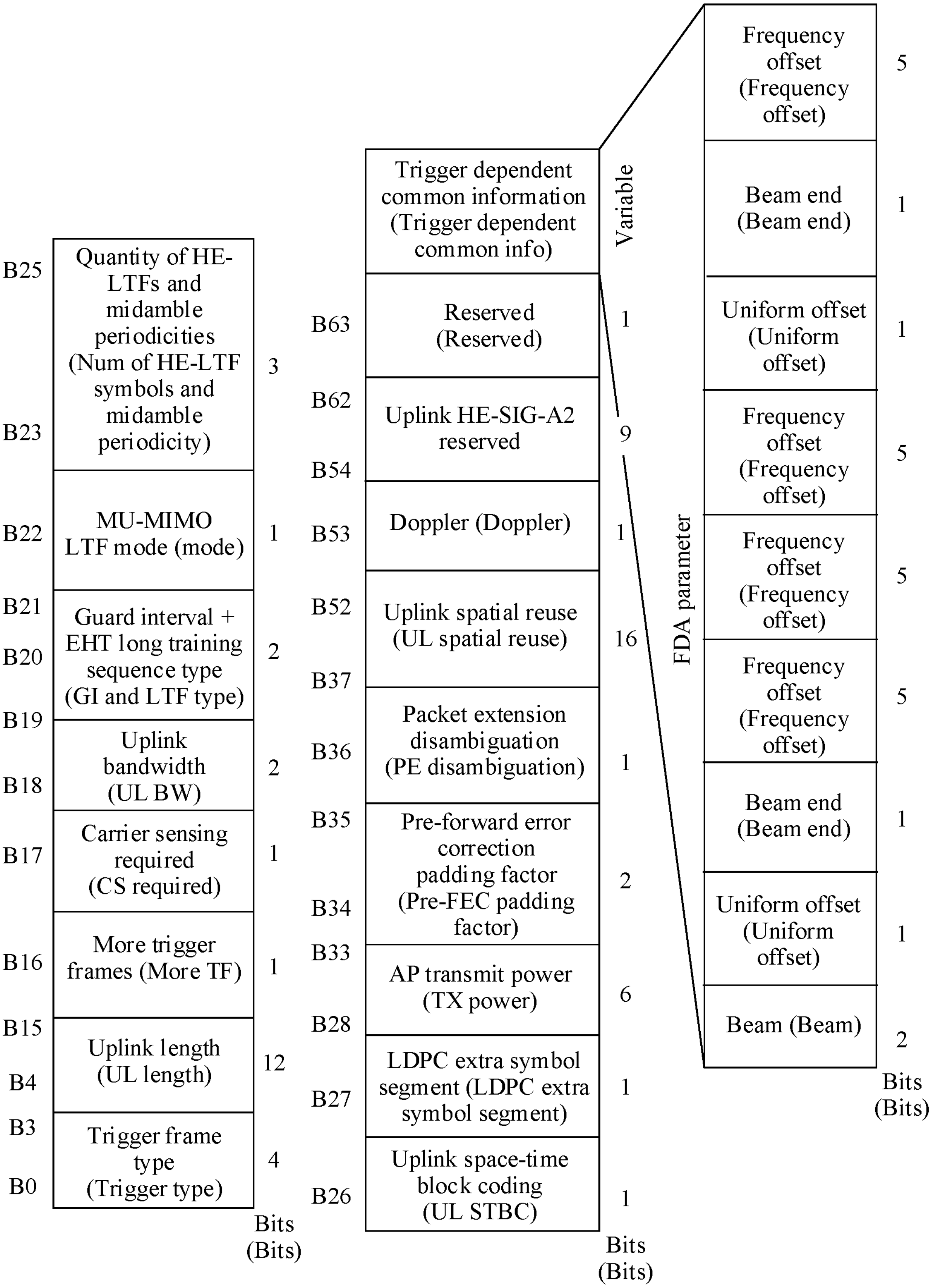
B25
Quantity of HE-LTFs and midamble periodicities (Num of HE-LTF symbols and midamble periodicity)
3
B23
B22
MU-MIMO LTF mode (mode)
1
B21
Guard interval + EHT long training sequence type (GI and LTF type)
2
B20
B19
Uplink bandwidth (UL BW)
2
B18
B17
Carrier sensing required (CS required)
1
B16
More trigger frames (More TF)
1
B15
Uplink length (UL length)
12
B4
B3
Trigger frame type (Trigger type)
4
B0
Bits (Bits)
Trigger dependent common information (Trigger dependent common info)
Variable
B63
Reserved (Reserved)
1
B62
Uplink HE-SIG-A2 reserved
9
B54
B53
Doppler (Doppler)
1
B52
Uplink spatial reuse (UL spatial reuse)
16
B37
B36
Packet extension disambiguation (PE disambiguation)
1
B35
Pre-forward error correction padding factor (Pre-FEC padding factor)
2
B34
B33
AP transmit power (TX power)
6
B28
LDPC extra symbol segment (LDPC extra symbol segment)
1
B27
Uplink space-time block coding (UL STBC)
1
B26
Bits (Bits)
FDA parameter
Frequency offset (Frequency offset)
5
Beam end (Beam end)
1
Uniform offset (Uniform offset)
1
Frequency offset (Frequency offset)
5
Frequency offset (Frequency offset)
5
Frequency offset (Frequency offset)
5
Beam end (Beam end)
1
Uniform offset (Uniform offset)
1
Beam (Beam)
2
Bits (Bits)

FIG. 45

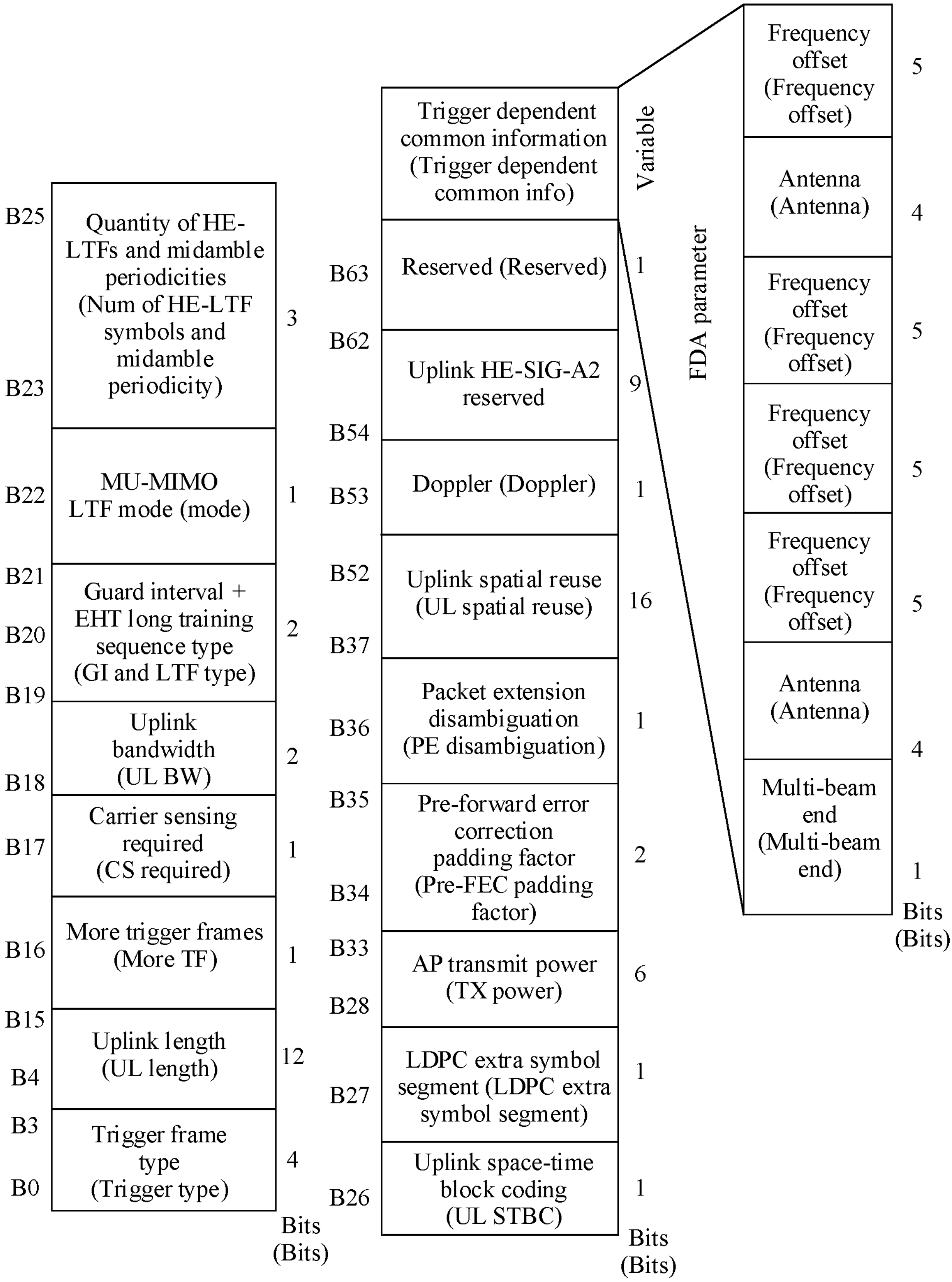
B25
Quantity of HE-LTFs and midamble periodicities (Num of HE-LTF symbols and midamble periodicity)
3
B23
B22
MU-MIMO LTF mode (mode)
1
B21
Guard interval + EHT long training sequence type (GI and LTF type)
B20
2
B19
Uplink bandwidth (UL BW)
2
B18
Carrier sensing required (CS required)
B17
1
More trigger frames (More TF)
B16
1
B15
Uplink length (UL length)
12
B4
B3
Trigger frame type (Trigger type)
4
B0
Bits (Bits)
Trigger dependent common information (Trigger dependent common info)
Variable
B63
Reserved (Reserved)
1
B62
Uplink HE-SIG-A2 reserved
9
B54
B53
Doppler (Doppler)
1
B52
Uplink spatial reuse (UL spatial reuse)
16
B37
B36
Packet extension disambiguation (PE disambiguation)
1
B35
Pre-forward error correction padding factor (Pre-FEC padding factor)
2
B34
B33
AP transmit power (TX power)
6
B28
LDPC extra symbol segment (LDPC extra symbol segment)
1
B27
Uplink space-time block coding (UL STBC)
1
B26
Bits (Bits)
FDA parameter
Frequency offset (Frequency offset)
5
Antenna (Antenna)
4
Frequency offset (Frequency offset)
5
Frequency offset (Frequency offset)
5
Frequency offset (Frequency offset)
5
Antenna (Antenna)
4
Multi-beam end (Multi-beam end)
1
Bits (Bits)

FIG. 46

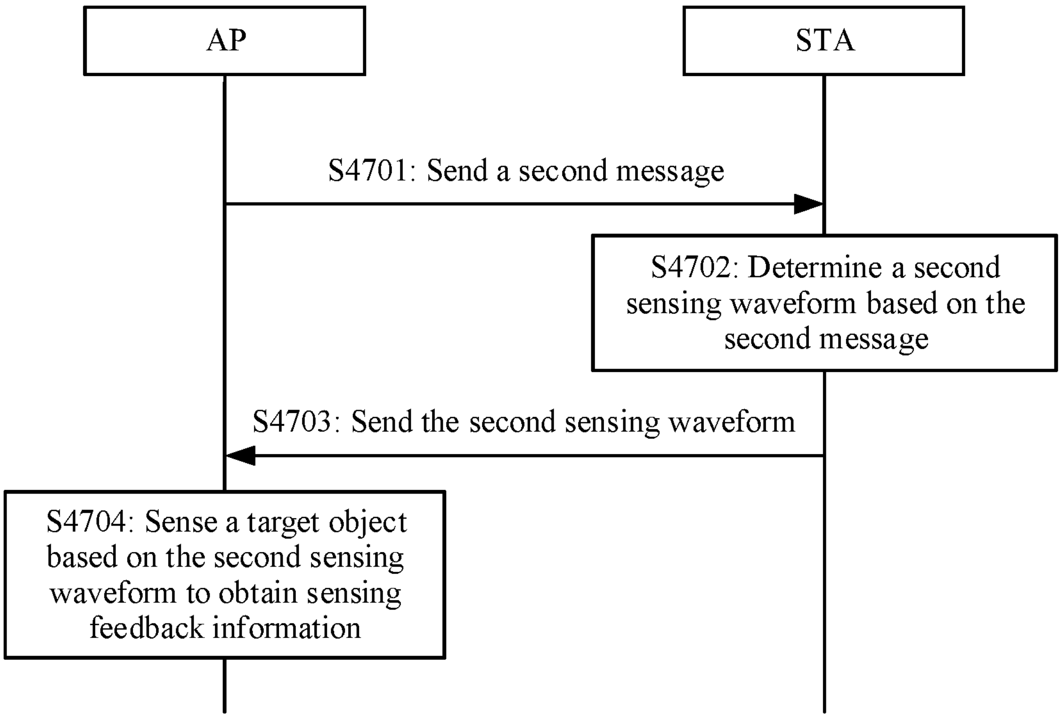
AP
STA
S4701: Send a second message
S4702: Determine a second sensing waveform based on the second message
S4703: Send the second sensing waveform
S4704: Sense a target object based on the second sensing waveform to obtain sensing feedback information

FIG. 47

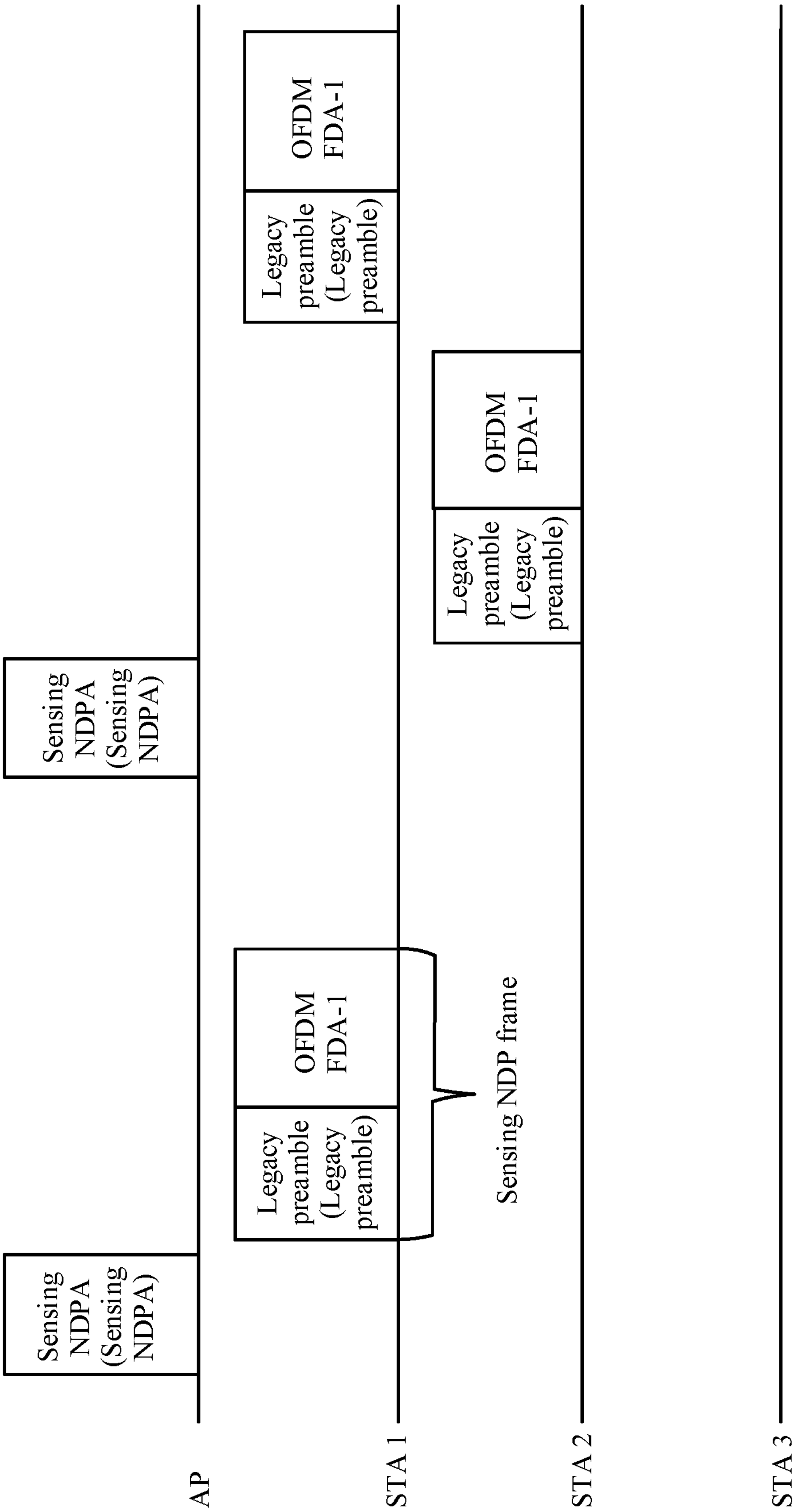
AP
STA 1
STA 2
STA 3
Sensing NDPA (Sensing NDPA)
Legacy preamble (Legacy preamble)
OFDM FDA-1
Sensing NDP frame
Sensing NDPA (Sensing NDPA)
Legacy preamble (Legacy preamble)
OFDM FDA-1
Legacy preamble (Legacy preamble)
OFDM FDA-1

FIG. 48

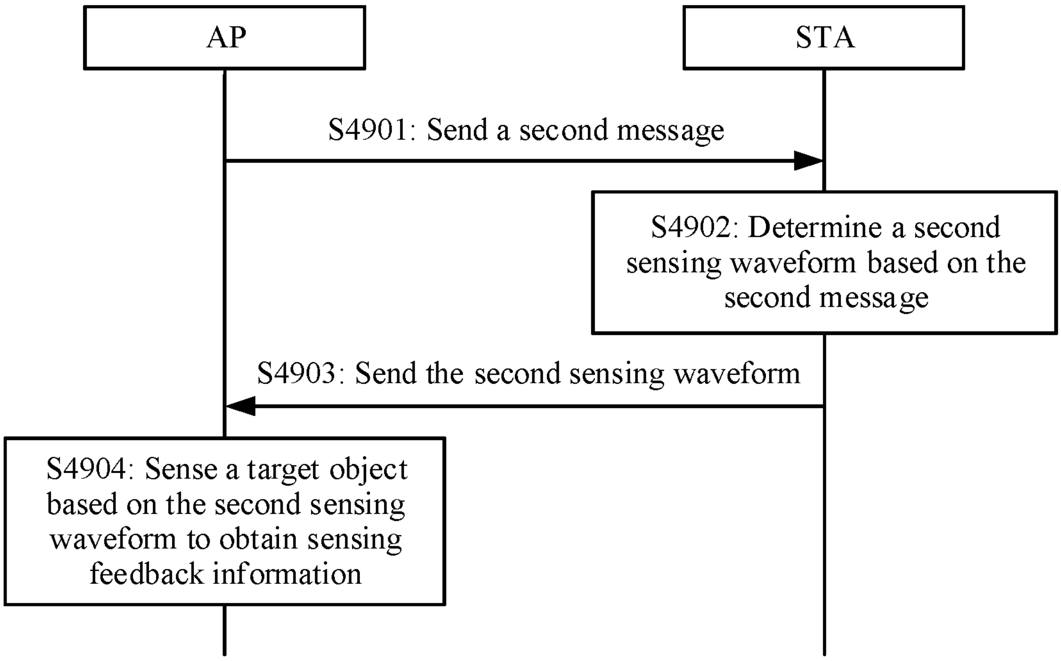
AP
STA
S4901: Send a second message
S4902: Determine a second sensing waveform based on the second message
S4903: Send the second sensing waveform
S4904: Sense a target object based on the second sensing waveform to obtain sensing feedback information

FIG. 49

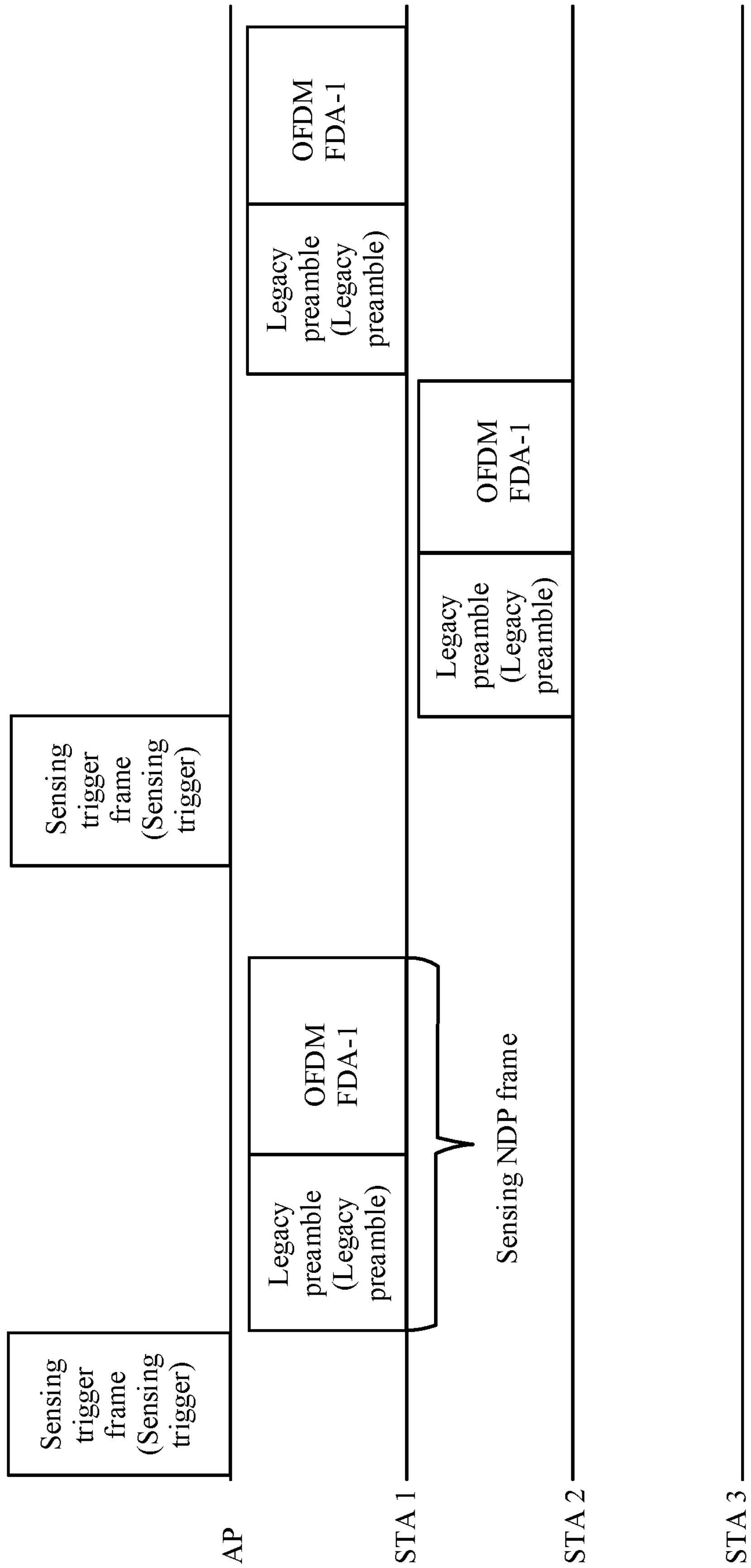
AP
STA 1
STA 2
STA 3
Sensing trigger frame (Sensing trigger)
Legacy preamble (Legacy preamble)
OFDM FDA-1
Sensing NDP frame
Sensing trigger frame (Sensing trigger)
Legacy preamble (Legacy preamble)
OFDM FDA-1
Legacy preamble (Legacy preamble)
OFDM FDA-1

FIG. 50

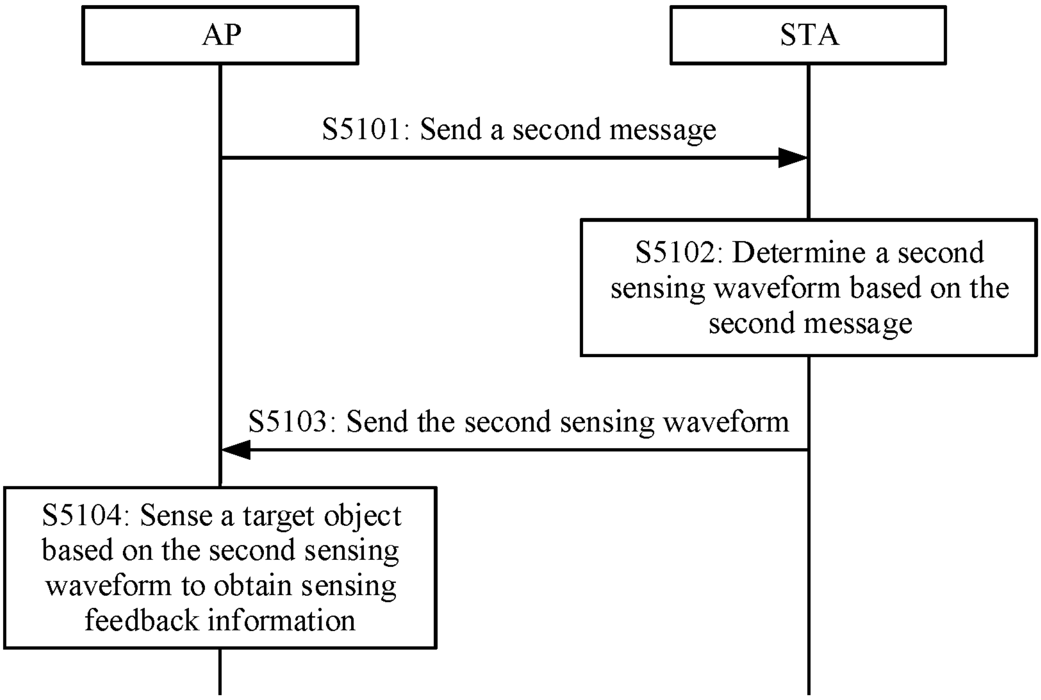
AP
STA
S5101: Send a second message
S5102: Determine a second sensing waveform based on the second message
S5103: Send the second sensing waveform
S5104: Sense a target object based on the second sensing waveform to obtain sensing feedback information

FIG. 51

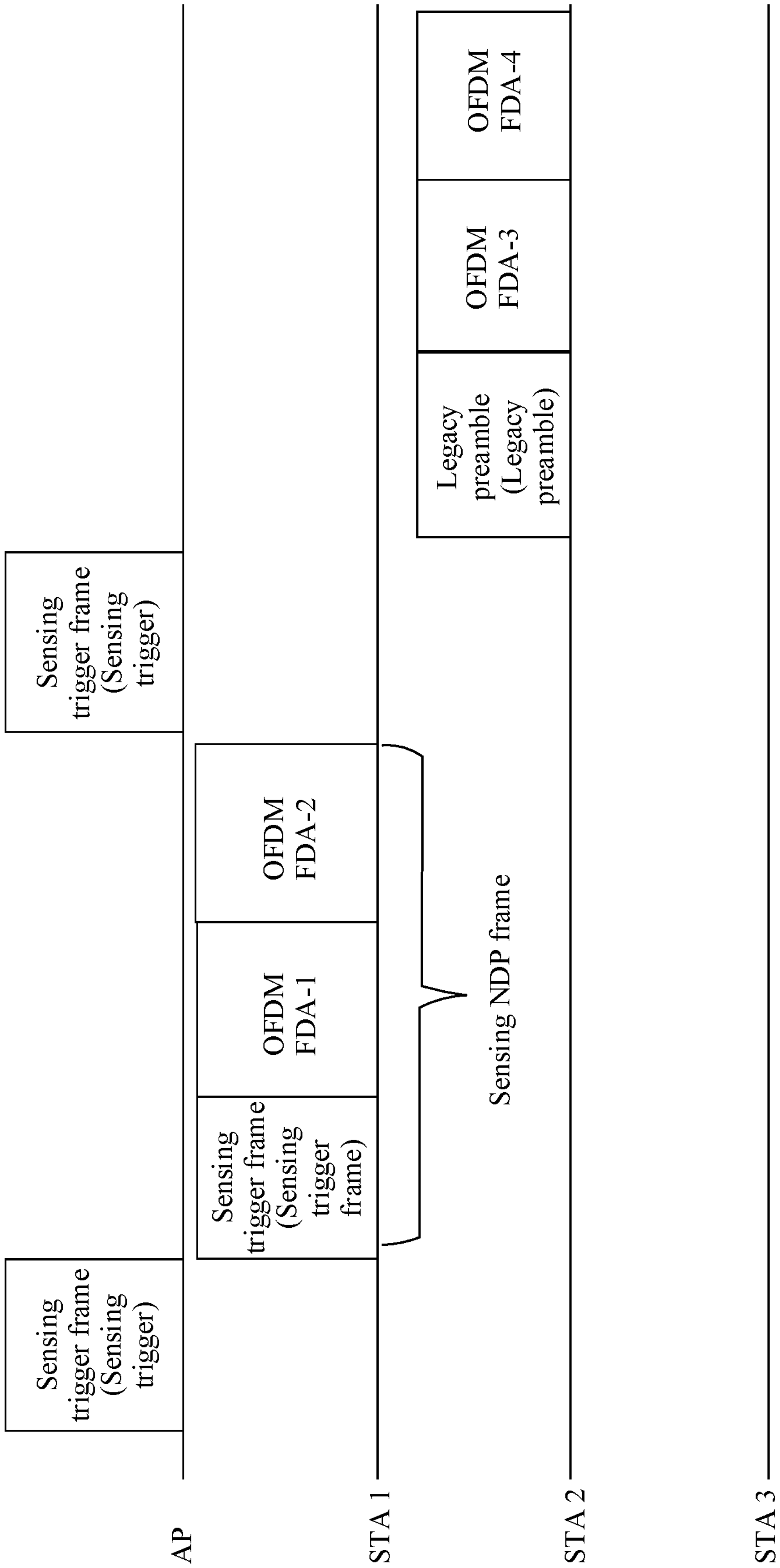
AP
STA 1
STA 2
STA 3
Sensing trigger frame (Sensing trigger)
Sensing trigger frame (Sensing trigger frame)
OFDM FDA-1
OFDM FDA-2
Sensing NDP frame
Sensing trigger frame (Sensing trigger)
Legacy preamble (Legacy preamble)
OFDM FDA-3
OFDM FDA-4

FIG. 52

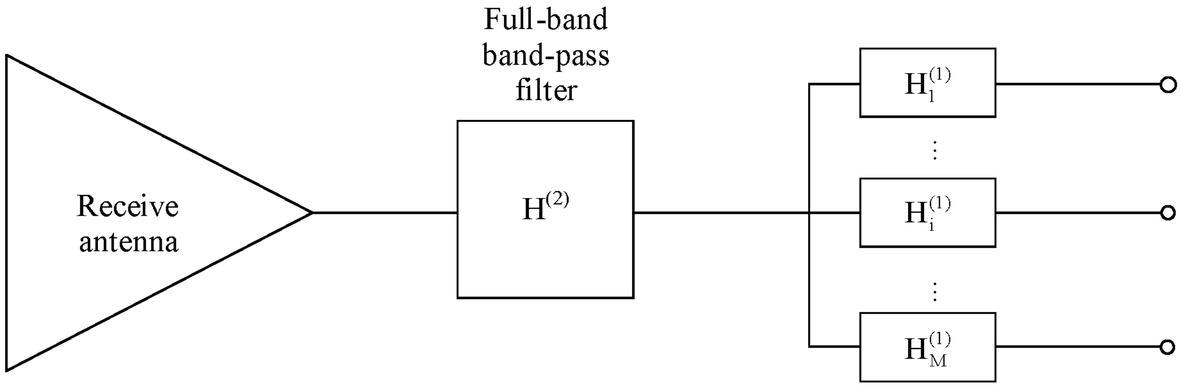
Full-band
band-pass
filter
Receive
antenna
$H^{(2)}$
$H_1^{(1)}$
$H_i^{(1)}$
$H_M^{(1)}$

FIG. 53

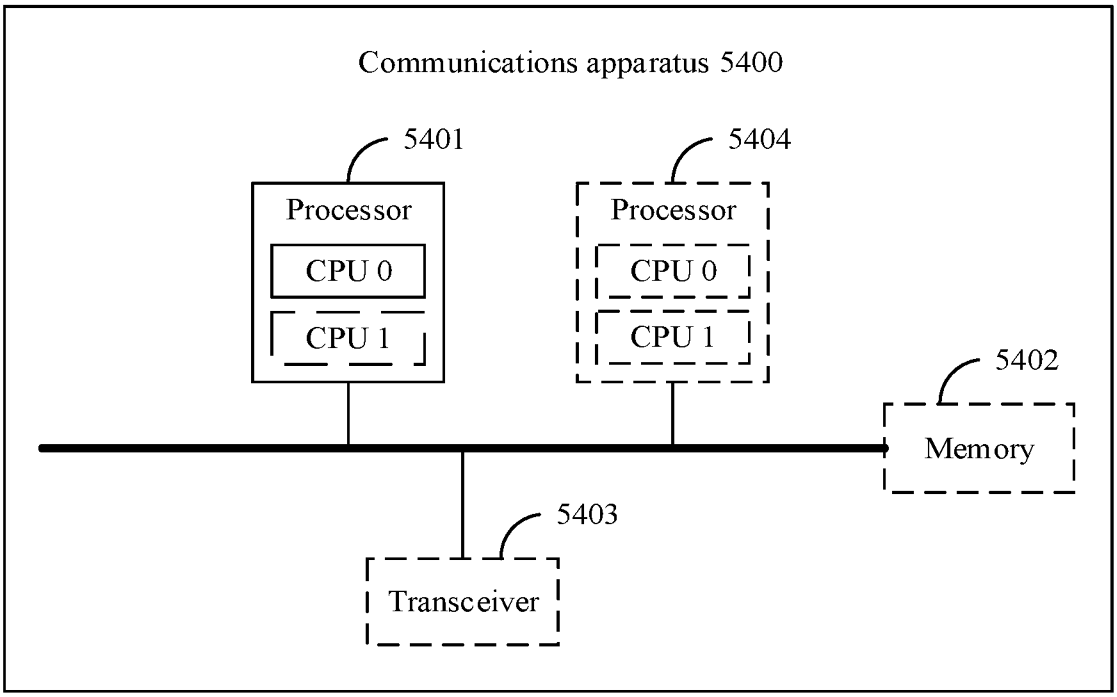
Communications apparatus 5400
5401
Processor
CPU 0
CPU 1
5404
Processor
CPU 0
CPU 1
5402
Memory
5403
Transceiver

FIG. 54

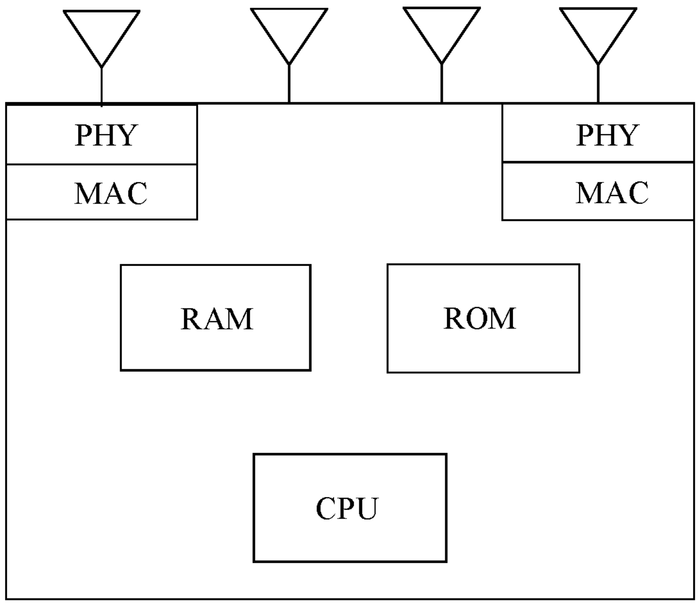
PHY
MAC
PHY
MAC
RAM
ROM
CPU

FIG. 55

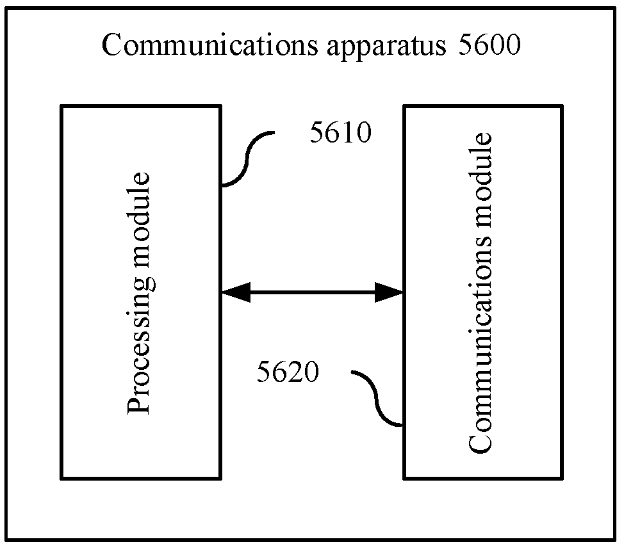
Communications apparatus 5600
5610
Processing module
Communications module
5620

FIG. 56

## INTERNATIONAL SEARCH REPORT

International application No.
**PCT/CN2022/071029**

**A. CLASSIFICATION OF SUBJECT MATTER**

H04W 16/28(2009.01)i

According to International Patent Classification (IPC) or to both national classification and IPC

**B. FIELDS SEARCHED**

Minimum documentation searched (classification system followed by classification symbols)

H04W H04B H04W

Documentation searched other than minimum documentation to the extent that such documents are included in the fields searched

Electronic data base consulted during the international search (name of data base and, where practicable, search terms used)

CNKI; CNPAT; WPI; EPODOC; 3GPP; IETF; IEEE; ETSI; ISI WEB OF SCIENCE: MIMO, MU, 多, 天线, 载波, 频, 差, NDP, NDPA, 感知, 感测, 侦测, 检测, 监测, 波形, 目标, 定位, 车, 干扰, 运动, 移动, 雷达, 频控阵雷达, 相控阵雷达, AP, WLAN, FDA, VHT, 无线局域网, 无线LAN, "802.11ac", antennas, carrier, multi+, sensing, detect, monitor, mobil?????, move, motion, destina+, terget, Obstacle , Interference, frequency, differe+, location, position

**C. DOCUMENTS CONSIDERED TO BE RELEVANT**

| Category* | Citation of document, with indication, where appropriate, of the relevant passages | Relevant to claim No. |
|---|---|---|
| A | US 2012184222 A1 (SEOK, Yongho) 19 July 2012 (2012-07-19)<br>claims 13-24, description paragraphs 31-74 | 1-30 |
| A | CN 106231670 A (PEKING UNIVERSITY) 14 December 2016 (2016-12-14)<br>claim 1, description paragraphs 36-75, figure 1 | 1-30 |
| A | JP 2013046156 A (TOYOTA CENTRAL RES. AND DEV.) 04 March 2013 (2013-03-04)<br>entire document | 1-30 |
| A | CN 109714092 A (HUAWEI TECHNOLOGIES CO., LTD.) 03 May 2019 (2019-05-03)<br>entire document | 1-30 |
| A | CN 107211452 A (INTERDIGITAL PATENT HOLDINGS, INC.) 26 September 2017 (2017-09-26)<br>entire document | 1-30 |
| A | CN 111133818 A (QUALCOMM INC.) 08 May 2020 (2020-05-08)<br>entire document | 1-30 |

☑ Further documents are listed in the continuation of Box C. ☑ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **14 March 2022** | **29 March 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
|---|
| **PCT/CN2022/071029** |

**C. DOCUMENTS CONSIDERED TO BE RELEVANT**

| Category* | Citation of document, with indication, where appropriate, of the relevant passages | Relevant to claim No. |
|---|---|---|
| A | CN 110875764 A (AVAGO TECHNOLOGIES INTERNATIONAL SALES PTE. LIMITED) 10 March 2020 (2020-03-10)<br>entire document | 1-30 |
| A | WO 2020180050 A1 (LG ELECTRONICS INC.) 10 September 2020 (2020-09-10)<br>entire document | 1-30 |
| A | CN 104081818 A (NIPPON TELEGRAPH AND TELEPHONE CORPORATION) 01 October 2014 (2014-10-01)<br>entire document | 1-30 |
| A | US 2017163446 A1 (APPLE INC.) 08 June 2017 (2017-06-08)<br>entire document | 1-30 |
| A | CN 110291724 A (QUALCOMM INC.) 27 September 2019 (2019-09-27)<br>entire document | 1-30 |
| A | HSIN, Jesse shih-chieh et al. "Multi-RAT multi-connectivity active steering antenna technology for IoT, Wi-Fi, LTE, and 5G"<br>*IEEE Xplore,* 30 March 2020 (2020-03-30),<br>pp. 87-90 | 1-30 |

Form PCT/ISA/210 (second sheet) (January 2015)

**INTERNATIONAL SEARCH REPORT**
**Information on patent family members**

International application No.
**PCT/CN2022/071029**

| Patent document cited in search report | | | Publication date (day/month/year) | Patent family member(s) | | | Publication date (day/month/year) |
|---|---|---|---|---|---|---|---|
| US | 2012184222 | A1 | 19 July 2012 | EP | 2477432 | A1 | 18 July 2012 |
| | | | | KR | 20120083289 | A | 25 July 2012 |
| | | | | WO | 2011030960 | A1 | 17 March 2011 |
| | | | | CA | 2773663 | A1 | 17 March 2011 |
| CN | 106231670 | A | 14 December 2016 | None | | | |
| JP | 2013046156 | A | 04 March 2013 | None | | | |
| CN | 109714092 | A | 03 May 2019 | None | | | |
| CN | 107211452 | A | 26 September 2017 | US | 2018007712 | A1 | 04 January 2018 |
| | | | | EP | 3243354 | A1 | 15 November 2017 |
| | | | | WO | 2016112287 | A1 | 14 July 2016 |
| | | | | EP | 3592094 | A1 | 08 January 2020 |
| | | | | US | 2019289632 | A1 | 19 September 2019 |
| CN | 111133818 | A | 08 May 2020 | US | 2021006980 | A1 | 07 January 2021 |
| | | | | WO | 2019028265 | A1 | 07 February 2019 |
| | | | | CN | 113193887 | A | 30 July 2021 |
| | | | | US | 2019045366 | A1 | 07 February 2019 |
| CN | 110875764 | A | 10 March 2020 | US | 2020077351 | A1 | 05 March 2020 |
| | | | | EP | 3618516 | A1 | 04 March 2020 |
| WO | 2020180050 | A1 | 10 September 2020 | None | | | |
| CN | 104081818 | A | 01 October 2014 | EP | 3547565 | A1 | 02 October 2019 |
| | | | | US | 2020076482 | A1 | 05 March 2020 |
| | | | | CN | 109379113 | A | 22 February 2019 |
| | | | | US | 2018138952 | A1 | 17 May 2018 |
| | | | | EP | 2800416 | A1 | 05 November 2014 |
| | | | | WO | 2013118675 | A1 | 15 August 2013 |
| | | | | US | 2020373974 | A1 | 26 November 2020 |
| | | | | US | 2019081666 | A1 | 14 March 2019 |
| | | | | EP | 3780414 | A1 | 17 February 2021 |
| | | | | US | 2014376535 | A1 | 25 December 2014 |
| | | | | US | 2021258047 | A1 | 19 August 2021 |
| | | | | JP | WO2013118675 | A1 | 11 May 2015 |
| US | 2017163446 | A1 | 08 June 2017 | None | | | |
| CN | 110291724 | A | 27 September 2019 | US | 2021226671 | A1 | 22 July 2021 |
| | | | | SG | 11201905921 P | A | 27 August 2019 |
| | | | | EP | 3583702 | A1 | 25 December 2019 |
| | | | | KR | 20190116308 | A | 14 October 2019 |
| | | | | CA | 3049131 | A1 | 23 August 2018 |
| | | | | KR | 20210031797 | A | 22 March 2021 |
| | | | | BR | 112019016747 | A2 | 07 April 2020 |
| | | | | WO | 2018151888 | A1 | 23 August 2018 |
| | | | | US | 2018234135 | A1 | 16 August 2018 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202110024615